(19) **Europäisches Patentamt / European Patent Office / Office européen des brevets**

(11) **EP 4 290 922 A1**

(12) # EUROPEAN PATENT APPLICATION
published in accordance with Art. 153(4) EPC

(43) Date of publication:
**13.12.2023 Bulletin 2023/50**

(21) Application number: **22750026.1**

(22) Date of filing: **03.02.2022**

(51) International Patent Classification (IPC):
**H04W 28/04** *(2009.01)* **H04W 28/06** *(2009.01)*
**H04W 76/15** *(2018.01)* **H04L 69/14** *(2022.01)*
**H04W 74/08** *(2009.01)* **H04W 84/12** *(2009.01)*
**H04W 72/04** *(2023.01)*

(52) Cooperative Patent Classification (CPC):
**H04L 69/14; H04W 28/04; H04W 28/06;**
**H04W 72/04; H04W 74/08; H04W 76/15;**
**H04W 84/12**

(86) International application number:
**PCT/KR2022/001720**

(87) International publication number:
**WO 2022/169277 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 02.02.2021 KR 20210015032
03.02.2021 KR 20210015114
03.02.2021 KR 20210015578
12.04.2021 KR 20210047460

(71) Applicant: **Wilus Institute of Standards and Technology Inc.**
**Seongnam-si, Gyeonggi-do 13595 (KR)**

(72) Inventors:
- **KO, Geonjung**
  **Seongnam-si, Gyeonggi-do 13595 (KR)**
- **SON, Juhyung**
  **Seongnam-si, Gyeonggi-do 13595 (KR)**
- **KIM, Sanghyun**
  **Seongnam-si, Gyeonggi-do 13595 (KR)**
- **HONG, Hanseul**
  **Seongnam-si, Gyeonggi-do 13595 (KR)**
- **KWAK, Jinsam**
  **Seongnam-si, Gyeonggi-do 13595 (KR)**

(74) Representative: **Schmitt-Nilson Schraud Waibel Wohlfrom**
**Patentanwälte Partnerschaft mbB**
**Pelkovenstraße 143**
**80992 München (DE)**

(54) **WIRELESS COMMUNICATION METHOD USING MULTILINK, AND WIRELESS COMMUNICATION TERMINAL USING SAME**

(57) Disclosed is a method for a station (STA) to transmit a frame in a wireless communication system. In the present invention, the STA receives a management frame including a first operation element and a second operation element from an access point (AP), and transmits a PPDU to the AP on the basis of the first operation element or the second operation element. Here, the first operation element may indicate a basic service set (BSS) operation channel for a legacy STA, and the second operation element may indicate a BSS operation channel for the STA that is not the legacy STA.

FIG. 39

```
            START
              │
              ▼
┌─────────────────────────────────────┐
│ Receive management frame including   │
│ first operation element and second   │──── S39010
│ operation element from access        │
│ point (AP)                           │
└─────────────────────────────────────┘
              │
              ▼
┌─────────────────────────────────────┐
│ Transmit PPDU to AP, based on first  │
│ operation element or second          │──── S39020
│ operation element                    │
└─────────────────────────────────────┘
              │
              ▼
             END
```

EP 4 290 922 A1

**Description**

Technical Field

The present disclosure relates to a wireless communication method using a multi-link and a wireless communication terminal using same.

Background Art

In recent years, with supply expansion of mobile apparatuses, a wireless LAN technology that can provide a rapid wireless Internet service to the mobile apparatuses has been significantly spotlighted. The wireless LAN technology allows mobile apparatuses including a smart phone, a smart pad, a laptop computer, a portable multimedia player, an embedded apparatus, and the like to wirelessly access the Internet in home or a company or a specific service providing area based on a wireless communication technology in a short range.

Institute of Electrical and Electronics Engineers (IEEE) 802.11 has commercialized or developed various technological standards since an initial wireless LAN technology is supported using frequencies of 2.4 GHz. First, the IEEE 802.11b supports a communication speed of a maximum of 11 Mbps while using frequencies of a 2.4 GHz band. IEEE 802.11a which is commercialized after the IEEE 802.11b uses frequencies of not the 2.4 GHz band but a 5 GHz band to reduce an influence by interference as compared with the frequencies of the 2.4 GHz band which are significantly congested and improves the communication speed up to a maximum of 54 Mbps by using an OFDM technology. However, the IEEE 802.11a has a disadvantage in that a communication distance is shorter than the IEEE 802.11b. In addition, IEEE 802.11g uses the frequencies of the 2.4 GHz band similarly to the IEEE 802.11b to implement the communication speed of a maximum of 54 Mbps and satisfies backward compatibility to significantly come into the spotlight and further, is superior to the IEEE 802.11a in terms of the communication distance.

Moreover, as a technology standard established to overcome a limitation of the communication speed which is pointed out as a weak point in a wireless LAN, IEEE 802.11n has been provided. The IEEE 802.11n aims at increasing the speed and reliability of a network and extending an operating distance of a wireless network. In more detail, the IEEE 802.11n supports a high throughput (HT) in which a data processing speed is a maximum of 540 Mbps or more and further, is based on a multiple inputs and multiple outputs (MIMO) technology in which multiple antennas are used at both sides of a transmitting unit and a receiving unit in order to minimize a transmission error and optimize a data speed. Further, the standard can use a coding scheme that transmits multiple copies which overlap with each other in order to increase data reliability.

As the supply of the wireless LAN is activated and further, applications using the wireless LAN are diversified, the need for new wireless LAN systems for supporting a higher throughput (very high throughput (VHT)) than the data processing speed supported by the IEEE 802.11n has come into the spotlight. Among them, IEEE 802.11ac supports a wide bandwidth (80 to 160 MHz) in the 5 GHz frequencies. The IEEE 802.11ac standard is defined only in the 5 GHz band, but initial 11ac chipsets will support even operations in the 2.4 GHz band for the backward compatibility with the existing 2.4 GHz band products. Theoretically, according to the standard, wireless LAN speeds of multiple stations are enabled up to a minimum of 1 Gbps and a maximum single link speed is enabled up to a minimum of 500 Mbps. This is achieved by extending concepts of a wireless interface accepted by 802.11n, such as a wider wireless frequency bandwidth (a maximum of 160 MHz), more MIMO spatial streams (a maximum of 8), multi-user MIMO, and high-density modulation (a maximum of 256 QAM). Further, as a scheme that transmits data by using a 60 GHz band instead of the existing 2.4 GHz/5 GHz, IEEE 802.11ad has been provided. The IEEE 802.11ad is a transmission standard that provides a speed of a maximum of 7 Gbps by using a beamforming technology and is suitable for high bit rate moving picture streaming such as massive data or non-compression HD video. However, since it is difficult for the 60 GHz frequency band to pass through an obstacle, it is disadvantageous in that the 60 GHz frequency band can be used only among devices in a short-distance space.

As a wireless LAN standard after 802.11ac and 802.11ad, the IEEE 802.11ax (high efficiency WLAN, HEW) standard for providing a high-efficiency and high-performance wireless LAN communication technology in a high-density environment, in which APs and terminals are concentrated, is in the development completion stage. In an 802.11ax-based wireless LAN environment, communication with high frequency efficiency should be provided indoors/outdoors in the presence of high-density stations and access points (APs), and various technologies have been developed to implement the same.

In order to support new multimedia applications, such as high-definition video and real-time games, the development of a new wireless LAN standard has begun to increase a maximum transmission rate. In IEEE 802.1 1be (extremely high throughput, EHT), which is a 7th generation wireless LAN standard, development of standards is underway aiming at supporting a transmission rate of up to 30Gbps via a wider bandwidth, an increased spatial stream, multi-AP cooperation, and the like in a 2.4/5/6 GHz band. IEEE 802.1 1be has proposed technologies including a 30 MHz bandwidth, a multi-link operation, a multi-access point (multi-AP) operation, and a retransmission operation (hybrid automatic repeat request HARQ), etc.

A multi-link operation may be performed in various types according to the operation scheme and implementation method thereof. However, this operation may face a problem that has not occurred in a conventional IEEE 802.11-based wireless LAN communication operation, and thus a definition for a detailed operation method of a multi-link operation is needed.

Meanwhile, this background section is written for improving understanding of the background of the disclosure, and may include contents other than a prior art already known to a person skilled in the art.

Disclosure of Invention

Technical Problem

An aspect of the present disclosure is to provide a method for configuring a basic service set (BSS) operating channel in a multi-link operation.

In addition, an aspect of the present disclosure is to provide a method for configuring a different BSS operating channel for a legacy terminal.

In addition, an aspect of the present disclosure is to provide a method for indicating an unavailable subchannel included in a BSS operating channel.

In addition, an aspect of the present disclosure is to provide a method for, when transmitting response frames to terminals including a legacy terminal, determining the size of response information for each terminal.

The technical tasks to be achieved by the present specification is not limited to those mentioned above, and other technical tasks that are not mentioned above may be clearly understood to a person having common knowledge in the technical field to which the present disclosure belongs based on the description provided below.

Solution to Problem

A station (STA) of a wireless communication system includes: a transceiver; and a processor configured to control the transceiver, wherein the processor is configured to: receive a management frame including a first operation element and a second operation element from an access point (AP), the first operation element indicating a basic service set (BSS) operating channel for a legacy STA, the second operation element indicating a BSS operating channel for the STA that is not the legacy STA; and transmit a PPDU to the AP, based on the first operation element or the second operation element, and when the BSS operating channel for the STA includes at least one unavailable channel and/or exceeds a maximum bandwidth supported by the legacy STA, the BSS operating channel for the legacy STA indicated by the first operation element is different from the BSS operating channel for the STA indicated by the second operation element.

In addition, in the present disclosure, when the BSS operating channel for the STA includes the at least one unavailable channel and/or exceeds the maximum bandwidth supported by the legacy STA, the BSS operating channel for the legacy STA indicated by the first operation element is continuous channels including a primary channel in the BSS operating channel for the STA indicated by the second operation element.

In addition, in the present disclosure, when the BSS operating channel for the STA includes the at least one unavailable channel and/or exceeds the maximum bandwidth supported by the legacy STA, the BSS operating channel for the legacy STA indicated by the first operation element is configured within the maximum bandwidth and except for the at least one unavailable channel in the BSS operating channel for the STA indicated by the second operation element.

In addition, in the present disclosure, the first operation element is an operation element for a high efficiency (HE) STA, and the second operation element is an operation element for an extremely high throughput (EHT) STA.

In addition, in the present disclosure, the second operation element includes a disabled subchannel bitmap present subfield indicating whether a disabled subchannel bitmap subfield indicating the at least one unavailable channel of the BSS operating channel for the STA is included.

In addition, in the present disclosure, each bit of the disabled subchannel bitmap subfield indicates whether a corresponding unavailable channel is included in the BSS operating channel for the STA.

In addition, in the present disclosure, when the at least one unavailable channel is not included in the BSS operating channel for the STA, a value of the disabled subchannel bitmap present subfield is configured as "0" that is a value indicating that the disabled subchannel bitmap subfield is not included.

In addition, in the present disclosure, the processor is configured to receive, from the AP, a frame including a particular field indicating whether an operational parameter is changed, and a value of the particular field is increased when the operational parameter is changed.

In addition, in the present disclosure, the value of the particular field is increased when whether the disabled subchannel bitmap subfield is included is changed, or when whether the at least one unavailable channel is included is changed.

In addition, in the present disclosure, the processor is configured to: receive a trigger frame indicating transmission of a PPDU to one or more STAs; and receive a multi-STA BlockAck frame as a response for the PPDU, and when at least one STA transmitting the PPDU in response to the trigger frame among the one or more STAs includes the legacy STA, a size of ack information for each of the at least one STA, included in the multi-STA BlockAck frame, is limited to a particular size or smaller.

In addition, in the present disclosure, when the at least one STA transmitting the PPDU in response to the trigger frame among the one or more STAs includes the legacy STA, and the multi-STA BlockAck frame is transmitted by the AP through a resource unit (RU) individually allocated to the STA, the size of the ack information is not limited to the particular size or smaller.

In addition, the present disclosure provides a method including: receiving a management frame including a first operation element and a second operation element from an access point (AP), the first operation element indicating a basic service set (BSS) operating channel for a legacy STA, the second operation element indicating a BSS operating channel for the STA that is not the legacy STA; and transmitting a PPDU to the AP, based on the first operation element or the second operation element, wherein, when the BSS operating channel for the STA includes at least one unavailable channel and/or exceeds a maximum bandwidth supported by the legacy STA, the BSS operating channel for the legacy STA indicated by the first operation element is different from the BSS operating channel for the STA indicated by the second operation element.

Advantageous Effects of Invention

According to an embodiment of the present disclosure, the present disclosure provides a method for configuring a different BSS operating channel for a legacy terminal, whereby a BSS operating channel can be efficiently configured for each terminal.

In addition, the present disclosure indicates an unavailable subchannel included in a BSS operating channel, whereby terminals can efficiently transmit uplink frames.

In addition, the present disclosure provides a method for, when transmitting response frames to terminals including a legacy terminal, determining the size of response information for each terminal, thereby enabling transmission of response information supportable by each terminal.

The effects obtainable in the present invention are not limited to the above-mentioned effects, and other effects that are not mentioned may be clearly understood by those skilled in the art to which the present invention belongs, from descriptions below.

Brief Description of Drawings

FIG. 1 illustrates a wireless LAN system according to an embodiment of the present invention.

FIG. 2 illustrates a wireless LAN system according to another embodiment of the present invention.

FIG. 3 illustrates a configuration of a station according to an embodiment of the present invention.

FIG. 4 illustrates a configuration of an access point according to an embodiment of the present invention.

FIG. 5 schematically illustrates a process in which a STA and an AP set a link.

FIG. 6 illustrates a carrier sense multiple access (CSMA)/collision avoidance (CA) method used in wireless LAN communication.

FIG. 7 illustrates an example of a format of a PLCP Protocol data unit (PPDU) for each of various standard generations;

FIG. 8 illustrates an example of various extremely high throughput (EHT) physical protocol data unit (PPDU) formats and a method for indicating the same according to an embodiment of the present invention;

FIG. 9 illustrates a multi-link device according to an embodiment of the present invention

FIG. 10 illustrates an example of a TID-to-link mapping method according to an embodiment of the present invention.

FIG. 11 illustrates an example of a multi-link NAV setup operation according to an embodiment of the present invention.

FIG. 12 illustrates another example of a multi-link NAV setup operation according to an embodiment of the present invention.

FIG. 13 illustrates an example of BSS classification and an operation based thereon according to an embodiment of the present invention.

FIG. 14 illustrates a wireless LAN function according to an embodiment of the present invention.

FIG. 15 illustrates an uplink (UL) multi-user (MU) operation according to an embodiment of the present invention.

FIG. 16 illustrates a trigger frame format according to an embodiment of the present invention.

FIG. 17 illustrates a method for soliciting a trigger-based (TB) PPDU format according to an embodiment of the present invention.

FIG. 18 illustrates a UL MU operation according to an embodiment of the present invention.

FIG. 19 illustrate a format of a block ACK frame according to an embodiment of the present disclosure;

FIG. 20 illustrates a fragment number subfield and a block ACK bitmap subfield according to an embodiment of the present disclosure;

FIG. 21 illustrates a multi-STA block ACK frame being transmitted as a response for a HE TB PPDU according to an embodiment of the present disclosure;

FIG. 22 illustrates a UL MU operation according to an embodiment of the present disclosure;

FIG. 23 illustrates a UL MU operation and a format of a multi-STA block ACK frame according to an embodiment of the present disclosure;

FIG. 24 illustrates a UL MU operation and a format of a multi-STA block ACK frame according to another embodiment of the present disclosure;

FIG. 25 illustrates transmitting a management frame according to an embodiment of the present disclosure;

FIG. 26 illustrates a method of transmitting a management frame when TID-to-link mapping is applied according to an embodiment of the present disclosure;

FIG. 27 illustrates a method of transmitting a management frame when TID-to-link mapping is applied according to another embodiment of the present disclosure;

FIG. 28 is diagrams illustrating a management frame and channel width signaling according to an embodiment of the present disclosure;

FIG. 29 is a diagram illustrating a configuration of the width of a BSS operating channel according to an embodiment of the present disclosure;

FIG. 30 is a diagram illustrating a configuration of the width of a BSS operating channel according to another embodiment of the present disclosure;

FIG. 31 is diagrams illustrating channelization and a configuration of the width of a BSS operating channel according to an embodiment of the present disclosure;

FIG. 32 is diagrams illustrating an EHT operation element format according to an embodiment of the present disclosure;

FIG. 33 is a diagram illustrating an example of transmission considering a disabled subchannel according to an embodiment of the present disclosure;

FIG. 34 is a diagram illustrating an example of signaling of a disabled subchannel according to an embodiment of the present disclosure;

FIG. 35 is a diagram illustrating signaling of a disabled subchannel and a critical update according to an embodiment of the present disclosure;

FIG. 36 is a diagram illustrating signaling of a disabled subchannel and a critical update according to another embodiment of the present disclosure;

FIG. 37 is a diagram illustrating an EHT operation element format according to an embodiment of the present disclosure;

FIG. 38 is diagrams illustrating an EHT operation element format according to another embodiment of the present disclosure; and

FIG. 39 is a flowchart illustrating an example of an operation of a terminal according to an embodiment of the present disclosure.

Best Mode for Carrying out the Invention

Terms used in the specification adopt general terms which are currently widely used by considering functions in the present invention, but the terms may be changed depending on an intention of those skilled in the art, customs, and emergence of new technology. Further, in a specific case, there is a term arbitrarily selected by an applicant and in this case, a meaning thereof will be described in a corresponding description part of the invention. Accordingly, it should be revealed that a term used in the specification should be analyzed based on not just a name of the term but a substantial meaning of the term and contents throughout the specification.

Throughout this specification and the claims that follow, when it is described that an element is "coupled" to another element, the element may be "directly coupled" to the other element or "electrically coupled" to the other element through a third element. Further, unless explicitly described to the contrary, the word "comprise" and variations such as "comprises" or "comprising", will be understood to imply the inclusion of stated elements but not the exclusion of any other elements. Moreover, limitations such as "or more" or "or less" based on a specific threshold may be appropriately substituted with "more than" or "less than", respectively. Hereinafter, in the present invention, a field and a subfield may be interchangeably used.

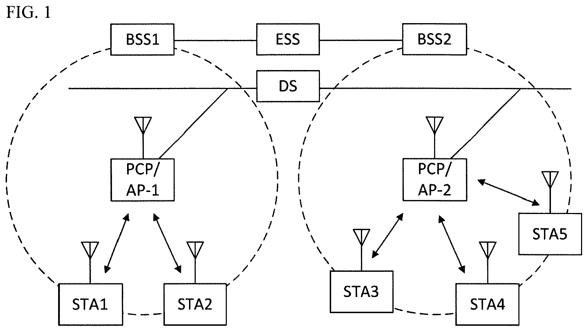

FIG. 1 illustrates a wireless LAN system according to an embodiment of the present invention.

FIG. 1 is a diagram illustrating a wireless LAN system according to an embodiment of the present invention. The wireless LAN system includes one or more basic service sets (BSS) and the BSS represents a set of apparatuses which are successfully synchronized with each other to communicate with each other. In general, the BSS may be classified into an infrastructure BSS and an independent BSS (IBSS) and FIG. 1 illustrates the infrastructure BSS between them.

As illustrated in FIG. 1, the infrastructure BSS (BSS1 and BSS2) includes one or more stations STA1, STA2, STA3, STA4, and STA5, access points AP-1 and AP-2 which are stations providing a distribution service, and a distribution system (DS) connecting the multiple access points AP-1 and AP-2.

The station (STA) is a predetermined device including medium access control (MAC) following a regulation of an IEEE 802.11 standard and a physical layer interface for a wireless medium, and includes both a non-access point (non-AP) station and an access point (AP) in a broad sense. Further, in the present specification, a term 'terminal' may be used to refer to a non-AP STA, or an AP, or to both terms. A station for wireless communication includes a processor and a communication unit and according to the embodiment, may further include a user interface unit and a display unit. The processor may generate a frame to be transmitted through a wireless network or process a frame received through the wireless network and besides, perform various processing for controlling the station. In addition, the communication unit is functionally connected with the processor and transmits and receives frames through the wireless network for the station. According to the present invention, a terminal may be used as a term which includes user equipment (UE).

The access point (AP) is an entity that provides access to the distribution system (DS) via wireless medium for the station associated therewith. In the infrastructure BSS, communication among non-AP stations is, in principle, performed via the AP, but when a direct link is configured, direct communication is enabled even among the non-AP stations. Meanwhile, in the present invention, the AP is used as a concept including a personal BSS coordination point (PCP) and may include concepts including a centralized controller, a base station (BS), a node-B, a base transceiver system (BTS), and a site controller in a broad sense. In the present invention, an AP may also be referred to as a base wireless communication terminal. The base wireless communication terminal may be used as a term which includes an AP, a base station, an eNB (i.e. eNodeB) and a transmission point (TP) in a broad sense. In addition, the base wireless communication terminal may include various types of wireless communication terminals that allocate medium resources and perform scheduling in communication with a plurality of wireless communication terminals.

A plurality of infrastructure BSSs may be connected with each other through the distribution system (DS). In this case, a plurality of BSSs connected through the distribution system is referred to as an extended service set (ESS).

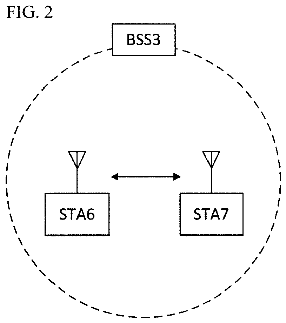

FIG. 2 illustrates an independent BSS which is a wireless LAN system according to another embodiment of the present invention. In the embodiment of FIG. 2, duplicative description of parts, which are the same as or correspond to the embodiment of FIG. 1, will be omitted.

Since a BSS3 illustrated in FIG. 2 is the independent BSS and does not include the AP, all stations STA6 and STA7 are not connected with the AP. The independent BSS is not permitted to access the distribution system and forms a self-contained network. In the independent BSS, the respective stations STA6 and STA7 may be directly connected with each other.

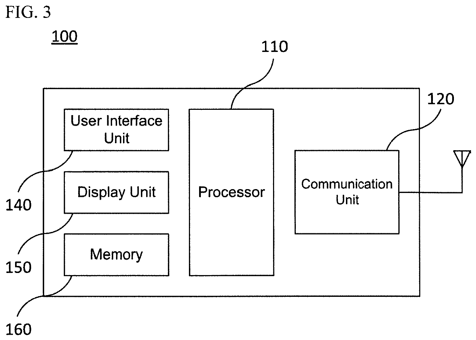

FIG. 3 is a block diagram illustrating a configuration of a station 100 according to an embodiment of the present invention. As illustrated in FIG. 3, the station 100 according to the embodiment of the present invention may include a processor 110, a communication unit 120, a user interface unit 140, a display unit 150, and a memory 160.

First, the communication unit 120 transmits and receives a wireless signal such as a wireless LAN packet, or the like and may be embedded in the station 100 or provided as an exterior. According to the embodiment, the communication unit 120 may include at least one communication module using different frequency bands. For example, the communication unit 120 may include communication modules having different frequency bands such as 2.4 GHz, 5 GHz, 6GHz and 60 GHz. According to an embodiment, the station 100 may include a communication module using a frequency band of 7.125 GHz or more and a communication module using a frequency band of 7.125 GHz or less. The respective communication modules may perform wireless communication with the AP or an external station according to a wireless LAN standard of a frequency band supported by the corresponding communication module. The communication unit 120 may operate only one communication module at a time or simultaneously operate multiple communication modules together according to the performance and requirements of the station 100. When the station 100 includes a plurality of communication modules, each communication module may be implemented by independent elements or a plurality of modules may be integrated into one chip. In an embodiment of the present invention, the communication unit 120 may represent a radio frequency (RF) communication module for processing an RF signal.

Next, the user interface unit 140 includes various types of input/output means provided in the station 100. That is, the user interface unit 140 may receive a user input by using various input means and the processor 110 may control the station 100 based on the received user input. Further, the user interface unit 140 may perform output based on a command of the processor 110 by using various output means.

Next, the display unit 150 outputs an image on a display screen. The display unit 150 may output various display objects such as contents executed by the processor 110 or a user interface based on a control command of the processor 110, and the like. Further, the memory 160 stores a control program used in the station 100 and various resulting data. The control program may include an access program required for the station 100 to access the AP or the external station.

The processor 110 of the present invention may execute various commands or programs and process data in the station 100. Further, the processor 110 may control the respective units of the station 100 and control data transmission/reception among the units. According to the embodiment of the present invention, the processor 110 may execute the program for accessing the AP stored in the memory 160 and receive a communication configuration message transmitted by the AP. Further, the processor 110 may read information on a priority condition of the station 100 included in the communication configuration message and request the access to the AP based on the information on the priority condition of the station 100. The processor 110 of the present invention may represent a main control unit of the station 100 and according to the embodiment, the processor 110 may represent a control unit for individually controlling some component of the station 100, for example, the communication unit 120, and the like. That is, the processor 110 may be a modem or a modulator/demodulator for modulating and demodulating wireless signals transmitted to and received from the communication unit 120. The processor 110 controls various operations of wireless signal transmission/reception of the station 100 according to the embodiment of the present invention. A detailed embodiment thereof will be described below.

The station 100 illustrated in FIG. 3 is a block diagram according to an embodiment of the present invention, where separate blocks are illustrated as logically distinguished elements of the device. Accordingly, the elements of the device may be mounted in a single chip or multiple chips depending on design of the device. For example, the processor 110 and the communication unit 120 may be implemented while being integrated into a single chip or implemented as a separate chip. Further, in the embodiment of the present invention, some components of the station 100, for example, the user interface unit 140 and the display unit 150 may be optionally provided in the station 100.

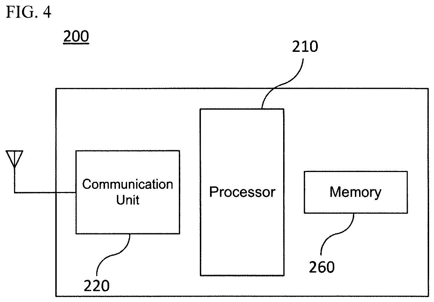

FIG. 4 is a block diagram illustrating a configuration of an AP 200 according to an embodiment of the present invention. As illustrated in FIG. 4, the AP 200 according to the embodiment of the present invention may include a processor 210, a communication unit 220, and a memory 260. In FIG. 4, among the components of the AP 200, duplicative description of parts which are the same as or correspond to the components of the station 100 of FIG. 2 will be omitted.

Referring to FIG. 4, the AP 200 according to the present invention includes the communication unit 220 for operating the BSS in at least one frequency band. As described in the embodiment of FIG. 3, the communication unit 220 of the AP 200 may also include a plurality of communication modules using different frequency bands. That is, the AP 200 according to the embodiment of the present invention may include two or more communication modules among different frequency bands, for example, 2.4 GHz, 5 GHz, 6GHz and 60 GHz together. Preferably, the AP 200 may include a communication module using a frequency band of 7.125GHz or more and a communication module using a frequency band of 7.125 GHz or less. The respective communication modules may perform wireless communication with the station according to a wireless LAN standard of a frequency band supported by the corresponding communication module. The communication unit 220 may operate only one communication module at a time or simultaneously operate multiple communication modules together according to the performance and requirements of the AP 200. In an embodiment of the present invention, the communication unit 220 may represent a radio frequency (RF) communication module for processing an RF signal.

Next, the memory 260 stores a control program used in the AP 200 and various resulting data. The control program may include an access program for managing the access of the station. Further, the processor 210 may control the respective units of the AP 200 and control data transmission/reception among the units. According to the embodiment of the present invention, the processor 210 may execute the program for accessing the station stored in the memory 260 and transmit communication configuration messages for one or more stations. In this case, the communication configuration messages may include information about access priority conditions of the respective stations. Further, the processor 210 performs an access configuration according to an access request of the station. According to an embodiment, the processor 210 may be a modem or a modulator/demodulator for modulating and demodulating wireless signals transmitted to and received from the communication unit 220. The processor 210 controls various operations such as wireless signal transmission/reception of the AP 200 according to the embodiment of the present invention. A detailed embodiment thereof will be described below.

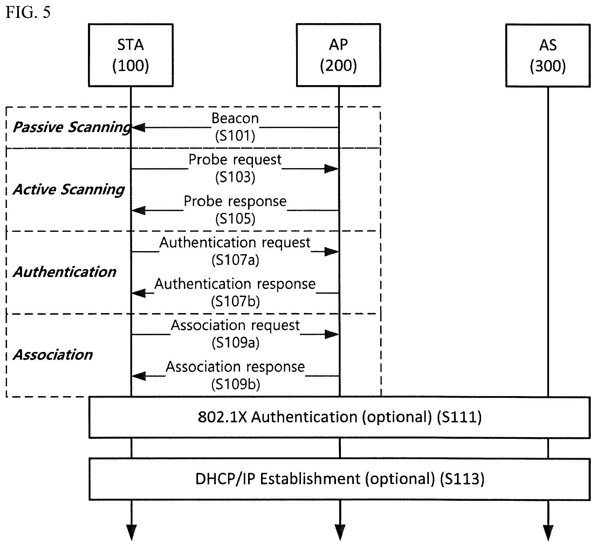

FIG. 5 is a diagram schematically illustrating a process in which a STA sets a link with an AP.

Referring to FIG. 5, the link between the STA 100 and the AP 200 is set through three steps of scanning, authentication, and association in a broad way. First, the scanning step is a step in which the STA 100 obtains access information of BSS operated by the AP 200. A method for performing the scanning includes a passive scanning method in which the AP 200 obtains information by using a beacon message (S101) which is periodically transmitted and an active scanning method in which the STA 100 transmits a probe request to the AP (S103) and obtains access information by receiving a probe response from the AP (S105).

The STA 100 that successfully receives wireless access information in the scanning step performs the authentication step by transmitting an authentication request (S107a) and receiving an authentication response from the AP 200 (S107b). After the authentication step is performed, the STA 100 performs the association step by transmitting an association request (S109a) and receiving an association response from the AP 200 (S109b). In this specification, an association basically means a wireless association, but the present invention is not limited thereto, and the association may include both the wireless association and a wired association in a broad sense.

Meanwhile, an 802.1X based authentication step (S111) and an IP address obtaining step (S113) through DHCP may be additionally performed. In FIG. 5, the authentication server 300 is a server that processes 802.1X based authentication with the STA 100 and may be present in physical association with the AP 200 or present as a separate server.

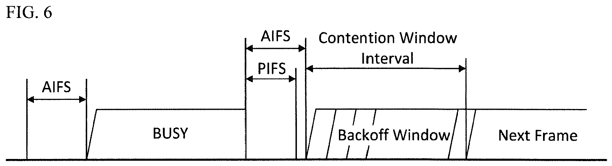

FIG. 6 is a diagram illustrating a carrier sense multiple access (CSMA)/collision avoidance (CA) method used in wireless LAN communication.

A terminal that performs a wireless LAN communication checks whether a channel is busy by performing carrier sensing before transmitting data. When a wireless signal having a predetermined strength or more is sensed, it is determined that the corresponding channel is busy and the terminal delays the access to the corresponding channel. Such a process is referred to as clear channel assessment (CCA) and a level to decide whether the corresponding signal is sensed is referred to as a CCA threshold. When a wireless signal having the CCA threshold or more, which is received by the terminal, indicates the corresponding terminal as a receiver, the terminal processes the received wireless signal. Meanwhile, when a wireless signal is not sensed in the corresponding channel or a wireless signal having a strength smaller than the CCA threshold is sensed, it is determined that the channel is idle.

When it is determined that the channel is idle, each terminal having data to be transmitted performs a backoff procedure after an inter frame space (IFS) time depending on a situation of each terminal, for instance, an arbitration IFS (AIFS), a PCF IFS (PIFS), or the like elapses. According to the embodiment, the AIFS may be used as a component which substitutes for the existing DCF IFS (DIFS). Each terminal stands by while decreasing slot time(s) as long as a random number determined by the corresponding terminal during an interval of an idle state of the channel and a terminal that completely exhausts the slot time(s) attempts to access the corresponding channel. As such, an interval in which each terminal performs the backoff procedure is referred to as a contention window interval.

When a specific terminal successfully accesses the channel, the corresponding terminal may transmit data through the channel. However, when the terminal which attempts the access collides with another terminal, the terminals which collide with each other are assigned with new random numbers, respectively to perform the backoff procedure again. According to an embodiment, a random number newly assigned to each terminal may be decided within a range (2*CW) which is twice larger than a range (a contention window, CW) of a random number which the corresponding terminal is previously assigned. Meanwhile, each terminal attempts the access by performing the backoff procedure again in a next contention window interval and in this case, each terminal performs the backoff procedure from slot time(s) which remained in the previous contention window interval. By such a method, the respective terminals that perform the wireless LAN communication may avoid a mutual collision for a specific channel.

Hereinafter, a terminal of the present disclosure is referred to as a non-AP STA, an AP STA, an AP, a STA, a receiving device or a transmitting device, but the present disclosure is not limited thereto. In addition, the AP STA of the present disclosure may be referred to as the AP.

<Examples of various PPDU formats>

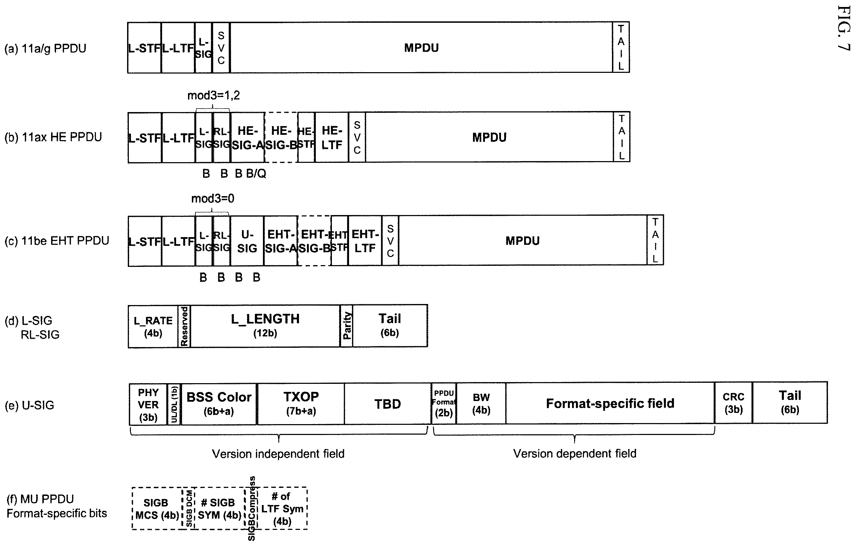

FIG. 7 illustrates an example of a format of a PLCP Protocol data unit (PPDU) for each of various standard generations. More specifically, FIG. 7(a) illustrates an embodiment of a legacy PPDU format based on 802.11a/g, FIG. 7(b) illustrates an embodiment of an HE PPDU format based on 802.1 1ax, and FIG. 7(c) illustrates an embodiment of a non-legacy PPDU (i.e., EHT PPDU) format based on 802.1 1be. FIG. 7(d) illustrates detailed field configurations of RL-SIG and L-SIG commonly used in the PPDU formats.

Referring to FIG. 7(a), a preamble of the legacy PPDU includes a legacy short training field (L-STF), a legacy long training field (L-LTF), and a legacy signal field (L-SIG). In an embodiment of the present invention, the L-STF, the L-LTF, and the L-SIG may be referred to as a legacy preamble.

Referring to FIG. 7(b), a preamble of the HE PPDU additionally includes, in the legacy preamble, a repeated legacy short training field (RL-SIG), a high efficiency signal A field (HE-SIG-A), a high efficiency signal B field (HE-SIG-B), a high efficiency short training field (HE-STF), and a high efficiency long training field (HE-LTF). In an embodiment of the present invention, the RL-SIG, HE-SIG-A, the HE-SIG-B, the HE-STF and the HE-LTF may be referred to as an HE preamble. A specific configuration of the HE preamble may be modified according to an HE PPDU format. For example, HE-SIG-B may be used only in an HE MU PPDU format.

Referring to FIG. 7(c), a preamble of the EHT PPDU additionally includes, in the legacy preamble, a repeated legacy short training field (RL-SIG), a universal signal field (U-SIG), and an extremely high throughput signal A field (EHT-SIG-A), an extremely high throughput signal B field (EHT-SIG-B), an extremely high throughput short training field (EHT-STF), and an extremely high throughput long training field (EHT-LTF). In an embodiment of the present invention, the RL-SIG, EHT-SIG-A, the EHT-SIG-B, the EHT-STF and the EHT-LTF may be referred to as an EHT preamble. A specific configuration of a non-legacy preamble may be modified according to an EHT PPDU format. For example, EHT-SIG-A and EHT-SIG-B may be used only in a part of the EHT PPDU format.

64-FFT OFDM is applied in an L-SIG field included in the preamble of the PPDU, and the L-SIG field includes a total of 64 subcarriers. Among 64 subcarriers, 48 subcarriers excluding a guard subcarrier, a DC subcarrier, and a pilot subcarrier are used for transmission of L-SIG data. BPSK and a modulation and coding scheme (MCS) of rate=1/2 are applied in L-SIG, and therefore the L-SIG may include a total of 24 bits of information. FIG. 7(d) illustrates a 24-bit information configuration of L-SIG.

Referring to FIG. 7(d), the L-SIG includes an L_RATE field and an L_LENGTH field. The L_RATE field includes 4 bits and indicates an MCS used for data transmission. Specifically, the L_RATE field indicates one value among transmission rates of 6/9/12/18/24/36/48/54Mbps obtained by combining a modulation scheme of BPSK/QPSK/16-QAM/64-QAM, etc. and an inefficiency of 1/2, 2/3, 3/4, etc. A total length of a corresponding PPDU may be indicated by combining information of the L_RATE field and information of the L LENGTH field. In a non-legacy PPDU format, the L_RATE field is configured to a minimum rate of 6Mbps.

A unit of the L_LENGTH field is a byte and a total of 12 bits are allocated to signal up to 4095, and a length of the PPDU may be indicated in combination with the L_RATE field. A legacy terminal and a non-legacy terminal may interpret the L_LENGTH field in different ways.

Firstly, a method of interpreting the length of the PPDU by the legacy terminal and the non-legacy terminal by using the L_LENGTH field is described below. When a value of the L_RATE field is configured to indicate 6 Mbps, 3 bytes during 4 us which is one symbol duration of 64 FET (i.e., 24 bits) may be transmitted. Therefore, the 64 FET standard symbol number after an L-SIG is acquired by adding 3 bytes corresponding to a SVC field and a Tail field to the L_LENGTH field value and then dividing the same by 3 bytes which is a transmission amount of one symbol. When multiplying the acquired symbol number by 4 us which is one symbol duration and then adding 20 us which is consumed to transmit the L-STF, the L-LTF, and the L-SIG, the length of a corresponding PPDU, i.e., a receipt time (RXTIME) is acquired, which is expressed by Equation 1 below.

$$【\text{Equation 1}】$$

$$\mathbf{RXTIME(us)} = \left( \left\lceil \frac{\mathbf{L\_LENGTH+3}}{\mathbf{3}} \right\rceil \right) \times \mathbf{4} + \mathbf{20}$$

In this case, $\lceil x \rceil$ denotes the smallest natural number greater than or equal to x. Since the maximum value of the L_LENGTH field is 4095, the length of the PPDU can be set up to 5.464ms. The non-legacy terminal transmitting the PPDU should set the L_LENGTH field as shown in Equation 2 below.

$$【\text{Equation 2}】$$

$$\mathbf{L\_LENGTH(byte)} = \left( \left\lceil \frac{\mathbf{TXTIME-20}}{\mathbf{4}} \right\rceil \right) \times \mathbf{3} - \mathbf{3}$$

Herein, TXTIME is the total transmission time constituting the corresponding PPDU, and is expressed by Equation 3 below. In this case, TX represents the transmission time of X.

$$【\text{Equation 3}】$$

$$TXTIME(us) = T_{L-STF} + T_{L-LTF} + T_{L-SIG} + T_{RL-SIG} + T_{U-SIG} + (T_{EHT-SIG-A}) + (T_{EHT-SIG-B})$$

$$+ T_{EHT-STF} + N_{EHT-LTF} \cdot T_{EHT-LTF} + T_{DATA}$$

Referring to the above equations, the length of the PPDU is calculated based on a rounded up value of L_LENGTH/3. Therefore, for a random value of k, three different values of L_LENGTH={3k+1, 3k+2, 3(k+1)} indicate the same PPDU length.

Referring to FIG. 7(e), a universal SIG (U-SIG) field continues to exist in an EHT PPDU and a WLAN PPDU of a subsequent generation, and serves to classify a generation of a PPDU, which includes 11be. U-SIG is a 64 FFT-based OFDM 2 symbol and may transfer a total of 52 bits of information. In 52 bits, 43 bits excluding 9 bits for CRC/Tail are largely divided into a version independent (VI) field and a version dependent (VD) field.

A VI bit enables a current bit configuration to be maintained even later on, so that even if a PPDU of a subsequent generation is defined, current 11be terminals may obtain information on the PPDU via the VI fields of the PPDU. To this end, the VI field includes PHY version, UL/DL, BSS color, TXOP, and reserved fields. The PHY version field is 3 bits, and serves to sequentially classify 11be and subsequent generation wireless LAN standards into versions. 11be has a value of 000b. The UL/DL field identifies whether the PPDU is an uplink/downlink PPDU. BSS color indicates an identifier for each BSS defined in 11ax, and has a value of 6 bits or more. TXOP indicates transmit opportunity duration transmitted in a MAC header, wherein, by adding the TXOP to a PHY header, the PPDU may infer a length of the TXOP included therein without having to decode an MPDU, and the TXOP has a value of 7 bits or more.

The VD field is signaling information useful only for an 11be version of the PPDU, and may include a field commonly used in any PPDU format, such as PPDU format and BW, and a field defined differently for each PPDU format. The PPDU format is a classifier that classifies EHT single user (SU), EHT multiple user (MU), EHT trigger-based (TB), EHT extended range (ER) PPDU, etc. The BW field signals five basic PPDU BW options (BW, which is expressible in the form of an exponential power of 20*2, may be referred to as basic BW) of 20, 40, 80, 160 (80+80), and 320 (160+160) MHz and various remaining PPDU BWs configured via preamble puncturing. After being signaled at 320 MHz, signaling may be performed in a form in which some 80 MHz is punctured. A punctured and modified channel type may be signaled directly in the BW field, or may be signaled using the BW field with a field (e.g., a field within the EHT-SIG field) appearing after the BW field. If the BW field is configured to 3 bits, a total of 8 BW signaling may be performed, and therefore only up to 3 signaling may be performed in a puncturing mode. If the BW field is configured to 4 bits, a total of 16 BW signaling may be performed, and therefore up to 11 signaling may be performed in the puncturing mode.

A field located after the BW field varies depending on the type and format of the PPDU, an MU PPDU and an SU PPDU may be signaled in the same PPDU format, a field for classification between the MU PPDU and the SU PPDU may be located before an EHT-SIG field, and additional signaling may be performed for the same. Both the SU PPDU and the MU PPDU include the EHT-SIG field, but some fields that are not required in the SU PPDU may be compressed. Information on the field to which the compression has been applied may be omitted or may have a size smaller than a size of an original field included in the MU PPDU. For example, in a case of the SU PPDU, a common field of the EHT-SIG may be omitted or replaced, or the SU PPDU may have a different configuration in which a user specific field is replaced, reduced to one, or the like.

Alternatively, the SU PPDU may further include a compression field indicating whether compression is performed, and a part of field (e.g., RA fields, etc.) may be omitted according to a value of the compressed field.

If a part of the EHT-SIG field of the SU PPDU is compressed, information to be included in the compressed field may be signaled also in an uncompressed field (e.g., the common field, etc.). The MU PPDU corresponds to a PPDU format for concurrent reception by multiple users, and therefore the EHT-SIG field is required to be transmitted subsequently to the U-SIG field, and the amount of signaled information may vary. That is, a plurality of MU PPDUs are transmitted to a plurality of STAs, so that the respective STAs should recognize locations of RUs, at which the MU PPDUs are transmitted, the STAs to which the RUs have been allocated respectively, and whether the transmitted MU PPDUs have been transmitted to the STAs themselves. Therefore, an AP should transmit information described above, by including the same in the EHT-SIG field. To this end, information for efficient transmission of the EHT-SIG field is signaled in the U-SIG field, and this may correspond to an MCS that is a modulation method and/or the number of symbols in the EHT-SIG field. The EHT-SIG field may include information on a size and location of an RU allocated to each user.

In the case of the SU PPDU, a plurality of RUs may be allocated to an STA, and the plurality of RUs may be continuous or discontinuous. If the RUs allocated to the STA are discontinuous, the STA should recognize a punctured RU in the middle in order to efficiently receive the SU PPDU. Accordingly, the AP may transmit the SU PPDU including information (e.g., a puncturing pattern of the RUs, etc.) of punctured RUs among the RUs allocated to the STA. That is, in the case of the SU PPDU, a puncturing mode field, which includes information indicating, in a bitmap format, etc., a puncturing pattern and whether the puncturing mode is applied, may be included in the EHT-SIG field, and the puncturing mode field may signal a discontinuous channel type appearing within a bandwidth.

The signaled discontinuous channel type is limited, and indicates discontinuous channel information and BW of the SU PPDU in combination with a value of the BW field. For example, the SU PPDU is a PPDU transmitted only to a single terminal, so that the STA may recognize a bandwidth allocated to itself via the BW field included in the PPDU, and the SU PPDU may recognize a punctured resource in the allocated bandwidth via the puncturing mode field of the EHT-SIG field or the U-SIG field included in the PPDU. In this case, the terminal may receive the PPDU in resource units remaining after excluding a specific channel of the punctured resource unit. The plurality of RUs allocated to the STA may be configured by different frequency bands or tones.

Only a limited discontinuous channel type is signaled in order to reduce signaling overhead of the SU PPDU.

Puncturing may be performed for each 20 MHz sub-channel, so that if puncturing is performed for BW having a large number of 20 MHz sub-channels, such as 80, 160, and 320 MHz, a discontinuous channel (if puncturing of only edge 20 MHz is considered to be discontinuous) type should be signaled in the case of 320 MHz by expressing whether each of 15 20 MHz sub-channels remaining after excluding a primary channel is used. As such, allocating 15 bits to signal a discontinuous channel type of single user transmission may act as excessively large signaling overhead in consideration of a low transmission rate of a signaling part.

The present disclosure suggests a signaling technique of a discontinuous channel type of the SU PPDU and illustrates the discontinuous channel type determined according to the suggested technique. In addition, the present disclosure suggests a signaling technique of a puncturing type of each of a primary 160 MHz and a secondary 160 MHz in 320 MHz BW configuration of the SU PPDU.

In addition, an embodiment of the present disclosure suggests a technique which differs in the configuration of the PPDU indicating the preamble puncturing BW values according to the PPDU format signaled in the PPDU format field. If the length of the BW field is 4 bits, in case of the EHT SU PPDU or the TB PPDU, the EHT-SIG-A of 1 symbol may be additionally signaled after the U-SIG, or the EHT-SIG-A may be never signaled, so that by considering this, it is necessary to completely signal a maximum of 11 puncturing modes through only the BW field of the U-SIG. However, in case of the EHT MU PPDU, since the EHT-SIG-B is additionally signaled after the U-SIG, the maximum of 11 puncturing modes may be signaled by a method different from the SU PPDU. In case of the EHT ER PPDU, the BW field is configured as 1 bit to signal information on whether the PPDU uses 20 MHz or 10 MHz band.

FIG. 7(f) illustrates a configuration of a format-specific field of a VD field when the EHT MU PPDU is indicated in the PPDU format field of U-SIG. In the case of the MU PPDU, SIG-B, which is a signaling field for concurrent reception by multiple users, is essentially required, and SIG-B may be transmitted without separate SIG-A after U-SIG. To this end, information for decoding of SIG-B should be signaled in U-SIG. These fields include SIG-B MCS, SIG-B DCM, Number of SIG-B Symbols, SIG-B Compression, and Number of EHT-LTF Symbols.

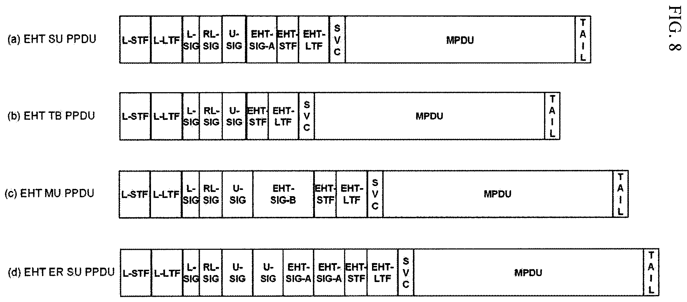

FIG. 8 illustrates an example of various extremely high throughput (EHT) physical protocol data unit (PPDU) formats and a method for indicating the same according to an embodiment of the present invention.

Referring to FIG. 8, a PPDU may include a preamble and a data part, and an EHT PPDU format, that is a PPDU type, may be classified according to a U-SIG field included in the preamble. Specifically, based on a PPDU format field included in the U-SIG field, whether the format of the PPDU is an EHT PPDU may be indicated.

FIG. 8(a) shows an example of an EHT SU PPDU format for a single STA. An EHT SU PPDU is a PPDU used for single user (SU) transmission between an AP and a single STA, and an EHT-SIG-A field for additional signaling may be located after the U-SIG field.

FIG. 8(b) shows an example of an EHT trigger-based PPDU format which corresponds to an EHT PPDU transmitted based on a trigger frame. An EHT Trigger-based PPDU is an EHT PPDU transmitted based on a trigger frame and is an uplink PPDU used for a response to the trigger frame. Unlike in the EHT SU PPDU, an EHT-SIG-A field is not located after a U-SIG field in the EHT PPDU.

FIG. 8(c) shows an example of an EHT MU PPDU format which corresponds to an EHT PPDU for multiple users. An EHT MU PPDU is a PPDU used to transmit the PPDU to one or more STAs. In the EHT MU PPDU format, an HE-SIG-B field may be located after a U-SIG field.

FIG. 8(d) shows an example of an EHT ER SU PPDU format used for single user transmission with an STA in an extended range. An EHT ER SU PPDU may be used for single user transmission with an STA of a wider range compared to the EHT SU PPDU described in FIG. 8(a), and a U-SIG field may be repeatedly located on a time axis.

The EHT MU PPDU described in FIG. 8(c) may be used by an AP to perform downlink transmission to a plurality of STAs. Here, the EHT MU PPDU may include scheduling information so that the plurality of STAs may concurrently receive the PPDU transmitted from the AP. The EHT MU PPDU may transfer, to the STAs, AID information of a transmitter and/or a receiver of the PPDU transmitted via a user specific field of EHT-SIG-B. Accordingly, the plurality of terminals having received the EHT MU PPDU may perform a spatial reuse operation based on the AID information of the user specific field included in a preamble of the received PPDU.

Specifically, a resource unit allocation (RA) field of the HE-SIG-B field included in the HE MU PPDU may include information on a configuration of a resource unit (e.g., a division form of the resource unit) in a specific bandwidth (e.g., 20 MHz, etc.) of a frequency axis. That is, the RA field may indicate configurations of resource units segmented in a bandwidth for transmission of the HE MU PPDU, in order for the STA to receive the PPDU. Information on the STA allocated (or designated) to each segmented resource unit may be included in the user specific field of EHT-SIG-B so as to be transmitted to the STA. That is, the user specific field may include one or more user fields corresponding to the respective segmented resource units.

For example, a user field corresponding to at least one resource unit used for data transmission among the plurality of segmented resource units may include an AID of a receiver or a transmitter, and a user field corresponding to the remaining resource unit(s) which is not used for data transmission may include a preconfigured null STA ID.

Two or more PPDUs illustrated in FIG. 8 may be indicated by a value indicating the same PPDU format. That is, two or more PPDUs may be indicated by the same PPDU format through the same value. For example, the EHT SU PPDU and the EHT MU PPDU may be indicated by the same value through the U-SIG PPDU format subfield. At this time, the EHT SU PPDU and the EHT MU PPDU may be divided by the number of the STAs receiving the PPDU. For example, the PPDU receiving one STA may be identified as the EHT SU PPDU, and when the number of the STAs is configured to receive two or more STAs, the PPDU may be identified as the EHT MU PPDU. In other words, two or more PPDU formats illustrated in FIG. 8 may be indicated through the same subfield value.

In addition, a part field among the fields illustrated in FIG. 8 or part information of the field may be omitted, and the case that the part field or the part information of the field is omitted may be defined as a compression mode or a compressed mode.

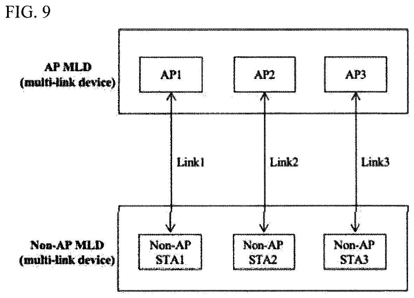

FIG. 9 illustrates a multi-link device according to an embodiment of the present invention.

Referring to FIG. 9, a concept of a device to which one or more STAs are affiliated may be defined. According to an embodiment of the present invention, as another embodiment, devices to which more than one STA (i.e., two or more STAs) are affiliated may be defined. In this case, the device may be a logical concept. Accordingly, the devices to which one or more STAs or more than one STA having such a concept are affiliated may be referred to as a multi-link device (MLD), a multi-band device, or a multi-link logical entry (MLLE).

Alternatively, the devices of the concept above may be referred to as a multi-link entity (MLE). In addition, the MLD may have one medium access control service access point (MAC SAP) until a logical link control (LLC), and the MLD may have one MAC data service.

It is possible for STAs included in the MLD to operate in one or more links or channels. That is, it is possible for the STAs included in the MLD to operate in multiple different channels. For example, it is possible for the STAs included in the MLD to operate using channels of different frequency bands of 2.4 GHz, 5 GHz, and 6 GHz. Accordingly, it is possible for the MLD to acquire gain in channel access, and increase the performance of the entire network. The conventional wireless LAN operates in a single link, but the MLD operation may acquire much more channel access opportunities by using multiple links, or an STA may efficiently operate in the multiple links in consideration of a channel condition.

In addition, when STAs affiliated to the MLD are APs, the MLD to which the APs are affiliated may be an AP MLD. However, when the STAs affiliated to the MLD are non-AP STAs, the MLD to which the non-APs are affiliated may be a non-AP MLD.

In addition, an AP multi-link device (MLD) may be a device including one or more wireless access points (APs), and may be a device connected to a higher layer through one interface. That is, the AP MLD may be connected to a logical link control (LLC) layer through one interface. Multiple APs included in the AP MLD may share some functions in a MAC layer. The respective APs in the AP MLD may operate in different links. An STA MLD may be a device including one or more non-AP STAs, and may be a device connected to a higher layer through one interface.

That is, the STA MLD may be connected to an LLC layer through one interface. Multiple STAs included in the STA MLD may share some functions in a MAC layer. In addition, the STA MLD may be also called a non-AP MLD. In this case, the AP MLD and the STA MLD may perform a multi-link operation of performing communication using multiple individual links. That is, when the AP MLD includes multiple APs, each of the APs configures a separate link to perform a frame transmission or reception operation using multiple links with each terminal included in the STA MLD. In this case, each link may operate in a 2.4 GHz, 5 GHz, or 6 GHz band, and a bandwidth extension operation may be performed in each link. For example, when the AP MLD sets up one link in the 2.4 GHz band and two links in the 5 GHz band, in the 2.4 GHz band, frame transmission may be performed in a 40 MHz band through a bandwidth extension scheme, and in each link using the 5 GHz band, frame transmission may be performed in a maximum of 320 MHz band by utilizing a non-consecutive bandwidth.

Meanwhile, in the AP MLD or the STA MLD, while one terminal in the MLD performs a transmission operation, another terminal may not be able to perform a reception operation, due to an interference problem inside the device. As such, an operation in which while one AP or terminal in an MLD performs a transmission operation, another AP or terminal in the MLD performs reception is referred to as simultaneous transmission and reception (STR). The AP MLD may perform an STR operation for all links. Alternatively, the STR operation may not be possible in some links of the AP MLD. A terminal MLD which can perform the STR operation may be associated with the AP MLD, and an MLD which cannot perform the STR operation for some or all links may be associated with the AP MLD. In addition, a terminal (for example, IEEE 802.11a/b/g/n/ac/ax terminal) not belonging to an MLD may be additionally associated with an AP included in an AP MLD.

In the scanning and association process described in FIG. 5, the AP MLD and the STA MLD may perform a negotiation process for a multi-link use operation. For example, in the scanning process described in FIG. 5, an AP included in the AP MLD may transmit a beacon frame including an indicator indicating that a multi-link operation is available, the number of available links, and information on multiple available links. Alternatively, a terminal belonging to the STA MLD may transmit a probe request frame including an indicator indicating that a multi-link operation is available, and an AP belonging to the AP MLD may include an indicator indicating that a multi-link operation is available, in a probe response frame. In this case, the AP may additionally include the number of available links during a multi-link operation, link information, etc., and transmit the same.

The STA MLD having identified, in the scanning process above, whether the multi-link operation is available for the AP MLD and the information on the available links may perform an association process with the AP MLD. In this case, the AP MLD and the STA MLD may start a negotiation process for the multi-link operation. In this case, the negotiation process for the multi-link operation may be performed in an association process between the AP belonging to the AP MLD and the terminal belonging to the STA MLD. That is, a random terminal (for example, STA1) belonging to the STA MLD may transmit an indicator indicating that a multi-link operation of the terminal is available and a request indicator for requesting to perform the multi-link operation to a random AP (for example, AP1) belonging to the AP MLD while transmitting an association request frame. The AP having received the association request frame from the terminal may identify the indicator for requesting the multi-link operation, and when the AP can perform the multi-link operation, the AP may include information on a link to be used for the multi-link operation, a parameter used in each link, etc. in an association response frame allowing the multi-link operation, and transmit the association response frame to the corresponding terminal. The parameter for the multi-link operation may include one or more of a band of each link, a bandwidth extension direction, a target beacon transmission time (TBTT), and whether an STR operation is performed. The AP MLD and the STA MLD between which the association request frame and the response frame have been exchanged and which have identified the use of the multi-link operation may perform a frame transmission operation using multiple links by using multiple APs included in the AP MLD and multiple terminals included in the STA MLD after the corresponding association process.

Referring to FIG. 9, there may be an MLD including multiple STAs, and the multiple STAs included in the MLD may operate in multiple links. In FIG. 9, an MLD including AP1, AP2, and AP3, which are APs, may be called an AP MLD, and an MLD including non-AP STA1, non-AP STA2, and non-AP STA3, which are non-AP STAs, may be called a non-AP MLD. The STAs included in the MLD may operate in Link 1, Link 2), Link 3), or some of Links 1 to 3.

According to an embodiment of the present invention, the multi-link operation may include a multi-link setup operation. The multi-link setup operation may be an operation corresponding to association performed in a single link operation. To exchange a frame in multiple links, the multi-link setup needs to performed first. The multi-link setup operation may be performed using a multi-link setup element. Here, the multi-link setup element may include capability information related to the multi-link, and the capability information may include information related to whether an STA included in an MLD can simultaneously receive a frame through one link while another STA included in the MLD transmits a frame through another link. That is, the capability information may include information related to whether STAs (non-AP STAs) and/or APs (or AP STAs) can simultaneously transmit/receive frames in different transmission directions through links included in the MLD. In addition, the capability information may further include information related to an available link and an operating channel. The multi-link setup may be performed through a negotiation between peer STAs, and the multi-link operation may be set up through one link.

According to an embodiment of the present invention, there may be a mapping relationship between links of a TID and an MLD. For example, when the TID is mapped to a link, the TID may be transmitted through the mapped link. The mapping between the TID and the link may be performed on the basis of a transmission direction. For example, the mapping may be performed for both directions between MLD 1 and MLD 2. In addition, there may be a default setup for the mapping between the TID and the link. For example, the mapping between the TID and the link may correspond to mapping of all TIDs to a link by default.

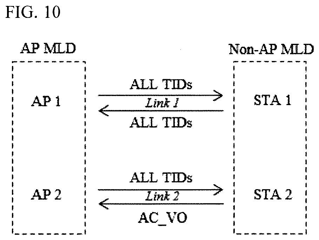

FIG. 10 illustrates an example of a TID-to-link mapping method according to an embodiment of the present invention.

Referring to FIG. 10, as described in FIG. 9, there may be a mapping relationship between a TID and a link. In addition, in the present invention, the mapping between the TID and the link may be referred to as TID-to-link mapping, TID to link mapping, TID mapping, link mapping, etc. A TID may be a traffic identifier. In addition, the TID may be an identifier (ID) for classifying traffic, data, etc. to support a quality of service (QoS).

In addition, the TID may be an ID used or allocated in a layer higher than a MAC layer. The TID may indicate traffic categories (TCs) and traffic streams (TSs). In addition, the TID may have 16 values, which can be indicated as, for example, values of 0 to 15. In addition, a used TID value may vary according to an access policy or channel access and medium access methods. For example, when an enhanced distributed channel access (EDCA) (hybrid coordination function (HCF) contention-based channel access) is used, a possible TID value may be 0 to 7. In addition, when the EDCA is used, the TID value may indicate a user priority (UP), and the UP may relate to a TC or a TS. In addition, the UP may be a value allocated in a layer higher than the MAC. In addition, HCF controlled channel access (HCCA) or SPCA is used, a possible TID value may be 8 to 15. In addition, when the HCCA or the SPCA is used, the TID may indicate a TSID. In addition, when HEMM or SEMM is used, a possible TID value may be 8 to 15. In addition, when the HEMM or the SEMM is used, the TID may indicate a TSID.

In addition, there may be a mapping relationship between the UP and an access category (AC). The AC may be a label for providing the QoS in the EDCA, or a label indicating a set of EDCA parameters. The EDCA parameter of the set of the EDCA parameters may be used for channel connection. The AC may be used by a QoS STA.

An AC value may be configured as one of AC_BK, AC_BE, AC_VI, and AC_VO. AC_BK, AC_BE, AC_VI, and AC_VO may indicate background, best effort, video, and voice, respectively. In addition, AC_BK, AC_BE, AC_VI, and AC_VO may be subdivided. For example, AC_VI may be subdivided into AC_VI primary and AC_VI alternate. In addition, AC_VO may be subdivided into AC_VO primary and AC_VO alternate. In addition, the UP value or the TID value may be mapped to the AC value. For example, UP or TID values 1, 2, 0, 3, 4, 5, 6, and 7 may be mapped to AC_BK, AC_BK, AC_BE, AC_BE, AC_VI, AC_VI, AC_VO, and AC_VO, respectively. Alternatively, UP or TID values 1, 2, 0, 3, 4, 5, 6, and 7 may be mapped to AC_BK, AC_BK, AC_BE, AC_BE, AC_VI alternate, AC_VI primary, AC_VO primary, and AC_VO alternate, respectively. In addition, UP or TID values 1, 2, 0, 3, 4, 5, 6, and 7 may have sequentially have higher priorities. That is, a value near UP or TID value 1 may have a low priority, and a value near UP or TID value 7 may have a high priority. Accordingly, AC_BK, AC_BE, AC_VI, and AC_VO may have sequentially higher priorities. In addition, AC_BK, AC_BE, AC_VI, and AC_VO may correspond to AC indices (ACIs) 0, 1, 2, and 3, respectively.

Accordingly, there may be a relationship between the TID and the AC. Accordingly, the TID-to-link mapping of the present invention may correspond to a mapping relationship between an AC and a link. In addition, in the present invention, when the TID is mapped, it may mean that the AC is mapped, and when the AC is mapped, it may mean that the TID is mapped.

According to an embodiment of the present invention, there may be a TID mapped to each link of a multi-link. For example, there may be mapping relating to one of multiple links through which a TID or an AC is allowed to perform transmission and reception. In addition, such mapping may be defined separately for both directions of the link. In addition, as described above, there may be a default setup for the mapping between the TID and the link. For example, the mapping between the TID and the link may correspond to mapping of all TIDs to a link by default. In addition, according to an embodiment, at a specific time point, a TID or an AC may be mapped to at least one link. In addition, a management frame or a control frame may be transmitted in all links.

In the present invention, a data frame corresponding to a TID or an AC mapped to a direction of a link may be transmitted. In addition, a data frame corresponding to a TID or an AC not mapped to a direction of a link may not be transmitted.

According to an embodiment, the TID-to-link mapping may be applied to acknowledgement. For example, a block ack agreement may be based on the TID-to-link mapping. Alternatively, the TID-to-link mapping may be based on the block ack agreement. For example, there may be a block ack agreement for a TID for which the TID-to-link mapping is performed.

By performing the TID-to-link mapping, a QoS service can be provided. For example, by mapping an AC or a TID having a high priority to a link in which a channel state is good or there are small number of STAs, data of the corresponding AC or TID may be promptly transmitted. Alternatively, the TID-to-link mapping can assist in power saving (or entering into a doze state) by an STA of a specific link.

Referring to FIG. 10, there may be an AP MLD including AP 1 and AP 2. In addition, there may be a non-AP MLD including STA 1 and STA 2. In addition, in the AP MLD, there may be Link 1 and Link 2 which are multiple links. AP 1 and STA 1 may be associated in Link 1, and AP 2 and STA 2 may be associated in Link 2.

Accordingly, Link 1 may include a link for transmission from AP 1 to STA 1 and/or a link for transmission from STA 1 to AP 1, and Link 2 may include a link for transmission from AP 2 to STA 2 and/or a link for transmission from STA 2 to AP 2. In this case, each link may be mapped to a TID and/or an AC.

For example, all TIDs and all ACs may be mapped to the link for transmission from AP 1 to STA 1 in Link 1, and a link for transmission from STA 1 to AP 1 in Link 1. In addition, only AC_VO or a TID corresponding to AC_VO may be mapped to a link for transmission from STA 2 to AP 2 in Link 2. In addition, only data of the mapped TID and/or AC can be transmitted in the corresponding link. In addition, data of the TID or AC not mapped to a link cannot be transmitted in the corresponding link.

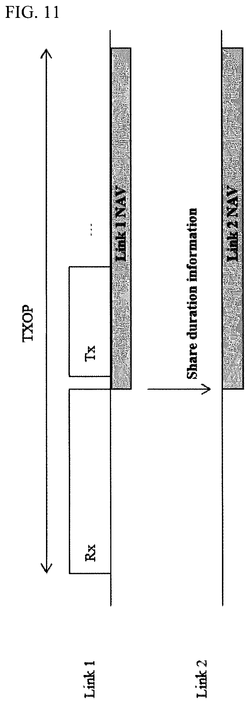

FIG. 11 illustrates an example of a multi-link NAV setup operation according to an embodiment of the present invention.

An operation of performing simultaneous transmission and reception (STR) by an MLD may be restricted, which may be associated with a frequency spacing between multiple links operating as a multi-link.

Accordingly, according to an embodiment of the present invention, when a spacing between links is m MHz, simultaneous transmission and reception may be restricted, and a spacing between links is n MHz (where, m is greater than n), simultaneous transmission and reception may not be restricted. This embodiment is provided to solve the problem that the simultaneous transmission and reception is restricted, and a redundant description can be omitted. In addition, this embodiment is appliable to an MLD which cannot perform the STR.

According to an embodiment of the present invention, duration information may be shared among links operating as a multi-link. In an embodiment, the duration information may be TXOP duration information transmitted in a signaling field of a preamble. The signaling field may be the above-described U-SIG field. Alternatively, the signaling field may be the above-described HE-SIG-A field. In another embodiment, the duration information may be duration information indicated by a duration/ID field included in a MAC header. In another embodiment, the duration information may be duration information indicated by a length field (L length field) included in an L-SIG field. According to an embodiment, the duration information indicated by the U-SIG field, the HE-SIG-A field, or the duration/ID field may be a value indicating a TXOP duration. According to an embodiment, the duration information indicated by the L-SIG field may be a value indicating the length of a physical layer protocol data unit (PPDU) including the L-SIG field or the end of the PPDU including the L-SIG field.

In addition, according to an embodiment of the present invention, it may be restricted to perform transmission or channel access in a period based on the duration information shard among the links. A method for restricting transmission or channel access may include setting up an NAV. Alternatively, to resume the transmission or channel access, the NAV may be reset. In this case, the NAV may be an intra-BSS NAV. The intra-BSS NAV may be an NAV set up by an intra-BSS frame (or PPDU). That is, an STA belonging to an MLD may set up an NAV on the basis of a frame (or PPDU) directed to another STA belonging to the MLD.

According to an embodiment of the present invention, there may be an inter-link NAV. The inter-link NAV may be an NAV used by STAs of multiple links belonging to an MLD in a case of operating as a multi-link. For example, transmission may not be performed in Link 2 on the basis of the inter-link NAV configured on the basis of the duration information received in Link 1. In addition, the inter-link NAV may exist or may be used for an MLD which cannot perform the STR. For example, when an inter-link NAV is set up, an MLD having set up the corresponding inter-link NAV may not perform transmission or channel access in multiple links (or all links used by the MLD).

In addition, as one of types of NAV, there may be a basic NAV other than the intra-BSS NAV. The basic NAV may be an NAV set up by an inter-BSS frame (or PPDU), and the basic NAV may be set up by a frame (or PPDU) which is not determined as either an intra-BSS or an inter-BSS.

In a case where an inter-link NAV is separately used, it may be advantageous in a situation in which an NAV setup is updated, compared to a case where the inter-link NAV is not used. For example, there may be a situation in which it is allowed to reset an NAV set up by another link. For example, it may be allowed to set up an inter-link NAV on the basis of a frame (or PPDU), and then reset the set inter-link NAV upon determination that the frame (or PPDU) is not directed to the same MLD. If there is an MLD operating in Link 1 and Link 2, an NAV for Link 1 may be set up on the basis of a frame received in Link 1. Thereafter, the NAV of Link 1 may be updated on the basis of the frame of Link 2. In addition, in a case where the NAV by the Link 2 does not need to be maintained, when the NAV of Link 1 is reset, information of the NAV set up on the basis of the frame received in Link 1 may be lost. If the inter-link NAV is used together with the NAV for each link, the NAV for each link can be maintained even though the inter-link NAV is reset, and thus such a problem can be solved.

In an embodiment of the present invention, the NAV setup is provided as an example, but the embodiment of the present invention is not limited thereof, and is applicable to a case of indicating suspension of channel access or indicating a channel state as busy to a physical layer. In addition, the present invention is not limited to a case of resetting an NAV, and is also applicable to a case of indicating continuing channel access to a physical layer or indicating a channel state as idle to a physical layer. In this case, the primitive exchanged between the physical layer and the MAC layer may be used. Alternatively, the primitive exchanged between one STA and another STA of an MLD may be used. Alternatively, the primitive exchanged between one MAC layer and another MAC layer of an MLD may be used.

According to an embodiment of the present invention, when an STA belonging to an MLD starts PPDU reception, another STA belonging to the MLD may need to stop performing channel access. As described above, the channel access can be stopped on the basis of the received duration information, but there may be a time required to acquire duration information from a time point at which the PPDU reception starts due to the location of a field including the duration information or a time required to perform decoding, etc. Accordingly, if the channel access is performed and the transmission starts during this time, the above-described problem may occur. Accordingly, according to an embodiment of the present invention, an STA of an MLD may suspend channel access from a time point at which another STA of the MLD starts to perform reception. In addition, when it is identified that a frame received after another STA of the MLD starts performing reception is not directed to another STA, channel access can be restarted.

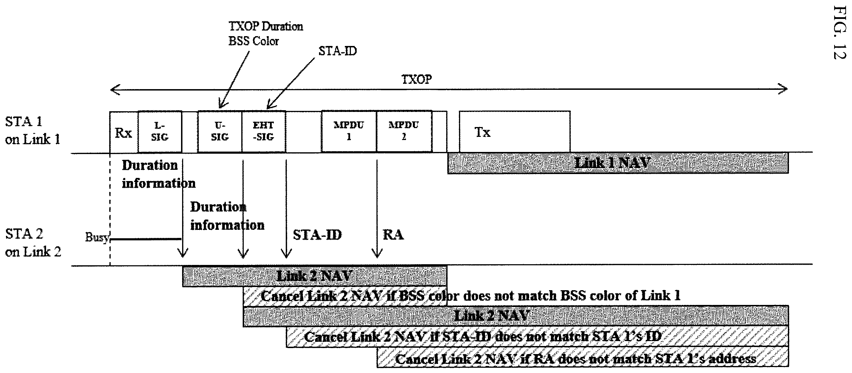

FIG. 12 illustrates another example of a multi-link NAV setup operation according to an embodiment of the present invention.

FIG. 12 is a detailed description of a specific method of the embodiment described in FIG. 11, and a redundant description can be omitted.

As described above, on the basis of a frame or a PPDU received by an STA belonging to an MLD, another STA belonging to the same MLD may suspend or resume channel access or transmission. In the present invention, suspending channel access or transmission may include an operation of setting up (updating) an NAV, determining a channel as busy, suspending CCA, etc. In addition, resuming channel access or transmission may include an operation of resetting an NAV, canceling a NAV setup, determining a channel as idle, performing CCA, etc. Hereinafter, such an operation may be indicated as suspending or resuming. In addition, hereinafter, it may be described that STA 1 and STA 2 belong to an MLD, and STA 1 and STA 2 operate in Link 1 and Link 2, respectively. In addition, a frame and a PPDU may be interchangeable indicated. In addition, the NAV in this case may be an intra-BSS NAV or an inter-link NAV as described in FIG. 11.

According to an embodiment of the present invention, when STA 1 starts receiving a frame, STA 2 may suspend channel access. In addition, when STA 1 acquires duration information from an L-SIG, STA 2 may continue the state of suspending the channel access. In this case, the state of suspending the channel access by STA 2 may be determined to last by the end of the frame received by STA 1. In addition, when STA 1 fails to accurately decode the L-SIG (in a case of invalid L-SIG), STA 2 may resume channel access.

In addition, a TXOP duration and a BSS color may be received from the U-SIG of the frame received by the STA 1. If the received BSS color indicates an intra-BSS or the BSS color is a BSS color corresponding to STA 1, channel access may be suspended. In an embodiment, in this case, a channel access suspending duration may last by the end of the received frame. In this case, it is advantageous in that channel access can be started faster after the received frame ends. In another embodiment, in this case, the channel access suspending duration may be a TXOP duration. In this case, the duration of the channel access suspended on the basis of the L-SIG may be updated. In this case, it is advantageous in that a sequence after the received frame can be better protected.

Alternatively, there may be a case where a TXOP duration and a BSS color are received from the U-SIG of the frame received by STA 1, and the received BSS color indicates non-intra-BSS, or the BSS color is not a BSS color corresponding to STA 1. Alternatively, there may be a case where STA 1 fails to successfully decode the U-SIG. In this case, STA 2 may resume channel access.

Alternatively, when information acquired from the U-SIG of the frame received by STA 1 indicates that the corresponding frame is a frame not received by STA 1, STA 2 may resume channel access. For example, when a PHY identifier acquired from the U-SIG is an ID corresponding to a future standard or an unrecognizable ID, STA 2 may resume channel access.

In addition, the case of receiving the U-SIG is described, but the same embodiment is also applicable to a case of receiving a HE PPDU and a case of receiving a HE-SIG-A. For example, the HE-SIG-A may include a TXOP duration and a BSS color, and accordingly, the operation as described above may be performed.

In addition, an STA-ID may be received from an EHT-SIG of the frame received by STA 1. If the received STA-ID is an indicator which needs to be received by STA 1, for example, if the STA-ID indicates STA 1, the STA-ID indicates a group to which STA 1 belongs, or the STA-ID indicates broadcast, STA 2 may continue the state of suspending the channel access.

Alternatively, an STA-ID may be received from an EHT-SIG of the frame received by STA 1. If the received STA-ID is an indicator not corresponding to STA 1, for example, if the STA-ID does not indicate an indicator corresponding to STA 1, the STA-ID does not indicate a group to which STA 1 belongs, or the STA-ID does not indicate broadcast, STA 2 may resume channel access. Alternatively, also in a case where STA 1 fails to successfully decode the EHT-SIG, STA 2 may resume channel access.

In addition, the case of receiving the EHT-SIG is described, but the same embodiment is also applicable to a case of receiving a HE PPDU and a case of receiving a HE-SIG-B. For example, the HE-SIG-B may include the STA-ID, and accordingly, the operation as described above may be performed.

In addition, a MAC header of the frame received by STA 1 may be received. If a receiver address (RA) or a destination address (DA) included in the received MAC header indicates a value which needs to be received by STA 1, for example, if the RA or DA indicates STA 1 or indicates a group to which STA 1 belongs to, or the STA-ID indicates broadcast, STA 2 may continue the state of suspending the channel access. In this case, the duration of the suspended channel access may be based on duration information included in the received MAC header. More specifically, the duration of the suspended channel access may be based on duration information indicated by a duration/ID field included in the received MAC header.

In addition, a MAC header of the frame received by STA 1 may be received. If an RA or DA included in the received MAC header is an indicator not corresponding to STA 1, for example, if the RA or DA does not indicate an indicator corresponding to STA 1, does not indicate a group to which STA 1 belongs to, or does not indicate broadcast, STA 2 may resume channel access. Alternatively, STA 1 may fail to receive all MAC headers. For example, STA 1 may fail to receive all MPDU included in an A-MPDU. In this case, STA 2 may resume channel access.

The suspending and resuming of the channel access, described in FIG. 12, may be sequentially performed according to an order of decoding as STA 1 starts receiving a frame (or PPDU) and sequentially performs decoding. The decoding order may be based on a PPDU format, a frame format, etc. For example, the decoding may be performed in the sequence of the L-SIG, the U-SIG, the EHT-SIG, and the MAC header (in a case of an EHT PPDU). Alternatively, the decoding may be performed in the sequence of the L-SIG, the HE-SIG-A, and the MAC header (in a case of a HE SU PPDU or a HE TB PPDU). Alternatively, the decoding may be performed in the sequence of the L-SIG, the HE-SIG-A, the HE-SIG-B, and the MAC header (in a case of a HE MU PPDU). Alternatively, the decoding may be performed in the sequence of the L-SIG and the MAC header (in a case of an 11a/g PPDU).

According to an embodiment of the present invention, the above-mentioned STA-ID may be a value indicating an intended receiver of a PPDU or a resource unit (RU). In addition, the STA-ID may be included in the EHT-SIG field, the HE-SIG-B field, or the like. In addition, the STA-ID may indicate a value corresponding to a single STA. For example, when multiple STAs are included in an MLD, the STA-ID may indicate a value corresponding to one of the multiple STAs. In addition, the STA-ID may be a value based on a MAC address or an AID of the STA.

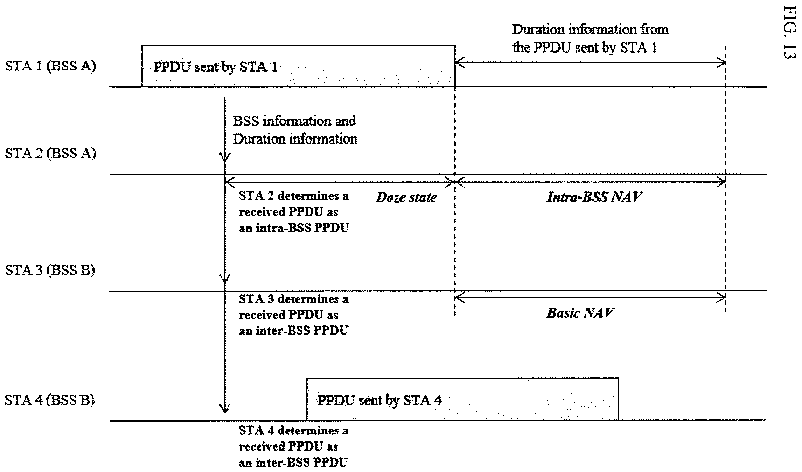

FIG. 13 illustrates an example of BSS classification and an operation based thereon according to an embodiment of the present invention.

According to an embodiment of the present invention, an STA may classify (or determine) a BSS on the basis of a received frame or a received PPDU. Classifying the BSS may include an operation of classifying whether the received frame or the received PPDU corresponds to a BSS to which the classifying STA belongs. Alternatively, classifying the BSS may mean an operation of classifying whether the received frame or the received PPDU has been transmitted from a BSS to which the classifying STA belongs. In addition, classifying the BSS may include an operation of classifying whether the received frame or the received PPDU corresponds to a BSS to which the classifying STA does not belong. Alternatively, classifying the BSS may mean an operation of classifying whether the received frame or the received PPDU has been transmitted from a BSS to which the classifying STA does not belong. In addition, classifying the BSS may include an operation of classifying a BSS to which the received frame or the received PPDU belongs. Alternatively, classifying the BSS may mean an operation of classifying a BSS from which the received frame or the received PPDU has been transmitted. According to an embodiment of the present invention, a BSS to which the classifying STA belongs may be called an intra-BSS. Alternatively, BSSs including a BSS to which the classifying STA belongs may be called an intra-BSS. In addition, a BSS other than the intra-BSS may be called an inter-BSS. Alternatively, a BSS other than the intra-BSS may be an inter-BSS or an unclassified BSS. Alternatively, the inter-BSS may include the unclassified BSS. In addition, a BSS to which the classifying STA does not belong may be called an inter-BSS.

According to an embodiment, when it is determined that the received frame or the received PPDU corresponds to the intra-BSS or has been transmitted from the intra-BSS, the received frame and the received PPDU may be called an intra-BSS frame and an intra-BSS PPDU, respectively. In addition, when it is determined that the received frame or the received PPDU corresponds to the inter-BSS or has been transmitted from the inter-BSS, the received frame and the received PPDU may be called an inter-BSS frame and an inter-BSS PPDU, respectively. In addition, a PPDU including the intra-BSS frame may be an intra-BSS PPDU. In addition, a PPDU including the inter-BSS frame may be an inter-BSS PPDU.

According to an embodiment of the present invention, a BSS may be classified on the basis of one or more BSS classification conditions. For example, the BSS may be classified according to whether at least one of the one or more BSS classification conditions is satisfied.

The BSS classification condition may include a condition based on a BSS color. The BSS color may be an identifier for a BSS. In addition, the BSS color may be included in a preamble of a PPDU, more specifically, a signaling field (e.g., a HE-SIG-A field, a U-SIG field, or a VHT-SIG-A field). In addition, the BSS color may be included in TXVECTOR transferred from a MAC layer to a PHY layer of a transmitter. In addition, the BSS color may be included in RXVECTOR transferred from a PHY layer to a MAC layer of a receiver. Parameters included in TXVECTOR and RXVECTOR may be called a TXVECTOR parameter and an RXVECTOR parameter, respectively. In addition, the BSS color may be included in the TXVECTOR parameter or the RXVECTOR parameter. In addition, a BSS color configured by an AP may be notified to STAs. According to an embodiment, the BSS may be classified on the basis of a BSS color included in a received PPDU. If a BSS color included in a received PPDU differs from a BSS color of a BSS corresponding to an STA, the STA may classify the received PPDU as an inter-BSS PPDU. Alternatively, if a BSS color included in a received PPDU differs from a BSS color of a BSS corresponding to the STA and has a value other than 0, the STA may classify the received PPDU as an inter-BSS PPDU. In addition, if a BSS color included in a received PPDU is identical to a BSS color of a BSS corresponding to the STA, the STA may classify the received PPDU as an intra-BSS PPDU.

The BSS classification condition may include a condition based on a MAC address. The MAC address may be included in a MAC header of a frame. In addition, the MAC address may include a receiver address (RA), a transmitter address (TA), a BSSID, a source address (SA), a designation address (DA), etc. According to an embodiment, a BSS may be classified on the basis of a MAC address included in a received frame. If a MAC address included in a received frame differs from a BSSID of a BSS corresponding to an STA, the received frame may be classified as an inter-BSS frame. More specifically, if all MAC addresses included in the received frame differ from a BSSID of a BSS corresponding to the STA, the received frame may be classified as an inter-BSS frame. In addition, if a MAC address included in the received frame is identical to a BSSID of a BSS corresponding to the STA, the received frame may be classified as an intra-BSS frame. More specifically, if at least one of MAC addresses included in the received frame is identical to a BSSID of a BSS corresponding to the STA, the received frame may be classified as an intra-BSS frame.

The corresponding BSS may include an BSS to with which an STA is associated. In addition, the corresponding BSS may include a BSS included the same multiple-BSSID set as that of a BSS with which the STA is associated. In addition, the corresponding BSS may include a BSS included in the same co-hosted BSSID set as that of a BSS with which the STA is associated. In addition, one or more BSSs included in the same multiple-BSSID set or the same co-hosted BSSID set may transfer information relating to the one or more BSSs through a frame.

The BSS classification condition may include a condition based on a partial AID field value included in a VHT PPDU. The partial AID field may be included in a preamble of the VHT PPDU. In addition, the partial AID field may be included in a VHT-SIG-A field included in the VHT PPDU. According to an embodiment, the partial AID field may indicate a part of a BSS color. For example, when a partial BSS color function is used, the partial AID field may indicate a part of the BSS color. Alternatively, when an AID assignment rule is used, the partial AID field may indicate a part of the BSS color. The AID assignment rule may be a method for assigning an AID on the basis of a BSS color. In addition, when a group ID field included in the VHT-SIG-A field of the VHT PPDU has a pre-configured value (for example, when the group ID field is configured as 63), the partial AID field may indicate a part of the BSS color. According to an embodiment, when a partial AID field of a received PPDU indicates a part of the BSS color and a received partial AID field value differs from the part of the BSS color corresponding to the receiving STA, the received PPDU may be classified as an inter-BSS PPDU.

In addition, when a partial AID field of a received PPDU indicates a part of the BSS color and a received partial AID field value is identical to the part of the BSS color corresponding to the receiving STA, the received PPDU may be classified as an intra-BSS PPDU. In addition, in this case, the part of the BSS color may be 4 LSBs of the BSS color. According to another embodiment, the partial AID field may indicate a part of a BSSID. For example, when a group ID field included in the VHT-SIG-A field of the VHT PPDU has a pre-configured value (for example, when a group ID field is configured as 0), the partial AID field may indicate a part of a BSSID. According to an embodiment, when a partial AID field of a received PPDU indicates a part of the BSSID and a received partial AID field value differs from the part of the BSSID corresponding to the receiving STA, the received PPDU may be classified as an inter-BSS PPDU. In addition, when a partial AID field of a received PPDU indicates a part of the BSSID and a received partial AID field value is identical to the part of the BSSID corresponding to the receiving STA, the received PPDU may be classified as an intra-BSS PPDU. In addition, in this case, the part of the BSSID may be 9 MSBs of the BSSID. In addition, the partial AID field value may be included in TXVECTOR parameter PARTIAL_AID or RXVECTOR parameter PARTIAL_AID. In addition, the group ID field value may be included in TXVECTOR parameter GROUP_ID and RXVECTOR parameter GROUP_ID.

The BSS classification condition may include a condition for receiving a PPDU of a pre-configured condition by an AP. For example, the PPDU of the pre-configured condition may include a downlink PPDU. According to an embodiment, the downlink PPDU may include a VHT MU PPDU. In addition, the downlink PPDU may include a PPDU in which signaling indicating either an uplink or a downlink is configured as a pre-configured value. The signaling indicating either the uplink or the downlink may be included in a signaling field of a HE PPDU. Alternatively, the signaling indicating either the uplink or the downlink may be included in a U-SIG. The U-SIG may be included in a preamble of an EHT PPDU or a PPDU after the EHT standard.

In addition, there may be a case where classification into an intra-BSS PPDU or an inter-BSS PPDU cannot be made. For example, when both the condition for making classification into an intra-BSS PPDU and the condition for making classification into an inter-BSS PPDU, which are described above, fail to be satisfied, classification into the intra-BSS PPDU or the inter-BSS PPDU cannot be made.

In addition, in a case where classification results upon multiple conditions do not match when classifying the BSS, a final result may be determined according to a pre-configured condition. For example, when a result upon the condition based on the BSS color and a result upon the condition based on the MAC address do not match, the result upon the condition based on the MAC address is prioritized, or the result upon the condition based on the MAC address may be determined as a final result. Alternatively, when both the condition for making classification into the intra-BSS PPDU and the condition for making classification into the inter-BSS PPDU are satisfied, classification into an intra-BSS PPDU can be made.

According to an embodiment of the present invention, an STA may perform an operation based on a classified BSS. The operation based on the classified BSS may include an intra-PPDU power save operation. The intra-PPDU power save operation may be a power save operation based on a received PPDU. When a pre-configured condition is satisfied, the intra-PPDU power save operation may be performed. The pre-configured condition may include a condition for classifying the received PPDU as an intra-BSS PPDU. In addition, the pre-configured condition may include a condition in which an intended receiver of the received PPDU is not an STA having received the PPDU. For example, when an ID or an address included in a PPDU does not correspond to an STA having received the PPDU, an intended receiver of the PPDU may not be the STA having received the PPDU. The ID may be included in a preamble of a PPDU. For example, the ID may be STA_ID included in a preamble of a PPDU. In addition, STA_ID may be included in a HE MU PPDU or an EHT PPDU. In addition, the address may be the above-described MAC address. In addition, when the signaling indicating either the uplink or the downlink, which is included in the received PPDU, indicates the uplink, the intended receiver of the PPDU may not be the STA having received the PPDU. In addition, when a configuration of the received PPDU is not supported by the STA having received the PPDU, the intended receiver of the PPDU may not be the STA having received the PPDU. The configuration of the received PPDU may include an MCS of the PPDU, the number of spatial streams, a channel width, etc. In addition, when the configuration of the received PPDU is not supported by the STA having received the PPDU, the PHY-RXEND.indication (UnsupportedRate) primitive may be received. In addition, when the received PPDU has a pre-configured format, the intended receiver of the PPDU may not be the STA having received the PPDU. The pre-configured format may include a TB PPDU. The TB PPDU may include a HE TB PPDU and an EHT TB PPDU. In addition, the TB PPDU may be a PPDU transmitted as a response to a triggering frame. The triggering frame may include a trigger frame. The triggering frame may include a frame including information to be triggered. The information to be triggered may be included in a MAC header, for example, an A-control field. In addition, the information to be triggered or information included in the trigger frame may include the length of a responding PPDU, an RU to be used during responding, a PHY configuration and a MAC configuration to be used during responding, etc. The intra-PPDU power save operation may be an operation of entering into a doze state by the end of the received PPDU. In another embodiment, when it is determined that an intended receiver of a received PPDU or frame is not an STA, the STA may suspend reception or decoding of the PPDU or frame.

The operation based on the classified BSS may include an operation of setting up (or updating) a NAV. According to an embodiment, an STA may operate one or more NAVs. In addition, when an STA receives a PPDU or a frame, the STA may set up a NAV corresponding to a BSS classified on the basis of the received PPDU or the received frame. For example, an intra-BSS VAN may be a NAV corresponding to an intra-BSS PPDU. In addition, a basic NAV may be a NAV corresponding to a PPDU other than the intra-BSS PPDU. Alternatively, the basic NAV may be a NAV corresponding to an inter-BSS PPDU. In addition, when a NAV is set up on the basis of the received PPDU or the received frame, duration information included in the received PPDU or the received frame may be used. The duration information may include a TXOP. The TXOP may mean a value included in a TXOP field. The TXOP field may be included in a preamble of a PPDU. For example, the TXOP field may be included in a HE-SIG-A field of a HE PPDU. Alternatively, the TXOP field may be included in a U-SIG field of an ETH PPDU or a PPDU of a standard after the EHT. In addition, the duration information may be included in a MAC header. For example, the duration information may be included in a duration/ID field included in the MAC header.

The operation based on the classified BSS may include a spatial reuse operation. In addition, the operation based on the classified BSS may include a channel access operation. The spatial reuse operation may be a channel access operation. When an STA receives a PPDU or a frame and a pre-configured condition is satisfied, the spatial reuse operation may be performed. The pre-configured condition may include a condition in which a received PPDU or a received frame corresponds to an inter-BSS. In addition, the pre-configured condition may include a condition in which a signal strength of the received PPDU or the received frame is less than a threshold. For example, the threshold may be variable. In addition, the threshold may be a threshold for an OBSS PD-based spatial reuse operation. In addition, the threshold may be a value equal to or greater than a CCA threshold. In addition, the threshold may be a value based on power at transmission is to be performed. The spatial reuse operation may include an operation of transmitting a PPDU. In addition, the spatial reuse operation may include an operation of resetting a PHY. For example, the PHY resetting operation may be an operation of issuing the PHY-CCARESET.request primitive. In addition, the spatial reuse operation may include an operation of not setting up a NAV on the basis of a received PPDU or a received frame. If an STA performs the spatial reuse operation, the STA may transmit a PPDU while the received PPDU or the received frame is transmitted or received.

Referring to FIG. 13, there may be BSS A and BSS B, and BSS A and BSS B may be different from each other. In addition, each of BSS A and BSS B may correspond to an inter-BSS. That is, a PPDU or a frame transmitted by an STA associated with BSS A in BSS B may be classified as an inter-BSS PPDU or an inter-BSS frame. In addition, there may be STA 1 and STA 2 belonging to BSS A (or associated with an AP operating BSS A). There may be STA 3 and STA 4 belonging to BSS B (or associated with an AP operating BSS B). Referring to FIG. 13, STA 1 may transmit a PPDU. In addition, a PPDU transmitted by STA 1 may include information on a BSS. For example, the information on the BSS may be the above-described information for classifying the BSS. In addition, a PPDU transmitted by STA 1 may include duration information.

STA 2 may receive the PPDU transmitted by STA 1 and classify a BSS for the PPDU. In addition, STA 2 and STA 1 belong to BSS A, and thus the PPDU received by STA 2 may be classified as an inter-BSS PPDU. In addition, the PPDU received by STA 2 may be a UL PPDU or a PPDU, the intended receiver of which is not the STA. Accordingly, according to the above-described embodiment, STA 2 may perform intra-PPDU power saving. Referring to FIG. 13, STA 2 may enter into a doze state by the end of the received PPDU. In addition, STA 2 may set up a NAV on the basis of duration information included in the received PPDU. STA 2 has classified the received PPDU as the intra-BSS PPDU, the NAV may be set up as an intra-BSS NAV.

STA 3 may receive the PPDU transmitted by STA 1 and classify a BSS for the PPDU. In addition, STA 3 and STA 1 belong to BSS B and BSS A, respectively, and thus the PPDU received by STA 3 may be classified as an inter-BSS PPDU. In addition, STA 3 may set up a NAV on the basis of duration information included in the received PPDU. STA 3 has classified the received PPDU as the inter-BSS PPDU, the NAV may be set up as a basic NAV.

STA 4 may receive the PPDU transmitted by STA 1 and classify a BSS for the PPDU. In addition, STA 4 and STA 1 belong to BSS B and BSS A, respectively, and thus the PPDU received by STA 4 may be classified as an inter-BSS PPDU. In addition, a signal strength of the PPDU received by STA 4 may be less than a threshold. Accordingly, the PPDU received by STA 4 has been classified as the inter-BSS PPDU and the signal strength of the PPDU received by STA 4 is less than the threshold, and thus STA 4 may perform a spatial reuse operation. Accordingly, STA 4 may perform channel access and a backoff procedure, and start performing transmission. For example, STA 4 may start performing transmission at a time point at which the PPDU transmitted by STA 1 does not end.

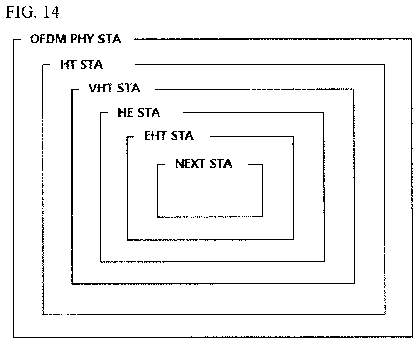

FIG. 14 illustrates a function of a station according to an embodiment of the present disclosure.

According to an embodiment of the present disclosure, a station following a wireless LAN standard may include a function of a previous wireless LAN standard. This inclusion is intended for backward compatibility. For example, a station supporting a particular wireless LAN standard may support a previous generation wireless LAN standard function and additionally support a new function. For example, an HT station may support a basic function of an OFDM PHY station. Therefore, an HT station may be classified as an OFDM PHY station. In addition, an HT station may support an additional function not supported by an OFDM PHY station as well as a function of an OFDM PHY station. A VHT station may support a function not supported by an HT station while supporting a basic function of an HT station. A VHT station may be classified as an HT station. In addition, a HE station may support a function not supported by a VHT station while supporting a basic function of a VHT station. A HE station may be classified as a VHT station. In addition, an EHT STA may also be a HE STA. In addition, an EHT station may support a function not supported by a HE station while supporting a basic function of a HE station. In addition, an EHT station may be classified as a HE station. In addition, a wireless LAN standard after an EHT standard may be newly defined. In the present disclosure, the standard after the EHT standard is called a NEXT standard, and a station following the NEXT standard is called a NEXT station. A NEXT station may support a function not supported by an EHT station while supporting a basic function of an EHT station. A NEXT station may be classified as an EHT station.

FIG. 14 is a diagram illustrating a relation between stations supporting respective wireless LAN standards. Referring to FIG. 11, if a station is an EHT station, the station may be a HE station, a VHT station, an HT station, and an OFDM PHY station. In addition, if a station is a NEXT station, the station may be an EHT station, a HE station, a VHT station, an HT station, and an OFDM PHY station.

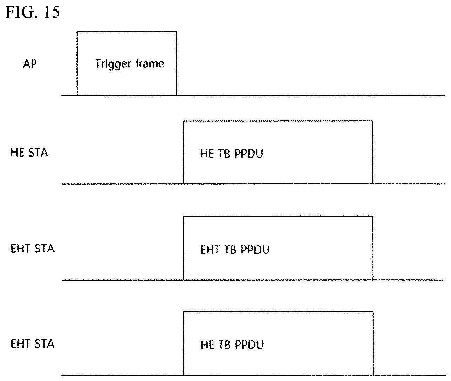

FIG. 15 illustrates a UL MU operation according to an embodiment of the present disclosure.

In an embodiment of the present disclosure, an access point may transmit a frame soliciting multi-user (MU) transmission. Such a frame is called a triggering frame. One or more stations having received triggering frames may perform uplink transmission, based on the triggering frames. Specifically, one or more stations having received triggering frames may transmit response frames for the frames. The interval (inter-space) between a PPDU including a triggering frame and a PPDU used for uplink transmission may be an SIFS. Specifically, multiple stations may receive triggering frames and simultaneously transmit immediate responses. An immediate response may indicate that the interval between a previously received PPDU and a PPDU including a response is an SIFS.

A triggering frame is a type of control frame, and may be a trigger frame including trigger information. In addition, a triggering frame may be a frame including trigger information in a MAC header. The trigger information may be triggered response scheduling (TRS) included in an HT control field, a control subfield, or an A-control subfield of a MAC header. In addition, trigger information may be information causing transmission of a TB PPDU.

A TB PPDU is a PPDU format including a response frame for a triggering frame. A TB PPDU may include a HE TB PPDU and an EHT TB PPDU. In addition, a TB PPDU may include a NEXT TB PPDU defined in a NEXT wireless LAN standard. A HE TB PPDU may include a preamble including L-STF, L-LTF, L-SIG, RL-SIG, HE-SIG-A, HE-STF, and HE-LTF in sequence, and may include data and a packet extension (PE) following the preamble. In addition, an EHT TB PPDU and a NEXT TB PPDU may each include a preamble including L-STF, L-LTF, L-SIG, RL-SIG, U-SIG, (EHT-/NEXT-)STF, and (EHT-/NEXT-)LTF in sequence, and may include data and a packet extension (PE) following the preamble.

A triggering frame may include information required for TB PPDU transmission. When a value of a type subfield (B3 B2) of a MAC frame is $01_b$, and a value of a subtype subfield (B7 B6 B5 B4) is $0010_b$, the frame may represent a MAC frame trigger frame.

When multiple stations responding to trigger frames transmit different formats of TB PPDUs, an access point may have difficulty in receiving the TB PPDUs. In addition, when preambles of PPDUs transmitted by multiple stations are different from each other, an access point may have difficulty in receiving TB PPDUs. Particularly, when RUs in which different formats of TB PPDUs are transmitted overlap with each other, an access point may have difficulty in receiving the TB PPDUs. Therefore, multiple stations that transmits responses for one triggering frame may use the same format of TB PPDUs. In addition, multiple stations that transmits responses for one triggering frame may transmit TB PPDUs having the same preamble information.

As described with reference to FIG. 14, a HE station may transmit a HE TB PPDU. In addition, an EHT station may transmit an EHT TB PPDU or a HE TB PPDU. In addition, a NEXT station may transmit a NEXT TB PPDU, an EHT TB PPDU, or a HE TB PPDU.

In an embodiment of FIG. 15, an AP transmits a trigger frame scheduling transmission of a HE station (HE STA) and transmission of an EHT station (EHT STA). When the trigger frame does not indicate a format of a TB PPDU to be transmitted for a response for the trigger frame, the HE station (HE STA) and the EHT station (EHT STA) or different EHT stations (EHT STAs) may transmit different formats of TB PPDUs. Accordingly, TB PPDU transmission may fail and a transmission occasion may be wasted. For convenience of explanation, trigger frames defined in the HE, EHT, and NEXT standards are called a HE trigger frame, an EHT trigger frame, and a NEXT trigger frame, respectively. In addition, TRS defined in the HE, EHT, and NEXT standards are called HE TRS, EHT TRS, and NEXT TRS, respectively. A format of a trigger frame will be explained with reference to FIG. 13.

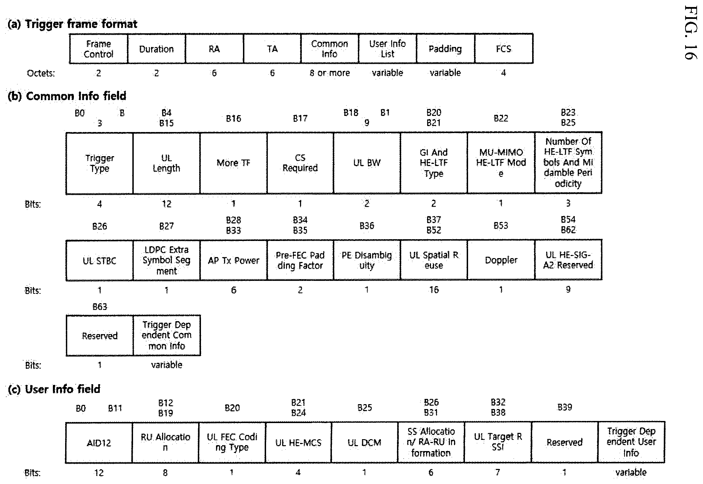

FIG. 16 illustrates a format of a trigger frame and a subfield included in a trigger frame according to an embodiment of the present disclosure.

Specifically, FIG. 16A shows a format of a trigger frame, FIG. 16B illustrates a common info field of a trigger frame, and FIG. 16C shows a user info field of a trigger frame. A MAC header of a trigger frame includes a frame control field, a duration field, and an address field. The address field includes a RA field and a TA field. In addition, the trigger frame includes a common info field and a user info list field. The common info field includes information for all stations triggered by the trigger frame. In addition, the user info list field may include a user info field. In a specific embodiment, a particular type of trigger frame may not include the user info list field. In addition, the trigger frame may include a padding field and an FCS field. The padding field may function to extend the length of the frame to ensure a time required for an STA receiving trigger frame to prepare a response, and may optionally exist.

The common info field may include a trigger type subfield. The trigger type subfield may identify a trigger frame variant. The trigger frame may represent the type of the trigger frame through a value of the trigger type subfield. In addition, according to the trigger type subfield, information included in a trigger dependent common info subfield and a trigger dependent user info subfield and the length of the trigger dependent common info subfield and the trigger dependent user info subfield may be determined. For example, the trigger type subfield may be expressed by bits including B0 to B3 bits of the common info field.

In addition, the common info field may include a UL length subfield. The UL length subfield may include information on the length of a TB PPDU responding to the trigger frame. Alternatively, the UL length subfield may include information on the length of a frame responding to the trigger frame. Alternatively, the UL length subfield may indicate a value to be included in a length subfield of L-SIG of a TB PPDU responding to the trigger frame. Therefore, an STA responding using a TB PPDU may configure the length subfield of L-SIG of the TB PPDU, based on a value of the UL length subfield included in a received trigger frame. More specifically, an STA responding using a TB PPDU may configure the length subfield of L-SIG of the TB PPDU to be a value of the UL length subfield included in a received trigger frame. For example, the UL length subfield may be expressed by B4 to B15 bits of the common info field.

In addition, the common info field may include a UL BW subfield. The UL BW subfield may indicate a bandwidth (BW) value included in a signaling field, for example, a HE-SIG-A field or a U-SIG field, of a TB PPDU responding to the trigger frame. In addition, the UL BW subfield may indicate a maximum bandwidth of a TB PPDU responding to the trigger frame.

In addition, the common info field may include information to be included in a signaling field, for example, a HE-SIG-A field or a U-SIG field, of a TB PPDU responding to the trigger frame.

The user info field may include an AID12 subfield. The AID12 subfield may function to indicate an intended receiver of the user info field including the AID12 subfield or a function of the user info field. Therefore, the AID12 subfield may function to indicate an intended receiver of the trigger frame including the AID12 subfield or a function of the trigger frame. For example, if a value of the AID12 subfield is a pre-configured value, this may indicate that the user info field indicates a random access resource unit (RA-RU). More specifically, if a value of the AID12 subfield is 0, the user info field may indicate a RA-RU for a connected (associated) station. In addition, if a value of the AID12 subfield is 2045, the user info field may indicate a RA-RU for an unconnected (unassociated) station. In addition, it may be noted that a station corresponding to an STAID, for example, an association ID (AID), which is indicated by a value of the AID12 subfield, is triggered to respond by the user info field including the AID12 subfield or the trigger frame including the AID12 subfield. For example, the AID12 subfield may express an AID or 12 LSBs of the AID. A station corresponding to a value of the AID12 subfield may respond to the trigger frame by using a TB PPDU. In addition, a value of the AID12 subfield may be in a range of 1 to 2007 (both inclusive). In addition, if the AID12 subfield has a pre-configured value, for example, 2046, this may indicate that a corresponding RU has not been allocated to any of stations. In addition, if the AID12 subfield has a pre-configured value, for example, 4095, this may indicate that the padding of the trigger frame starts.

In addition, pieces of information of the user info field including the AID12 subfield may be pieces of information corresponding to a station indicated by the AID12 subfield. For example, a RU allocation subfield may indicate the size and position of a RU. In addition, a value of the RU allocation subfield of the user info field including the AID12 subfield may be information corresponding to a station indicated by the AID12 subfield. In addition, the user info field may indicate a coding method (UL FEC coding type), a modulation method (UL HE-MCS or UL DCM), and transmission power (UL target RSSI), which are used for a response for the trigger frame including the user info field.

As described above, there may occur a problem according to which PPDU formats which TB PPDUs simultaneously transmitted as responses for a trigger frame have. A triggering frame transmission method related to the above problem will be described with reference to FIG. 14.

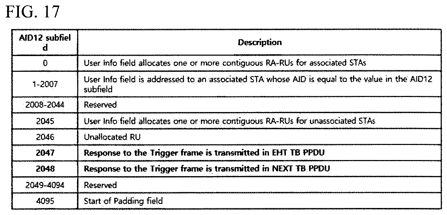

FIG. 17 illustrates information indicated by a value of an AID12 subfield of a trigger frame according to an embodiment of the present disclosure.

An EHT station according to an embodiment of the present disclosure may selectively transmit a HE TB PPDU or EHT TB PPDU. In addition, a NEXT station may selectively transmit a HE TB PPDU, an EHT TB PPDU, and a NEXT TB PPDU. Accordingly, stations having multiple wireless LAN standards may be scheduled by one frame or one PPDU. Accordingly, the use efficiency of a transmission medium may be increased. For example, a HE station not supporting the EHT standard and an EHT station may respond through a HE TB PPDU by using one frame.

In addition, information for selecting a TB PPDU format may be included in a trigger frame, TRS, a PPDU including a trigger frame, or a PPDU including TRS.

According to an embodiment of the present disclosure, information on a responding TB PPDU format may exist in a MAC level. According to an embodiment of the present disclosure, a trigger frame may be classified as a HE trigger frame, an EHT trigger frame, and a NEXT trigger frame. In addition, respective responses triggered by a HE trigger frame, an EHT trigger frame, and a NEXT trigger frame may be provided as a HE TB PPDU, an EHT TB PPDU, and a NEXT TB PPDU.

In addition, classifying as a HE trigger frame, an EHT trigger frame, and a NEXT trigger frame may have the same meaning of classifying a TB PPDU format used to respond to the trigger frame as a HE TB PPDU, an EHT TB PPDU, and a NEXT TB PPDU, respectively. That is, a format of a TB PPDU for a trigger frame may vary according to a format of the trigger frame, and a next generation trigger frame may indicate transmission of a previous generation TB PPDU together. That is, an EHT trigger frame may indicate both transmission of a HE TB PPDU and transmission of an EHT TB PPDU. However, a HE trigger frame may be unable to indicate transmission of an EHT TB PPDU.

In a specific embodiment, whether a trigger frame corresponds to a HE trigger frame, an EHT trigger frame, or a NEXT trigger frame may be determined according to a frame control field of a MAC header included in the trigger frame. For example, whether a trigger frame corresponds to a HE trigger frame, an EHT trigger frame, or a NEXT trigger frame may be determined according to at least one of a type subfield, a subtype subfield, or a control frame extension subfield included in a frame control field of a MAC header included in the trigger frame. For example, when a type subfield, a subtype subfield, or a control frame extension subfield included in a frame control field of a MAC header included in a trigger frame has a first value, the trigger frame may be classified as a HE trigger frame. In addition, when a type subfield, a subtype subfield, or a control frame extension subfield included in a frame control field of a MAC header included in a trigger frame has a second value, the trigger frame may be classified as an EHT trigger frame. In addition, when a type subfield, a subtype subfield, or a control frame extension subfield included in a frame control field of a MAC header included in a trigger frame has a third value, the trigger frame may be classified as a NEXT trigger frame. When a value of a type subfield of a frame control field of a MAC header is $01_b$, and a value of a subtype subfield is $0010_b$, the trigger frame may be classified as a HE trigger frame. A type subfield, a subtype subfield, and a control frame extension subfield are limited to two bits, four bits, and four bits, respectively. Therefore, such an embodiment has a shortcoming in that a type usable in the future is limited by use of a limited value of a bit field.

In another specific embodiment, whether a trigger frame corresponds to a HE trigger frame, an EHT trigger frame, or a NEXT trigger frame may be determined according to a common info field included in the trigger frame. For example, when a value of a trigger type subfield of a common info field of a trigger frame is a first value, the trigger frame may be classified as a HE trigger frame. When a value of a trigger type subfield of a common info field of a trigger frame is a second value, the trigger frame may be classified as an EHT trigger frame. When a value of a trigger type subfield of a common info field of a trigger frame is a third value, the trigger frame may be classified as a NEXT trigger frame. Specifically, when a value of a trigger type subfield of a common info field of a trigger frame is 0 to 7, the trigger frame may be classified as a HE trigger frame. In addition, when a value of a trigger type subfield of a common info field of a trigger frame is not 0 to 7, the trigger frame may be classified as an EHT trigger frame or a NEXT trigger frame. Because the number of bits of a trigger type subfield is limited, such an embodiment has a shortcoming in that a trigger type usable in the future is limited by use of a limited value of a bit field.

In another specific embodiment, whether a trigger frame corresponds to a HE trigger frame, an EHT trigger frame, or a NEXT trigger frame may be determined according to a UL length field included in the trigger frame. For example, when a remainder obtained by dividing, by 3, a value of a UL length field of a trigger frame is a first value, the trigger frame may be classified as a HE trigger frame. When a remainder obtained by dividing, by 3, a value of a UL length field of a trigger frame is a second value, the trigger frame may be classified as an EHT trigger frame. When a remainder obtained by dividing, by 3, a value of a UL length field of a trigger frame is a third value, the trigger frame may be classified as a NEXT trigger frame. When a remainder obtained by dividing, by 3, a value of a UL length field of a trigger frame is not 0, the trigger frame may be classified as a HE trigger frame. When a remainder obtained by dividing, by 3, a value of a UL length field of a trigger frame is 1, the trigger frame may be classified as a HE trigger frame. When a remainder obtained by dividing, by 3, a value of a UL length field of a trigger frame is 0, the trigger frame may be classified as an EHT trigger frame or a NEXT trigger frame. For example, whether a trigger frame corresponds to a HE trigger frame, an EHT trigger frame, or a NEXT trigger frame may be determined according to at least one of a format identifier, a PHY identifier, and TB PPDU format signaling of the trigger frame as well as a value of a UL length field of the trigger frame.

In another specific embodiment, whether a trigger frame corresponds to a HE trigger frame, an EHT trigger frame, or a NEXT trigger frame may be determined according to a user info field included in the trigger frame. Specifically, whether a trigger frame corresponds to a HE trigger frame, an EHT trigger frame, or a NEXT trigger frame may be determined according to a value of an AID12 subfield of a user info field of the trigger frame. For example, whether a trigger frame corresponds to a HE trigger frame, an EHT trigger frame, or a NEXT trigger frame may be determined according to whether a value of an AID12 subfield of a user info field of the trigger frame is a pre-designated value. A user info field including an AID12 subfield indicating the type of a trigger frame may be the first user info field in a user info field list. A user info field including an AID12 subfield indicating the type of a trigger frame may be positioned before a user info field including an AID12 subfield indicating an AID of a station. Therefore, a station receiving a trigger frame may early determine the type of the trigger frame. In another specific embodiment, a user info field including an AID12 subfield indicating the type of a trigger frame may be positioned after a user info field for a HE station in a user info field list. Therefore, a problem occurring due to a legacy station, that is, a HE station failing in determining the meaning of a value of an AID12 subfield may be prevented. In addition, a user info field including an AID12 subfield indicating the type of a trigger frame may not include a subfield other than the AID 12 subfield. The user info field is designed to indicate a trigger frame type, and thus may not require information other than a trigger frame type. In such an embodiment, the length of a user info field changes according to a value of an AID12 subfield. FIG. 17 illustrates a meaning indicated by a value of an AID12 subfield when such an embodiment is applied. When a value of an AID12 subfield is a first value, the AID12 subfield may indicate that a trigger frame including the AID12 subfield triggers transmission of an EHT TB PPDU. The first value may be 2047. When a value of an AID12 subfield is a second value, the AID12 subfield may indicate that a trigger frame including the AID12 subfield triggers transmission of a NEXT TB PPDU. The second value may be 2048.

In another specific embodiment, a station may determine the format of a TB PPDU transmitted as a response for a trigger frame, according to the position of a user info field triggering the station. Specifically, a station may determine the format of a TB PPDU transmitted as a response for a trigger frame, based on whether a user info field triggering the station is positioned after a user info field including an AID12 field having a pre-designated value. The station may determine the format of a TB PPDU transmitted as a response for a trigger frame, based on whether a user info field triggering the station is positioned after a user info field including an AID12 field having the first value, and whether the user info field is positioned after a user info field including an AID12 field having the second value. In an embodiment of FIG. 17, when a user info field triggering a station is positioned after a user info field including an AID12 field having 2047, the station may transmit an EHT TB PPDU as a response for a trigger frame. In addition, when a user info field triggering a station is positioned after a user info field including an AID12 field having 2048, the station may transmit a NEXT TB PPDU as a response for a trigger frame. In addition, when a user info field triggering a station is positioned after a user info field including an AID12 field having 2047 and a user info field including an AID12 field having 2048, the station may transmit a NEXT TB PPDU as a response for a trigger frame. In addition, when a user info field triggering a station is positioned before a user info field including an AID12 field having 2047 and a user info field including an AID12 field having 2048, the station may transmit a HE TB PPDU as a response for a trigger frame.

Whether a trigger frame corresponds to a HE trigger frame, an EHT trigger frame, or a NEXT trigger frame may be determined by a subfield of a user info field other than an AID12 subfield.

Whether a trigger frame corresponds to a HE trigger frame, an EHT trigger frame, or a NEXT trigger frame may be determined according to a padding field of the trigger frame. For example, whether a trigger frame corresponds to a HE trigger frame, an EHT trigger frame, or a NEXT trigger frame may be determined according to whether a padding field of the trigger frame includes a pre-designated value.

In addition, the embodiments described above may be applied in combination. For example, factors, described above, affecting determination of whether a trigger frame is a HE trigger frame, an EHT trigger frame, or a NEXT trigger frame may be used in combination for the determination.

In addition, embodiments described above may be used to determine the format of a TB PPDU to be transmitted as a response for a TRS field.

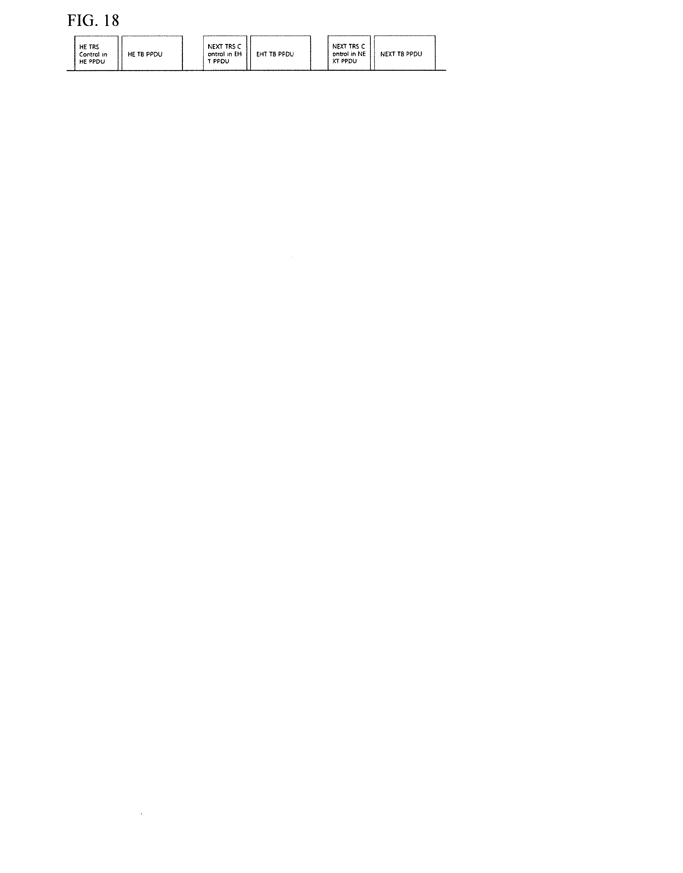

FIG. 18 illustrates a UL MU operation according to an embodiment of the present disclosure.

As described above, a trigger frame may include TRS in a MAC frame header. TRS may be included in an HT control field as described above. Specifically, when an HT control field includes an A-control field, the HT control field may include TRS. In addition, TRS may be included in a TRS control field. In an A-control field, control list fields may be continuously positioned. The control list field may include TRS.

A station corresponding to an intended receiver of a MAC frame including TRS may transmit a PPDU, based on a TRS field. The TRS may include information (UL data symbols) relating to the length of a PPDU or a frame to be transmitted by the station as a response for the MAC frame including the TRS. The TRS may include information (AP Tx power and UL target RSSI) relating to power of response transmission for the MAC frame including the TRS, the position and size (RU allocation) of a RU to be used to transmit a response for the MAC frame including the TRS, and information (UL HE-MCS) relating to a method of modulating response transmission for the MAC frame including the TRS.

TRS may be defined for each wireless LAN standard. A station having received a MAC frame including TRS may determine the format of a TB PPDU to be transmitted as a response for the TRS according to the format of the TRS, that is, which wireless LAN standard in which the TRS is defined. Specifically, when a station receives HE TRS, the station may transmit a HE TB PPDU as a response for the TRS. In addition, when a station receives EHT TRS, the station may transmit an EHT TB PPDU as a response for the TRS. In addition, when a station receives NEXT TRS, the station may transmit a NEXT TB PPDU as a response for the TRS. The station may determine which wireless LAN standard in which the TRS is defined, based on a control ID subfield of an A-control subfield. TRS may be classified as HE TRS and TRS that is not HE TRS.

The format of TRS may be determined according to whether an HT control field including the TRS is a HE variant, an EHT variant, or a NEXT variant. When an HT control field including TRS is an EHT variant, the TRS may be EHT TRS. In addition, when an HT control field including TRS is a NEXT variant, the TRS may be NEXT TRS. In addition, the format of TRS may be determined according to whether an HT control field including the TRS is a HE variant, an EHT variant, or a NEXT variant according to which value a pre-designated bit among bits of the HT control field has. For example, when a value of the first and second bits (B0, B1) of an HT control field is $11_b$, the HT control field may be a HE variant. In addition, whether an HT control field is a HE variant, an EHT variant, or a NEXT variant may be determined based on the first and second bits (B0, B1) of the HT control field and an additional bit, for example, the 32nd bit (B31).

When TRS is included in a HE PPDU in an embodiment of FIG. 18, a station having received the HE PPDU transmits a HE TB PPDU as a response for the TRS. When TRS is included in an EHT PPDU, a station having received the EHT PPDU transmits an EHT TB PPDU as a response for the TRS. When TRS is included in a NEXT PPDU, a station having received the NEXT PPDU transmits a NEXT TB PPDU as a response for the TRS.

In addition, information indicated by a subfield included in TRS may vary according to a PPDU format including the TRS. When TRS is included in a HE PPDU, an MCS-related subfield included in the TRS, for example, a UL HE-MCS subfield may indicate a value corresponding to a HE MCS table. In addition, when TRS is included in an EHT PPDU, an MCS-related subfield included in the TRS, for example, a UL HE-MCS subfield may indicate a value corresponding to an EHT MCS table. In addition, when TRS is included in a NEXT PPDU, an MCS-related subfield included in the TRS, for example, a UL HE-MCS subfield may indicate a value corresponding to a NEXT MCS table. In addition, information indicated by a RU allocation subfield may vary according to a PPDU format including the TRS.

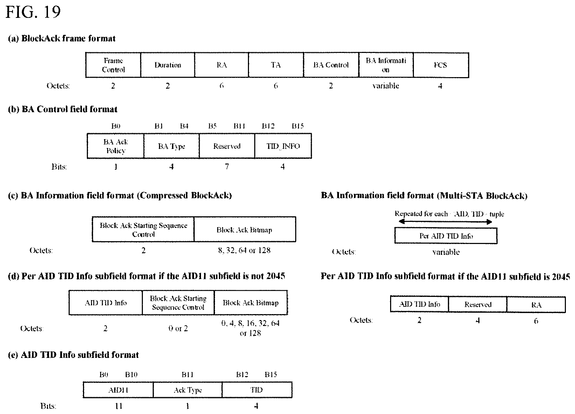

FIG. 19 illustrate a format of a Block ACK frame according to an embodiment of the present disclosure.

An access point may transmit acknowledgment (ACK) information for one or more MAC protocol data units (MPDUs) or one or more MAC service data units (MSDUs) by using a block ACK frame. A station having received a block ACK frame may obtain ACK information for one or more MPDUs or one or more MSDUs from the block ACK frame. The MPDU or MSDU may include an aggregated(A)-MPDU or A-MSDU. ACK information may be information indicating whether an MPDU or MSDU has been successfully received. In addition, ACK information may be included in a block ack bitmap subfield included in a block ACK frame. For example, a block ack bitmap subfield corresponding to a block ack starting sequence control field may indicate ACK information for a pre-designated number of MPDUs or PSDUs from a sequence number indicated by the block ack starting sequence control field included in a block ACK frame. A block ack starting sequence control field may include a fragment number field and a starting sequence number field. The starting sequence number field may indicate a sequence number of the first MSDU, MPDU, or A-MSDU of a block ack bitmap subfield corresponding to the starting sequence number field.

FIG. 19A illustrates a format of a block ACK frame. In FIG. 19A, a block ACK frame may include a frame control field, a duration field, a RA field, a TA field, a BA control field, a BA information field, and an FCS field. A block ACK frame may include a frame control field, a duration field, a RA field, a TA field, a BA control field, a BA information field, and an FCS field in sequence. In addition, a frame control field may be a 2-octet field, a duration field is a 2-octet field, a RA field is a 6-octet field, a TA field is a 6-octet field, a BA control field is a 2-octet field, a BA information field has a variable length, and an FCS field may have 4 octets.

A frame control field may indicate the type and subtype of a frame including the frame control field. A station having received a block ACK frame may determine whether the frame is a block ACK frame, based on a type and subtype indicated by a frame control field.

A duration field may include duration information. A station having received a block ACK frame may configure a NAV, based on duration information. In addition, a station having received a block ACK frame may defer transmission, based on duration information.

A RA field may indicate an address of an intended receiver of a block ACK frame.

A TA field may include a transmitter STA address.

FIG. 19B illustrates a format of a BA control field.

In FIG. 19B, a BA control field may include a BA ack policy field, a BA type field, a reserved field, and a TID_INFO field. In a BA control field, a BA ack policy field, a BA type field, a reserved field, and a TID_INFO field may be positioned in sequence. A BA control field is a 1-bit field, a BA ack policy field is a 1-bit field, a BA type field is a 4-bit field, a reserved field is a 7-bit field, and a TID_INFO field may be a 4-bit field.

A BA ack policy subfield may be decoded as a reserved field in a consensus other than an HT-delayed consensus, for example, an HT-immediate consensus.

A BA type subfield may indicate which variant a BlockAck frame including the BA type subfield is. The format of a block ACK frame may vary according to the variant of the block ACK frame. A station having received a block ACK frame may determine the format of a BA information field, based on a BA type field. In addition, information indicated by a TID_INFO field may vary according to a value of a BA type field. For example, values of a BA type field, which are 1, 2, 3, 6, 10, and 11, may indicate an extended compressed block ACK variant, a compressed block ACK variant, a multi-TID block ACK variant, a GCR block ACK variant, a GLK-GCR block ACK variant, and a multi-STA block ACK variant, respectively. The block ACK variant may be interpreted as indicating a block ACK frame.

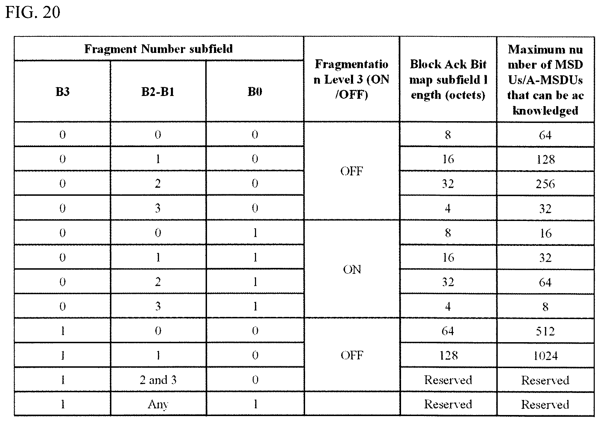

FIG. 19C shows a BA information field of a compressed block ACK variant, and a BA information field of a multi-STA block ACK variant. A compressed block ACK variant may include a block ack starting sequence control field and a block ack bitmap field. A block ack starting sequence control field may be a 2-octet field. A TID_INFO field included in a compressed block ACK variant may indicate a traffic identifier (TID) value corresponding to an MSDU and MPDU ACKed by the compressed block ACK variant. The size of a block ack bitmap subfield of a compressed block ACK variant may be determined based on a fragment number subfield of a block ack starting sequence control field. For example, the size of a block ack bitmap subfield of a compressed block ACK variant may be 8, 32, 64, or 128 or 256 or 512 octets. For example, as illustrated in FIG. 20, the size of a block ack bitmap subfield and a maximum value of an MSDU and A-MSDU which are able to be ACKed may be determined based on a fragment number subfield.

A multi-STA BlockAck variant may include ACK information for one or more stations. In addition, a multi-STA block ACK variant may include ACK information for one or more TIDs. A multi-STA block ACK variant may include multiple BA information fields according to a combination of an AID and a TID included in a per AID TID info field.

FIG. 19D shows a format of a per AID TID info field. When a value of an AID11 subfield included in a per AID TID info subfield is not a pre-designated value, a format of a per AID TID info subfield as shown in the first embodiment of FIG. 19D may be used. The pre-designated value may be 2045. In addition, when a value of an AID 11 subfield included in a per AID TID info subfield is a pre-designated value, a format of a per AID TID info subfield as shown in the second embodiment of FIG. 19D may be used. An AID 11 subfield may indicate a receiver of a per AID TID info subfield including the AID11 subfield or which station the per AID TID info subfield corresponds to. In addition, the first per AID TID info field of FIG. 19D may be a per AID TID info field for an associated station. In addition, the second per AID TID info field of FIG. 16D may be a per AID TID info field for an unassociated station.

The first per AID TID info field of FIG. 19D may include an AID TID info field, a block ack starting sequence control field, and a block ack bitmap field. In addition, an AID TID info field, a block ack starting sequence control field, and a block ack bitmap field may be positioned in sequence in a per AID TID info field. An AID TID info field may be a 2-octet field. Specifically, a format of an AID TID info field may be shown in FIG. 19E. In addition, whether a per AID TID info field includes a block ack starting sequence control field and a block ack bitmap field may be determined according to a value of an AID TID info subfield. More specifically, whether a per AID TID info field includes a block ack starting sequence control field and a block ack bitmap field may be determined according to a value of an ack type subfield included in an AID TID info subfield. If a Per TID info field includes a block ack starting sequence control field, the Per TID info field may include a fragment number subfield and a starting sequence number field. In addition, the degree of fragmentation, the size of a block ack bitmap subfield, and a maximum number of MSDUs or A-MSDUs which are able to be ACKed may be determined according to a value of a fragment number field. The degree of fragmentation, the size of a block ack bitmap subfield, and a maximum number of MSDUs or A-MSDUs which are able to be ACKed being determined according to a value of a fragment number field will be described in detail with reference to FIG. 20. The size of a block ack bitmap subfield may be 4 octets, 8 octets, 16 octets, 32 octets, 64 octets, 128 octets, 256 octets, and 512 octets.

The second per AID TID info field of FIG. 19D may include an AID TID info field, a reserved field, and a RA field. An AID TID info field, a reserved field, and a RA field may be positioned in sequence in a per AID TID info field. An AID TID info field may be a 2-octet field, a reserved field may be a 4-octet field, and a RA field may be a 6-octet field.

A format of an AID TID info field may be the same as in an embodiment of FIG. 19E. A RA field may indicate a MAC address of a receiver of a per AID TID info field including the RA field. This is because, in a case where a receiver of the per AID TID info field is an unassociated station, an AID has not been assigned to the unassociated station.

An AID TID info subfield may include an AID 11 subfield, an ack type subfield, and a TID subfield. In addition, an AID1 1 subfield, an ack type subfield, and a TID subfield may be positioned in sequence in an AID TID info subfield. An AID11 subfield may be a 11-bit field, an ack type subfield may be a 1-bit field, and a TID subfield may be a 4-bit field. In addition, when an AID11 subfield does not have a pre-designated value, the AID 11 subfield may include 11 bits of an AID of a receiver of a per AID TID info subfield including the AID 11 subfield. In addition, an ack type subfield may indicate whether a per AID TID info field includes a block ack starting sequence control field and a block ack bitmap field may be determined according to a value of an AID TID info subfield. In addition, when a value of an ack type subfield is 1, a block ack starting sequence control field and a block ack bitmap field may not exist. When a value of an ack type subfield is 1, a per AID TID info subfield including the ack type subfield may indicate that a receiver of the per AID TID info subfield has successfully received all sent frames. The number of the frames may be one or more. When a value of an ack type subfield is 1 and a value of a TID subfield is 0 to 7, a per AID TID info field may indicate an ACK for a QoS data frame or a QoS null frame requesting an ack frame. When a value of an ack type subfield is 1 and a value of a TID subfield is 14, a per AID TID info field may indicate an ACK that all MPDUs of an A-MPDU including an MPDU requesting an immediate response have been successfully received. When a value of an ack type subfield is 1 and a value of a TID subfield is 15, a per AID TID info field may indicate an ACK for a management frame or a PS-Poll frame. A TID subfield may indicate a TID corresponding to a block ack bitmap. A TID subfield may indicate which ACK a per AID TID info subfield is, as described above.

FIG. 20 illustrates a fragment number subfield and a block ack bitmap subfield according to an embodiment of the present disclosure.

As described above, the size of a block ack bitmap subfield and a maximum number of MSDUs or A-MSDUs which are able to be ACKed may be determined according to a value of a fragment number subfield. In addition, a fragment number subfield may indicate whether fragmentation is used. The fragmentation may be level-3 dynamic fragmentation. FIG. 20 illustrates the size of a block ack bitmap subfield, a maximum number of MSDUs or A-MSDUs which are able to be ACKed, and whether fragmentation is used, which correspond to a fragment number. The size of a block ack bitmap subfield not illustrated in FIG. 17 may be assigned to a value of fragment number subfield represented by Reserved in FIG. 17.

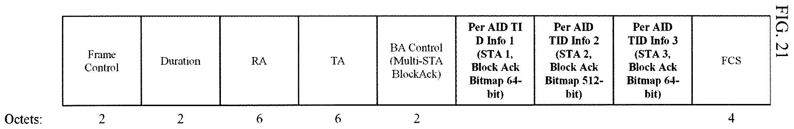

FIG. 21 illustrates a multi-STA block ACK frame being transmitted as a response for a HE TB PPDU according to an embodiment of the present disclosure.

A block ack bitmap size supported by a standard may be limited. For convenience of explanation, a block ack bitmap is called a bitmap. In addition, a bitmap size and a bitmap length may be in the same meaning. In a 802.11ax HE standard, a bitmap size is limited to a maximum of 256 bits.

The 802.1 1ax HE standard and a bitmap having 512 bits or 1024 bits may be supported. However, a station supporting the 802.11 ax HE standard and not supporting a standard after the 802.11ax HE standard is unable to recognize a bitmap having 512 bits or 1024 bits. Therefore, the station may not be able to precisely parse a per AID TID info field including a bitmap having 512 bits or 1024 bits, or a per AID TID info field following the corresponding field.

In FIG. 21, a multi-STA BlockAck frame may include multiple per AID TID info fields, and each per AID TID info field may have a variable length. The length of a per AID TID info field may be determined according to the size of a block ack bitmap subfield or whether same is included, whether a block ack starting sequence control subfield is included, a value of a fragment number subfield, a value of an ack type subfield, and a value of an AID 11 subfield. In an embodiment of FIG. 18, a first per AID TID info field (Per AID TID Info 1), a second per AID TID info field (Per AID TID Info 2), and a third per AID TID info field (Per AID TID Info 3) are per AID TID info fields for a first station (STA 1), a second station (STA 2), and a third station (STA 3), respectively. In addition, the first per AID TID info field (Per AID TID Info 1), the second per AID TID info field (Per AID TID Info 2), and the third per AID TID info field (Per AID TID Info 3) may include block ack bitmaps having 64 bits, 512 bits, and 64 bits, respectively. In addition, the third station (STA 3) may be a station not supporting a bitmap having 512 bits or 1024 bits. A station receiving a multi-STA block ACK frame may determine whether an AID 11 subfield included in a per AID TID field indicates an AID of the station, and may perform sequential parsing until obtaining the per AID TID info field including the AID11 subfield indicating the AID of the station. In an embodiment of FIG. 18, the third station (STA 3) may fail in precisely parsing the second per AID TID info field (Per AID TID Info 2) while sequentially parsing per AID TID info fields. The second per AID TID info field (Per AID TID Info 2) has a length not supported by the third station (STA 3). Therefore, the third station (STA 3) may fail in precisely receiving or parsing the third per AID TID info field (Per AID TID Info 3).

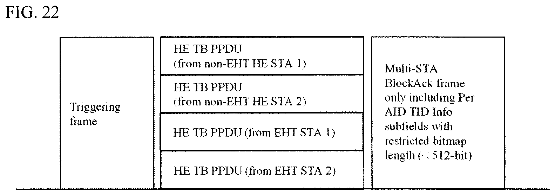

A method of preventing such a problem will be described with reference to FIG. 22. Hereinafter, for convenience of explanation, a bitmap size is represented by 512 bits or 1024 bits. However, this size is a bitmap size used in a new standard but not supported in a previous standard. Therefore, a different number of bits, for example, 2048 bits and 4096 bits may be applied instead of 512 bits and 1024 bits.

FIG. 22 illustrates a UL MU operation according to an embodiment of the present disclosure.

As described above, a triggering frame may trigger a response from one or more stations. The response may be an immediate response. Therefore, the interval between a PPDU including a trigger frame and a PPDU including an immediate response may be a pre-designated time. The pre-designated time may be an SIFS. An SIFS may be 10 us in a 2.4 GHz band, and an SIFS may be 16 us in a 5 GHz band and at 6 GHz. As described above, an AP transmits a trigger frame, and when a non-AP station having received a triggering frame transmits a TB PPDU as a response, the non-AP station may transmit an EHT TB PPDU or a HE TB PPDU. The non-AP station may be a HE station as well as an EHT station. In addition, a frame included in the TB PPDU may require an immediate response. Accordingly, the AP may transmit a multi-STA block ACK frame.

When an AP transmits a multi-STA block ACK frame as a response for a HE TB PPDU transmitted by a HE station, the AP may limit the length of a block ACK bitmap subfield included in the multi-STA block ACK frame to a value smaller than 512 bits. Therefore, a multi-STA block ACK frame may not include a block ACK bitmap subfield having 512 bits or 1024 bits. When an AP transmits a response for a TB PPDU, the AP may use PPDU formats supported by a station having transmitted the TB PPDU, without limitation. In addition, when an AP transmits a response for a TB PPDU, the AP may transmit a control frame, for example, a multi-STA block ACK frame. When an AP transmits a response frame for a TB PPDU, the AP may transmit the response frame by using a HE SU PPDU, a HE MU PPDU or an EHT MU PPDU if a PPDU length of a case of including the response frame in a HE SU PPDU, a HE MU PPDU, or an EHT MU PPDU and transmitting the PPDU is smaller than or equal to a PPDU length of a case of including the response frame in a non-HT PPDU and transmitting the non-HT PPDU at a primary rate. Therefore, an AP may transmit a multi-STA block ACK frame, which is transmitted as a response for a HE TB PPDU transmitted by a HE station, by using any PPDUs supported by an intended receiver of the multi-STA block ACK frame. The AP may use a HE SU PPDU or a HE MU PPDU. The length of a block ACK bitmap included in a multi-STA block ACK frame included in the HE SU PPDU or the HE MU PPDU may be limited.

In an embodiment of FIG. 22, an AP transmits triggering frames to a first station (non-EHT HE STA1), a second station (non-EHT HE STA 2), a third station (EHT STA1), and a fourth station (EHT STA2). The first station (non-EHT HE STA1) and the second station (non-EHT HE STA 2) are non-EHT stations and HE stations. In addition, the third station (EHT STA1) and the fourth station (EHT STA2) are EHT stations. A triggering frame may indicate a HE TB PPDU as a format of a TB PPDU to be transmitted as a response for the triggering frame. The first station (non-EHT HE STA1), the second station (non-EHT HE STA 2), the third station (EHT STA1), and the fourth station (EHT STA2) transmit HE TB PPDUs to the AP. The AP transmits multi-STA block ACK frames each including only a block ACK bitmap having a number of bits having a size smaller than a pre-designated size, to a first station (non-EHT HE STA1), a second station (non-EHT HE STA 2), a third station (EHT STA1), and a fourth station (EHT STA2). The pre-designated size may be 512 bits. In addition, the AP transmits multi-STA block ACK frames each including only a block ACK bitmap having a number of bits having a size of 256 bits or smaller, to a first station (non-EHT HE STA1), a second station (non-EHT HE STA 2), a third station (EHT STA1), and a fourth station (EHT STA2). Even if the AP fails to receive a frame from a non-EHT HE station, the AP transmits a multi-STA block ACK frame including only a block ACK bitmap having a number of bits having a size smaller than a pre-designated size. This is because a non-EHT HE station is unable to know whether transmission is successful.

A block ACK bitmap size being limited even to a station capable of processing a block ACK bitmap with a long length may be inefficient. A method for solving this problem will be described with reference to FIG. 20.

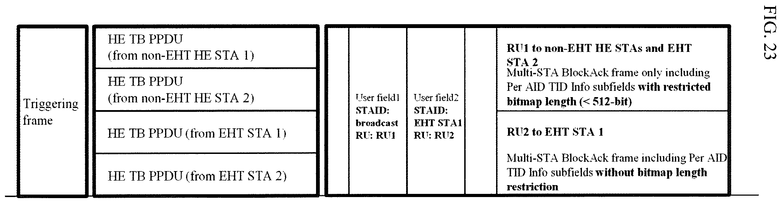

FIG. 23 illustrates a UL MU operation and a format of a multi-STA block ACK frame according to an embodiment of the present disclosure.

Even when a HE station has transmitted a HE TB PPDU to an AP, if a pre-designated condition is satisfied, the AP may not limit the size of a block ACK bitmap included in a multi-STA block ACK frame to a pre-designated size or smaller. Specifically, the pre-designated condition is that a multi-STA block ACK frame is transmitted only to an EHT station. The pre-designated condition is that a multi-STA block ACK frame is transmitted through an RU allocated only to an EHT station. The size of a block ACK bitmap included in the multi-STA block ACK frame may be 512 bits or 1024 bits. Therefore, if receivers of a multi-STA block ACK frame include at least one non-EHT HE station, the AP may configure the size of a block ack bitmap of a block ACK frame of the multi-STA block ACK frame to a pre-designated number of bits or smaller. If at least one of RUs in which a multi-STA block ACK frame is transmitted is allocated to a non-EHT HE station, the AP may configure the size of a block ack bitmap of a block ACK frame of the multi-STA block ACK frame to a pre-designated number of bits or smaller. The pre-designated number of bits may be 256 bits.

In addition, a HE MU PPDU or an EHT MU PPDU may be transmitted through one or more RUs. In addition, a HE MU PPDU or an EHT MU PPDU may indicate an RU in which the PPDU is transmitted, and a receiver ID (STA-ID) corresponding to the RU. A HE-SIG-B field included in a preamble of a HE MU PPDU may indicate an RU in which the HE MU PPDU is transmitted, and a receiver ID (STA-ID) corresponding to the RU. An EHT-SIG field included in a preamble of an EHT MU PPDU may indicate an RU in which the EHT MU PPDU is transmitted, and a receiver ID (STA-ID) corresponding to the RU.

A HE-SIG-B field and an EHT-SIG field may include a common field and a user specific field. In addition, a user specific field may include one or more user fields. A station having received an EHT MU PPDU or a HE MU PPDU may determine where an RU allocated to a user field is, based on the position of a common field or the user field. In addition, a user field may include an STA-ID field indicating an ID of a receiver corresponding to the user field. An STA-ID field may indicate a receiver of an EHT MU PPDU or a HE MU PPDU corresponding to an RU corresponding to a user field including the STA-ID field. When the RU is allocated to an individual station, a value of an STA-ID field corresponding to the RU may indicate an AID of the station or a value obtained based on the AID value. The value obtained based on the AID value may be 11 least significant bits (LSBs) of the AID. In addition, when the RU is allocated to multiple stations, a value of an STA-ID field corresponding to the RU may include a pre-designated value. The RU being allocated to multiple stations may indicate a PPDU being transmitted, the PPDU being broadcast through the RU. The pre-designated value may be 0. When an AP does not use multiple BSSIDs, a value of an STA-ID field of an RU allocated to multiple stations may be configured as 0. When the AP uses multiple BSSIDs, a value of an STA-ID field of an RU allocated to multiple stations may be configured as 0 for stations connected to a BSS of a transmitted BSSID. When the AP uses multiple BSSIDs, a value of an STA-ID field of an RU allocated to multiple stations may be a BSSID index of a BSS to which a station allocated to the RU is connected. A value of a BSSID index may be one of 1 to a maximum value of a multiple-BSSID set. That is, a value of a BSSID index may be one of 0 to a maximum BSSID index (or a maximum number of a multiple-BSSID set ?? 1 or an index value corresponding to a maximum number of BSSIDs included in a multiple-BSSID set) of a multiple-BSSID set. In a multiple-BSSID set, "0" is a BSSID index corresponding to a transmitted BSSID, and in a multiple-BSSID set, "1" to a maximum BSSID index (or a maximum number of the multiple-BSSID set - 1 or an index value corresponding to a maximum number of BSSIDs included in the multiple-BSSID set) of the multiple-BSSID set are BSSID indexes corresponding to non-transmitted BSSIDs.

A value of an STA-ID field of an RU allocated to multiple stations may be 2047. In addition, a value of an STA-ID field of an RU allocated to stations connected to a BSS having a non-transmitted BSSID may be 2047. A TA field of a frame described by a RU may indicate a transmitted BSSID. When an AP is a receiver of an EHT MU PPDU or a HE MU PPDU, an STA-ID field may indicate a transmitter of the HE MU PPDU or the EHT MU PPDU. In addition, a value of an STA-ID field of an RU allocated to an unassociated station may be 2045.

A value of an STA-ID field may be an STA-ID value of a TXVECTOR parameter or an RXVECTOR parameter.

The size of a block ACK bitmap of a multi-STA block ACK frame transmitted through an RU allocated to one EHT station, or a multi-STA block ACK frame transmitted to one EHT station may not be limited to a value smaller than a pre-designated value. The multi-STA block ACK frame may include a block ACK bitmap having 512 bits or a block ACK bitmap having 1024 bits. In addition, in such an embodiment, a multi-STA block ACK frame may be transmitted using a HE MU PPDU, a HE SU PPDU, an EHT MU PPDU, or a non-HT PPDU.

When a multi-STA block ACK frame is transmitted through an RU allocated to one EHT station, the size of a block ACK bitmap of the multi-STA block ACK frame may not be limited to a value smaller than a pre-designated value. When a RA field of a multi-STA block ACK frame indicates a MAC address of an individual EHT station, the size of a block ACK bitmap of the multi-STA block ACK frame may not be limited to a value smaller than a pre-designated value. In such embodiments, a multi-STA block ACK frame may include a block ACK bitmap having 512 bits or a block ACK bitmap having 1024 bits. When a multi-STA block ACK frame is transmitted in response to a HE TB PPDU transmitted by at least one non-EHT HE station, the multi-STA block ACK frame is not transmitted through an RU allocated to one EHT station, and a RA field of the multi-STA block ACK frame other than does not indicate a MAC address of an individual EHT station, the size of a block ACK bitmap of the multi-STA block ACK frame may be limited to a value smaller than a pre-designated value. The multi-STA block ACK frame may not be allowed to include a block ACK bitmap having 512 bits or a block ACK bitmap having 1024 bits.

That is, when at least one STA transmitting the PPDU in response to the trigger frame among one or more STAs includes a HE STA, which is a legacy STA, as well as an EHT STA, the size of a BlockAck bitmap, which is ack information for each of the at least one STA, included in a multi-STA BlockAck frame that is a response frame for the PPDU indicated by the trigger frame, may be limited to a particular size (e.g., 256 bits) or smaller. That is, 512 bits and 1024 bits may not be used as the size of a BlockAck bitmap.

However, even if the at least one STA transmitting the PPDU in response to the trigger frame among the one or more STAs includes a HE STA, which is the legacy STA, when a multi-STA BlockAck frame is transmitted by the AP through a resource unit (RU) individually allocated to the STA, the size of ack information may not be limited to a particular size or smaller. That is, even if a HE TB PPDU is received from an STA, when an AP transmits a multi-STA BlockAck frame through an RU individually allocated to an EHT STA, the size of ack information may not be limited. In other words, when an AP transmits a multi-STA BlockAck frame through an RU allocated and dedicated to an EHT STA, only the EHT STA has to receive and interpret the multi-STA BlockAck frame, and thus size limitation of a BlockAck bitmap for a HE STA is not needed.

In an embodiment of FIG. 23, an AP transmits triggering frames to a first station (non-EHT HE STA1), a second station (non-EHT HE STA 2), a third station (EHT STA1), and a fourth station (EHT STA2). The first station (non-EHT HE STA1) and the second station (non-EHT HE STA 2) are non-EHT stations and HE stations. In addition, the third station (EHT STA1) and the fourth station (EHT STA2) are EHT stations. A triggering frame may indicate a HE TB PPDU as a format of a TB PPDU to be transmitted as a response for the triggering frame. The first station (non-EHT HE STA1), the second station (non-EHT HE STA 2), the third station (EHT STA1), and the fourth station (EHT STA2) transmit HE TB PPDUs to the AP. The AP transmits, through a first RU (RU 1), a multi-STA block ACK frame for the first station (non-EHT HE STA1), the second station (non-EHT HE STA 2), and the fourth station (EHT STA2). The stations allocated to the first RU (RU 1) include the first station (non-EHT HE STA1) and the second station (non-EHT HE STA 2) which are non-EHT stations. Therefore, the multi-STA block ACK frame may include only a block ACK bitmap having a size smaller than 512 bits. In addition, the AP transmits a multi-STA block ACK frame for the third station (EHT STA1) through a second RU (RU2). The second RU (RU2) is a RU allocated only to the third station (EHT STA1) that is an EHT station. Therefore, the size of a block ACK bitmap included in a multi-STA block ACK frame transmitted through the second RU (RU2) is not limited to have a size smaller than 512 bits.

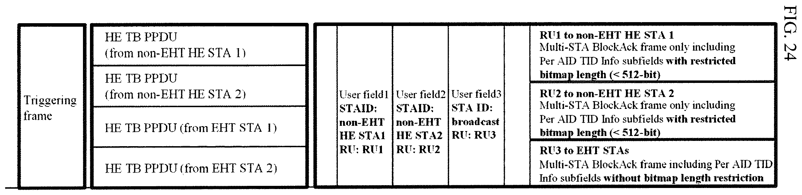

FIG. 24 illustrates a UL MU operation and a format of a multi-STA block ACK frame according to another embodiment of the present disclosure.

When an AP receives a HE TB PPDU from at least one HE station and transmits a multi-STA block ACK frame as a response for a frame included in the HE TB PPDU, the AP may determine whether to limit the size of a block ACK bitmap of the multi-STA block ACK frame to a value smaller than a pre-designated size, based on a pre-designated condition. When all pre-designated conditions are satisfied, the AP may not limit the size of a block ACK bitmap of a multi-STA block ACK frame to a value smaller than a pre-designated size. Even in a case where a multi-STA block ACK frame is transmitted in an RU allocated for a broadcast frame, when all pre-designated conditions are satisfied, the AP may not limit the size of a block ACK bitmap of the multi-STA block ACK frame to a value smaller than a pre-designated size. Specifically, a pre-designated condition may include a case where a multi-STA block ACK frame is transmitted only to an EHT station. Therefore, even in a case where a multi-STA block ACK frame is transmitted through a broadcast RU, when the multi-STA block ACK frame is transmitted only to EHT stations, the AP may not limit the size of a block ACK bitmap of the multi-STA block ACK frame to a value smaller than a pre-designated size. Even in a case where a multi-STA block ACK frame is transmitted through a broadcast RU, when the multi-STA block ACK frame is transmitted only to EHT stations, the AP may not limit the size of the multi-STA block ACK frame to a value smaller than a pre-designated size.

In addition, a pre-designated condition may include a case where a PPDU including a multi-STA block ACK frame is transmitted in different RUs allocated to all respective HE stations having been triggered by a trigger frame having triggered transmission of a TB PPDU transmitted immediately before the multi-STA block ACK frame.

Such embodiments may have a precondition that the AP transmits a multi-STA block ACK frame to at least one non-EHT HE STA.

In addition, in embodiments described above, not limiting the size of a block ACK bitmap of a multi-STA block ACK frame to a value smaller than a pre-designated size may imply the multi-STA block ACK frame including a block ACK bitmap having 512 bits or 1024 bits.

In an embodiment of FIG. 24, an AP transmits triggering frames to a first station (non-EHT HE STA1), a second station (non-EHT HE STA 2), a third station (EHT STA1), and a fourth station (EHT STA2). The first station (non-EHT HE STA1) and the second station (non-EHT HE STA 2) are non-EHT stations and HE stations. In addition, the third station (EHT STA1) and the fourth station (EHT STA2) are EHT stations. A triggering frame may indicate a HE TB PPDU as a format of a TB PPDU to be transmitted as a response for the triggering frame. The first station (non-EHT HE STA1), the second station (non-EHT HE STA 2), the third station (EHT STA1), and the fourth station (EHT STA2) transmit HE TB PPDUs to the AP. The AP transmits a multi-STA block ACK frame for the first station (non-EHT HE STA1) through a first RU (RU 1), for the second station (non-EHT HE STA 2) through a second RU (RU 2), and for the third station (EHT STA1) and the fourth station (EHT STA2) through a third RU (RU 3). The stations allocated to the first RU (RU1) include the first station (non-EHT HE STA1) that is a non-EHT station, and the stations allocated to the second RU (RU2) include the second station (non-EHT HE STA 2). Therefore, each of the multi-STA block ACK frames transmitted through the first RU (RU1) and the second RU (RU2), respectively, may include only a block ACK bitmap having a size smaller than 512 bits. The third RU (RU3) is a broadcast RU, but the stations allocated to the third RU (RU3) are all EHT stations. Therefore, the size of a block ACK bitmap included in a multi-STA block ACK frame transmitted through the third RU (RU3) is not limited to have a size smaller than 512 bits.

When a pre-designated condition described above is not satisfied, there is no RU individually allocated to a non-EHT HE station for transmission of a multi-STA block ACK frame. Therefore, a non-EHT HE station receives a multi-STA block ACK frame through a RU allocated to multiple stations. When the size of a block ack bitmap of the multi-STA block ACK frame is 512 bits or greater, the non-EHT HE station may fail to precisely parse the multi-STA block ACK frame. In addition, when the AP has failed to receive a HE TB PPDU transmitted by a non-EHT HE station, an intended receiver of a multi-STA block ACK frame may not include the non-EHT HE station. When the size of a block ack bitmap of the multi-STA block ACK frame is 512 bits or greater, the non-EHT HE station may fail to precisely parse the multi-STA block ACK frame.

In summary of embodiments described with reference to FIG. 23 and FIG. 24, when an AP transmits a multi-STA block ACK frame as a response for a TB PPDU transmitted by only an EHT station or a TB PPDU transmitted by triggering only an EHT station by a triggering frame, the AP may not limit the size of the multi-STA block ACK frame to a value smaller than a pre-designated size. In addition, when an AP transmits a multi-STA block ACK frame including a response for a frame included in a HE TB PPDU transmitted by at least one non-EHT HE station, the AP may limit the size of the multi-STA block ACK frame to a value smaller than a pre-designated size. In addition, when an AP transmits a multi-STA block ACK frame in a RU individually allocated (addressed) to an EHT station, the AP may not limit the size of the multi-STA block ACK frame to a value smaller than a pre-designated size. In addition, when a multi-STA block ACK frame is transmitted in a RU allocated to only an EHT station, and a PPDU including a multi-STA block ACK frame is transmitted in RUs individually allocated to all non-EHT HE stations triggered by a triggering frame having triggered all TB PPDUs transmitted simultaneously with a TB PPDU having triggered transmission of the multi-STA block ACK frame, an AP may not limit the size of the multi-STA block ACK frame to a value smaller than a pre-designated size. In addition, when a multi-STA block ACK frame is transmitted in a RU allocated to only an EHT station, and a PPDU including a multi-STA block ACK frame is transmitted in RUs individually allocated to all non-EHT HE stations triggered by a PPDU having triggered a TB PPDU having triggered transmission of the multi-STA block ACK frame, an AP may not limit the size of the multi-STA block ACK frame to a value smaller than a pre-designated size.

In addition, in a case of a multi-STA BlockAck frame included in a broadcast RU for only EHT STAs, a PPDU including the broadcast RU includes individually addressed RUs for all non-EHT HE STAs triggered by a PPDU soliciting a frame soliciting the multi-STA BlockAck frame, a bitmap size may not be limited.

An AP configuring and transmitting a multi-STA block ACK frame has been described with reference to FIG. 20 to FIG. 24. A station receives and parse a multi-STA block ACK frame according to a method of configuring and transmitting a multi-STA block ACK frame, which has been described therethrough. In addition, a station may determine the number of MPDUs aggregatable in an A-MPDU, based on the size of a block ACK bitmap of a multi-STA block ACK frame.

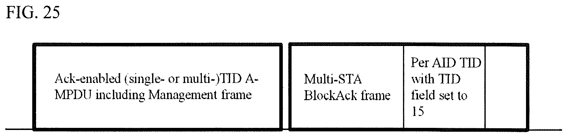

FIG. 25 illustrates transmitting a management frame according to an embodiment of the present disclosure.

A management frame may be included in an aggregated(A)-MPDU. If a type field included in a frame control field has a pre-designated value, the type field may indicate that a frame including the type field is a management frame. The pre-designated value may be $00_b$.

A management frame may include an association request frame, an association response frame, a reassociation request frame, a reassociation response frame, a probe request frame, a probe response frame, a timing advertisement frame, a beacon frame, an ATIM frame, a disassociation frame, an authentication frame, a deauthentication frame, an action frame, and an action no ack frame.

A management frame may be included in an ack-enabled single-TID A-MPDU. Alternatively, it is possible that a management frame is included in an ack-enabled multi-TID A-MPDU. An ack-enabled single-TID A-MPDU is an A-MPDU including A-MPDU subframes, which have at least two different TIDs, and only one of which is tagged as soliciting an ACK (an A-MPDU that contains at least two A-MPDU subframes, where the traffic identifiers (TIDs) differ and where only one of the A-MPDU subframes includes a tagged MPDU that solicits the acknowledgment context). An ack-enabled multi-TID A-MPDU is an A-MPDU in which at least one MPDU tagged as soliciting an ACK is aggregated, and in which MPDUs from one or more TIDs soliciting an ACK or block ACK are aggregated (an A-MPDU where at least one tagged MPDU that solicits acknowledgment context is aggregated in the A-MPDU, and MPDUs from more than one TID that solicit Ack acknowledgment or Block Ack acknowledgment context are aggregated in the A-MPDU).

An ack-enabled A-MPDU may be an A-MPDU soliciting an ack frame or soliciting ack context of a multi-STA block ACK frame. In addition, capability signaling relating to whether there is an ability to receive an ack-enabled A-MPDU may be performed. The capability signaling may be performed by means of HE capabilities elements. More specifically, the capability signaling may be performed using an ack-enabled aggregation support subfield included in a HE MAC capabilities information field.

A TID of a management frame may be considered as 15. Specifically, a management frame may be treated as a single TID frame. A management frame may be a frame causing an ACK. In addition, a management frame may be included in an ack-enabled single-TID A-MPDU or ack-enabled multi-TID A-MPDU.

The management frame may be a frame soliciting an acknowledgment. In addition, the management frame may have been included in an ack-enabled single-TID A-MPDU or ack-enabled multi-TID A-MPDU.

An ACK frame may be transmitted as a response for a management frame. In addition, an AP may transmit a response for a management frame by using a per AID TID field included in a multi-STA block ACK frame. The AP may configure, as 15, a value of a TID field of the per AID TID field.

In an embodiment of FIG. 25, a station transmits an A-MPDU including a management frame. An AP transmits an ACK for the management frame by using a multi-STA block ACK frame. The AP configures, as 15, a value of a TID field of a per AID TID field corresponding to a response for the management frame.

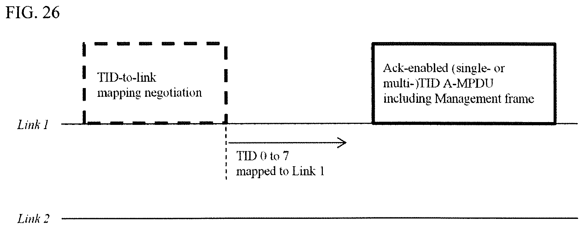

FIG. 26 illustrates a method of transmitting a management frame when TID-to-link mapping is applied according to an embodiment of the present disclosure.

As described above, TID-to-link mapping may be applied in a multi-link operation. A particular TID is mapped to a link, a frame corresponding to a TID mapped to each link is transmitted in a corresponding link, and transmission of a frame corresponding to a TID not mapped to a link may not be allowed. A link to which at least one TID is mapped is called an enabled link, and a link to which any TIDs are not mapped is called a disabled link.

As described above, a management frame may be transmitted through any link. In addition, a management frame may correspond to a single TID frame. In addition, a management frame may be treated as a frame having a TID of 15. Therefore, collision may occur between TID-to-link mapping and treating a management frame.

In a specific embodiment, a management frame may be mapped to all links regardless of a TID value. In another specific embodiment, a management frame may be mapped to all links regardless of its TID value of 15. The management frame may be transmitted through all links. All the links may be limited to only enabled links. The management frame may be included in an ack-enabled single-TID A-MPDU or ack-enabled multi-TID A-MPDU. In addition, the management frame may be a frame causing an ACK.

In another specific embodiment, a management frame may be transmitted regardless of TID-to-link mapping. TID-to-link mapping may be applied only to a data frame or a QoS data frame.

In an embodiment of FIG. 26, TID-to-link mapping is performed and TID 0 to 7 are mapped to a first link (link 1). A management frame may be transmitted in the first link (link 1). Specifically, in the first link (link 1), an ack-enabled single-TID A-MPDU or ack-enabled multi-TID A-MPDU including a management frame may be transmitted. More specifically, in the first link (link 1), an ack-enabled single-TID A-MPDU or ack-enabled multi-TID A-MPDU including a management frame causing an ACK may be transmitted. That is, only in a case of TID-to-link mapping, a management frame is not treated as a single TID frame and a TID value of the management frame may not be treated as 15.

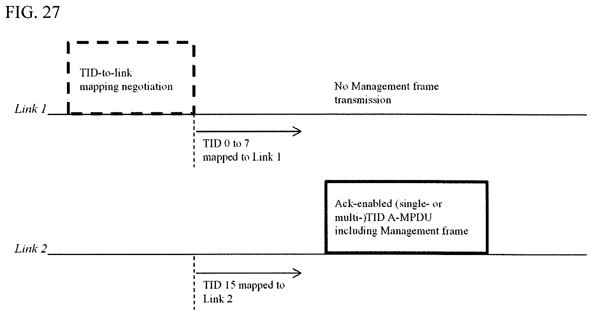

FIG. 27 illustrates a method of transmitting a management frame when TID-to-link mapping is applied according to another embodiment of the present disclosure.

In another specific embodiment, TID-to-link mapping may be applied for a management frame. That is, a TID corresponding to a management frame may be mapped to a link. In addition, when a TID corresponding to a management frame is mapped to a link, the management frame may be transmitted in the link. In addition, when a TID corresponding to a management element is not mapped to a link, the management frame is unable to be transmitted in the link. A TID corresponding to a management frame may be 15. The management frame may be included in an ack-enabled single-TID A-MPDU or ack-enabled multi-TID A-MPDU. In addition, the management frame may cause an ACK.

In an embodiment of FIG. 27, TID-to-link mapping is performed. TIDs 0 to 7 are mapped to a first link (Link 1) and a management frame is mapped to a second link (Link 2). The management frame is unable to be transmitted in the first link (link 1). Therefore, the management frame is transmitted in the second link (link 2). Specifically, in the second link (Link 2), an ack-enabled single-TID A-MPDU or ack-enabled multi-TID A-MPDU including a management frame may be transmitted. More specifically, in the second link (Link 2), an ack-enabled single-TID A-MPDU or ack-enabled multi-TID A-MPDU including a management frame causing an ACK may be transmitted.

In embodiments described above, a TID value of a management frame is described as 15, but a different value may be applied as a TID value of a management frame.

With respect to a TID corresponding to a management frame, TID-to-link mapping for uplink transmission and TID-to-link mapping for downlink transmission may not be performed independently. Therefore, when a management frame is mapped to a link, uplink transmission of the management frame and downlink transmission of the management frame are mapped to the link. As described above, with respect to a data frame or a QoS data frame, TID-to-link mapping of TID-to-link mapping uplink transmission and TID-to-link mapping of downlink transmission may be performed independently. As described above, TID-to-link mapping of a data frame or a QoS data frame and a TID-to-link mapping method of a management frame may be different from each other.

An element transmitted in a TID-to-link mapping negotiation process may perform signaling for each of TID-to-link mapping of uplink transmission and TID-to-link mapping of downlink transmission. A value of TID-to-link mapping of uplink transmission of a management frame and a value of TID-to-link mapping of downlink transmission of the management frame may be configured to be same. In another specific embodiment, TID-to-link mapping of uplink transmission of a management frame and TID-to-link mapping of downlink transmission may not be individually signaled. In another specific embodiment, TID-to-link mapping of a management frame may not be explicitly signaled and may be implicitly signaled. In another specific embodiment, when TID-to-link mapping of a management frame for one transmission direction is signaled, TID-to-link mapping for the remaining transmission directions may be identically applied.

TID-to-link mapping for a management frame may be applied only to a particular management frame. For example, TID-to-link mapping may not be applied to a beacon frame. A beacon frame may be transmitted through any link regardless of TID-to-link mapping. In addition, the particular frame may be an action frame.

TID-to-link mapping may not be applied to a management frame before multi-link setup, and TID-to-link mapping may be applied to a management frame after multi-link setup. A management frame may be transmitted in any link before multi-link setup. A management frame may be transmitted in only in a link to which the management frame is mapped, after multi-link setup.

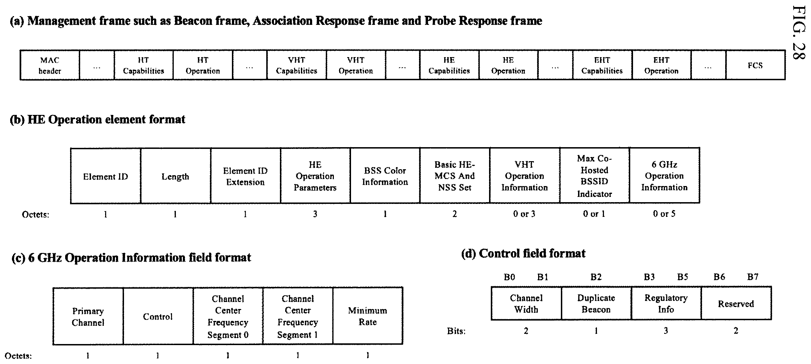

FIGS. 28A, 28B, 28C, and 28D are diagrams illustrating a management frame and channel width signaling according to an embodiment of the present disclosure.

Referring to FIGS. 28A, 28B, 28C, and 28D, a management frame transmitted by an AP to STAs may include an operation element according to each STA.

Specifically, according to an embodiment of the present disclosure, a management frame may include a capabilities element. In addition, a management frame may include an operation element. The management frame may include a beacon frame, an association response frame, a reassociation response frame, a probe response frame, an association request frame, a reassociation request frame, and a probe request frame. In addition, the capabilities element may include information on capabilities for each standard. For example, a capabilities element may include an HT capabilities element, a VHT capabilities element, a HE capabilities element, and an EHT capabilities element. An operation element may include information on operation for each standard. For example, an operation element may include an HT operation element, a VHT operation element, a HE operation element, and an EHT operation element.

According to an embodiment, a capabilities element may include signaling indicating a channel width set supported by an STA transmitting the capabilities element. Signaling indicating a channel width may be a supported channel width set subfield. A supported channel width set subfield included in an HT capabilities element may be 1) 20 MHz and 2) 20 or 40 MHz channel width. In addition, a supported channel width set subfield included in an HT capabilities element may be 1 bit. A supported channel width set subfield included in a VHT capabilities element or a HE capabilities element may indicate which combination of channel widths is supported among 20 MHz, 40 MHz, 80 MHz, 160 MHz, and 80+80 MHz channel widths. A supported channel width set subfield included in a VHT capabilities element may be 2 bits. A supported channel width set subfield included in a HE capabilities element may be 7 bits. A supported channel width set subfield included in an EHT capabilities element may indicate which combination of channel widths is supported among 20 MHz, 40 MHz, 80 MHz, 160 MHz, and 320 MHz channel widths.

An operation element may indicate information on a channel operated by a STA transmitting the operation element. For example, an operation element may indicate the width of a channel operated by a STA transmitting the operation element. Signaling indicating a channel width, which is included in an operation element, may be a channel width subfield. In addition, an operation element may indicate the position of a channel operated by a STA transmitting the operation element. Signaling indicating a channel position, which is included in an operation element, may include a primary channel subfield, a channel center frequency segment 0 subfield, a channel center frequency segment 1 subfield, and a secondary channel offset field. A primary channel subfield may indicate the position of a primary channel. A channel center frequency segment 0 subfield and a channel center frequency segment 1 subfield may indicate the center frequency of an operating subchannel. A secondary channel offset field may indicate the position of a secondary channel.

In addition, a channel width in which a BSS operates may be determined based on at least one among signaling indicating a channel width and signaling indicating a channel position, which are included in an operation element. In addition, a channel position in which a BSS operates may be determined based on at least one among signaling indicating a channel width and signaling indicating a channel position, which are included in an operation element. In addition, it is possible to determine a channel width or a channel position, based on an operation element corresponding to one or more standards. Determining a channel width and a channel position, based on an operation element has been described, and this may be an operation of a STA receiving an operation element. For example, a STA receiving an operation element may be a non-AP STA. On the contrary, a STA transmitting an operation element may signal a channel width and signal a channel position, based on the operation element, as described above. For example, a STA transmitting an operation element may be an AP. According to an embodiment of the present disclosure, a channel width indicated to an HT STA may be one of 20 and 40 MHz channel widths. According to an embodiment of the present disclosure, a channel width indicated to a VHT STA may be one of 20, 40, 80, 160, and 80 +80 MHz channel widths. According to an embodiment of the present disclosure, a channel width indicated to a HE STA may be one of 20, 40, 80, 160, and 80 +80 MHz channel widths. According to an embodiment of the present disclosure, a channel width indicated to an EHT STA may be one of 20, 40, 80, 160, and 320 MHz channel widths. Alternatively, according to an embodiment of the present disclosure, a channel width indicated to an EHT STA may be one of 20, 40, 80, 160, 80+80, and 320 MHz channel widths.

Referring to FIG. 28A, a management frame may include a capabilities element or an operation element as described above. According to an embodiment, a management frame may include a capabilities element or an operation element corresponding to one or more standards. Therefore, even STAs of previous standards may operate based on the management frame. Furthermore, the overhead of information corresponding to an STA of a new standard may be reduced. Referring to FIG. 28A, a management frame transmitted by an EHT AP may include an HT capabilities element, an HT operation element, a VHT capabilities element, a VHT operation element, a HE capabilities element, a HE operation element, an EHT capabilities element, and an EHT operation element.

Referring to FIG. 28B, a HE operation element may include a 6 GHz operation information field. A 6 GHz operation information field may be signaling indicating channel information. Alternatively, a 6 GHz operation information field may include signaling indicating channel information. In addition, a 6 GHz operation information field may indicate channel information for a BSS of a 6 GHz band.

Referring to FIG. 28C, a 6 GHz operation information field may include a primary channel subfield, a control field, a channel center frequency segment 0 subfield, a channel center frequency segment 1 subfield, and a minimum rate subfield. In addition, each mentioned field may have a 1-octet size. A primary channel subfield included in a 6 GHz operation information field may indicate a channel number of a primary channel in a 6 GHz band. A channel center frequency segment 0 subfield may indicate center frequency indexes of all operating channels in a case of operation in a 20, 40, or 80 MHz channel width. A channel center frequency segment 0 subfield may indicate a center frequency index of a primary 80 MHz channel in a case of operation in a 160 or 80+80 MHz channel width. A channel center frequency segment 1 subfield may indicate center frequency indexes of all operating channels in a case of operation in a 20, 40, 80, or 160 MHz channel width. A channel center frequency segment 1 subfield may indicate a center frequency index of a secondary 80 MHz channel in a case of operation in a 80+80 MHz channel width.

In addition, a control field included in a 6 GHz operation information field may have the same format as that illustrated in FIG. 28D. Referring to FIG. 28D, a control field may include channel width, duplicate beacon, regulatory info, and reserved subfields. In addition, the respective mentioned subfields may have 2, 1, 3, and 2-bit sizes, respectively. That is, a 6 GHz operation information field may include a channel width subfield. A channel width indicated by the channel width subfield may be 20, 40, 80, and 160/80+80 MHz. More specifically, when a channel width subfield is 0, this indicates a 20 MHz channel width, when same is 1, this indicates a 40 MHz channel width, when same is 2, this indicates a 80 MHz channel width, and when same is 3, this may indicate a 160 or 80+80 MHz channel width.

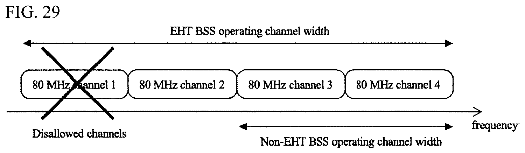

FIG. 29 is a diagram illustrating a configuration of the width of a BSS operating channel according to an embodiment of the present disclosure.

Referring to FIG. 29, an AP may configure different BSS operating channels for respective STAs according to whether each STA supports a corresponding channel.

Specifically, according to an embodiment of the present disclosure, the AP may notify a non-EHT STA and an EHT STA of different BSS operating channels. Specifically, the AP may notify a non-EHT STA and an EHT STA of different BSS operating channel widths. This can be limited to an example of operation in a 6GHz band. A non-EHT STA may include a HE STA. In an embodiment of the present disclosure, a BSS operating channel notified to a non-EHT STA may be called a non-EHT BSS operating channel. In addition, a BSS operating channel notified to an EHT STA may be called an EHT BSS operating channel. In the present disclosure, an EHT BSS operating channel and a non-EHT BSS operating channel being different from each other may be caused by the EHT BSS operating channel being unsupportable by a non-EHT BSS or a non-EHT STA. Alternatively, an EHT BSS operating channel and a non-EHT BSS operating channel being different from each other may be caused by the EHT BSS operating channel including a disallowed channel. More specifically, an EHT BSS operating channel and a non-EHT BSS operating channel being different from each other may be caused by the EHT BSS operating channel including at least one disallowed 20 MHz channel. A BSS operating channel may more specifically mean a BSS operating channel width.

In other words, an AP may include information related to a BSS operating channel in an operation element of each STA, which is included in a management frame, and transmit the information and the operation element. When the AP configures a BSS operating channel of each STA, the AP may configure a different BSS operating channel according to each STA. For example, in a case where the AP configures an operating channel for an EHT STA and an operating channel for a HE STA, the configured operating channel for the EHT STA and the operating channel for the HE STA may be different from each other. Specifically, an EHT STA may operate even when a BSS operating channel includes a punctured subchannel (or unavailable subchannel or disabled subchannel). In addition, the EHT STA is operable even when a discontinuous or 160 MHz or greater channel is allocated thereto. However, a HE STA may be inoperable when the configured BSS operating channel includes a punctured subchannel, or the BSS operating channel is discontinuous channels or 160 MHz or greater.

Therefore, when a BSS operating channel is configured for each STA by using an operation element of a corresponding STA included in a management frame, an AP may differently configure an EHT STA and a HE STA. That is, when at least one punctured subchannel is included in an EHT BSS operating channel and/ or an EHT BSS operating channel has a channel width not supported by a HE BSS, the AP may configure a BSS operating channel for a HE STA by using a HE operation element unlike a BSS operating channel of an EHT STA.

In this case, the BSS operating channel for a HE STA may be continuously configured within a maximum bandwidth including a primary channel.

Therefore, a HE operation element (a first operation element) for a HE STA and an EHT operation element (a second operation element) for an EHT STA, which are included in a management frame, may configure different BSS operating channels for the STAs, respectively. In this case, each STA may transmit a PPDU to the AP according to the configured BSS operating channel. In addition, if the channel is a punctured or disallowed, this may result from determination of the AP. For example, if a result of channel observation by the AP indicates that difficult operation is determined, the AP may configure the channel as a disallowed channel. Alternatively, the channel being disallowed may be based on a database. For example, when a channel is disallowed based on a database, the AP may configure the channel as a disallowed channel. According to an embodiment, a disallowed channel may be indicated by an EHT operation element or an EHT capabilities element. For example, a unit of a disallowed channel being signaled may be a 20 MHz bandwidth. For example, an EHT operation element may signal whether each 20 MHz channel configuring a BSS operating channel is disallowed. In addition, an AP and a non-AP STA of a BSS for which a disallowed channel is configured may not transmit a PPDU including the disallowed channel.

According to an embodiment, a non-EHT BSS operating channel may be a BSS operating channel indicated based on elements except for an EHT operation element or an EHT capabilities element. For example, a non-EHT BSS operating channel may be a non-EHT BSS operating channel indicated based on a HE operation element or a HE capabilities element. More specifically, a non-EHT BSS operating channel may be a non-EHT BSS operating channel indicated based on a 6 GHz operation information field included in a HE operation element. A value that is available as a non-EHT BSS operating channel width may be 20, 40, 80, or 160 MHz. Alternatively, a value that is available as a non-EHT BSS operating channel width may be 20, 40, 80, 160, or 80+80 MHz.

In addition, an EHT BSS operating channel may be a BSS operating channel indicated based on elements including an EHT operation element or an EHT capabilities element. More specifically, an EHT BSS operating channel may be an EHT BSS operating channel indicated based on a 6 GHz operation information field included in an EHT operation element. Alternatively, an EHT BSS operating channel may be an EHT BSS operating channel indicated based on a channel width subfield included in an EHT operation element. In addition, the EHT operation element may include information relating to a disallowed channel. A value that is available as an EHT BSS operating channel width may be 20, 40, 80, 160, or 320 MHz. Alternatively, a value that is available as a non-EHT BSS operating channel width may be 20, 40, 80, 160, 80+80, 320, or 160+160 MHz.

According to an embodiment of the present disclosure, a non-EHT BSS operating channel width may be a largest width, except a disallowed channel, in an EHT operating channel width. According to an embodiment of the present disclosure, a BSS operating channel width included in a HE operation element may be a largest width, except a disallowed channel, in an EHT operating channel width. Alternatively, a BSS operating channel width included in a HE operation element may be a largest width, except a disallowed channel, in a channel width signaled based on an EHT operation element. More specifically, the disallowed channel may indicate disallowed 20 MHz channels.

Referring to FIG. 29, four 80 MHz channels may continuously exist. For example, 80 MHz channel 1, 80 MHz channel 2, 80 MHz channel 3, and 80 MHz channel 4 may exist. In addition, 80 MHz channel 1 may be a disallowed channel. An EHT standard supports a channel width wider than that of an existing HE or previous standard, and thus may configure a BSS having a wide channel width except a disallowed channel. For example, a 320 MHz EHT BSS operating channel may be configured. A disallowed channel may be signaled, and operation using a maximum 240 MHz band is possible using 80 MHz channel 2, 80 MHz channel 3, and 80 MHz channel 4 except for the disallowed channel. A non-EHT BSS operating channel may be indicated differently from an EHT BSS operating channel. As described above, a non-EHT BSS operating channel width may be indicated as a largest width except for a disallowed channel. Therefore, a non-EHT BSS operating channel width may be indicated as 160 MHz. In addition, a 160 MHz channel, which is the non-EHT BSS operating channel, may be a channel configured by 80 MHz channel 3 and 80 MHz channel 4. Therefore, a primary channel may be required to exist in 80 MHz channel 3 or 80 MHz channel 4. That is, a primary channel being included in 80 MHz channel 2 may be impossible. The primary channel may indicate a primary 20 MHz channel. Alternatively, the primary channel may indicate a primary 40 MHz channel or a primary 80 MHz channel.

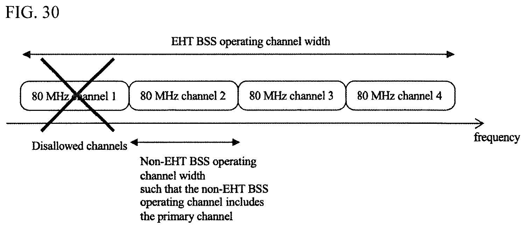

FIG. 30 is a diagram illustrating a configuration of the width of a BSS operating channel according to another embodiment of the present disclosure.

An embodiment of FIG. 30 may be an embodiment for solve a problem of a primary channel configuration being limited, described with reference to FIG. 29. Contents described above may be omitted.

According to an embodiment of the present disclosure, a non-EHT BSS operating channel width may be a largest width including a primary channel, except a disallowed channel, in an EHT operating channel width. The primary channel may be a primary 20 MHz channel. As another embodiment, the primary channel may be a primary 40 MHz channel or a primary 80 MHz channel. More specifically, a BSS operating channel width included in a HE operation element may be a largest width including a primary channel, except a disallowed channel, in an EHT operating channel width. Alternatively, a BSS operating channel width included in a HE operation element may be a largest width including a primary channel, except a disallowed channel, in a channel width signaled based on an EHT operation element. More specifically, the disallowed channel may indicate disallowed 20 MHz channels.

An embodiment of the present disclosure can be limited to a case of operation in a 6 GHz band.

In addition, a non-EHT BSS operating channel width may be information included in a HE operation element. More specifically, a non-EHT BSS operating channel width may be information included in a 6 GHz operation information field included in a HE operation element. More specifically, a non-EHT BSS operating channel width may be channel width information included in a 6 GHz operation information field included in a HE operation element.

Referring to FIG. 30, four 80 MHz channels may continuously exist. For example, 80 MHz channel 1, 80 MHz channel 2, 80 MHz channel 3, and 80 MHz channel 4 may exist. In addition, 80 MHz channel 1 may be a disallowed channel. An EHT standard supports a channel width wider than that of an existing HE or previous standard, and thus may configure a BSS having a wide channel width except a disallowed channel. For example, a 320 MHz EHT BSS operating channel may be configured. A disallowed channel may be signaled, and operation using a maximum 240 MHz band is possible using 80 MHz channel 2, 80 MHz channel 3, and 80 MHz channel 4 except for the disallowed channel.

A non-EHT BSS operating channel may be indicated differently from an EHT BSS operating channel. As described above, a non-EHT BSS operating channel width may be indicated as a largest width including a primary channel, except for a disallowed channel. Therefore, a non-EHT BSS operating channel width may be indicated as 80 MHz. In addition, a 80 MHz channel, which is the non-EHT BSS operating channel, may be a channel configured by 80 MHz channel 2. In addition, unlike an embodiment of the drawing, if configuring a primary channel to exist in 80 MHz channel 3 or 80 MHz channel 4 is desired, configuring a non-EHT BSS operating channel as 160 MHz is possible. Therefore, there may be the freedom of selecting a primary channel.

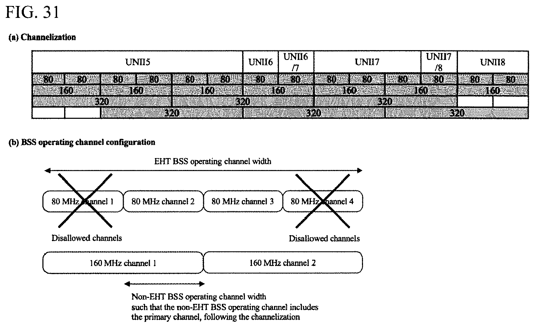

FIGS. 31A and 31B are diagrams illustrating channelization and a configuration of the width of a BSS operating channel according to an embodiment of the present disclosure.

An embodiment of FIGS. 31A and 31B may be an embodiment for solve a problem of a primary channel configuration being limited, described with reference to FIG. 29. Contents described above may be omitted. In addition, the embodiment of FIGS. 31A and 31B may be used together with the embodiment described with reference to FIG. 30.

According to an embodiment of the present disclosure, channelization may exist. That is, usable channels (bands) may be defined. FIG. 31A illustrates channelization for a 6 GHz band. For example, 80 MHz, 160 MHz, and 320 MHz channels, as illustrated in the drawing, may be defined. For example, configuring a 160 MHz channel by using two random continuous 80 MHz channels, other than a 160 MHz channel defined in channelization may be impossible. Similarly, configuring a 320 MHz channel by using four random continuous 80 MHz channels, other than a 320 MHz channel defined in channelization may be impossible.

According to an embodiment of the present disclosure, a non-EHT BSS operating channel width may be a largest width including a primary channel, except a disallowed channel, in an EHT operating channel width. More specifically according to an embodiment of the present disclosure, a non-EHT BSS operating channel width may be a largest width, in an EHT operating channel width, which does not include a disallowed channel, includes a primary channel, and does not exceed a channel defined in channelization. The primary channel may be a primary 20 MHz channel. As another embodiment, the primary channel may be a primary 40 MHz channel or a primary 80 MHz channel. More specifically according to an embodiment of the present disclosure, a BSS operating channel width included in a HE operation element may be a largest width, in an EHT operating channel width, which does not include a disallowed channel, includes a primary channel, and does not exceed a channel defined in channelization. Alternatively, a BSS operating channel width included in a HE operation element may be a largest width, in a channel width signaled based on an EHT operation element, the largest width not including a disallowed channel, including a primary channel, and not exceeding a channel defined in channelization. More specifically, the disallowed channel may indicate disallowed 20 MHz channels.

An embodiment of the present disclosure can be limited to a case of operation in a 6 GHz band.

In addition, a non-EHT BSS operating channel width may be information included in a HE operation element. More specifically, a non-EHT BSS operating channel width may be information included in a 6 GHz operation information field included in a HE operation element. More specifically, a non-EHT BSS operating channel width may be channel width information included in a 6 GHz operation information field included in a HE operation element.

Referring to FIGS. 31A and 31B, four 80 MHz channels may continuously exist. For example, 80 MHz channel 1, 80 MHz channel 2, 80 MHz channel 3, and 80 MHz channel 4 may exist. In addition, 80 MHz channel 1 and 80 MHz channel 4 may be disallowed channels. An EHT standard supports a channel width wider than that of an existing HE or previous standard, and thus may configure a BSS having a wide channel width except a disallowed channel. For example, a 320 MHz EHT BSS operating channel may be configured. A disallowed channel may be signaled, and operation using a maximum 160 MHz band is possible using 80 MHz channel 2 and 80 MHz channel 3 except for the disallowed channel. A non-EHT BSS operating channel may be indicated differently from an EHT BSS operating channel. As described above with reference to FIG. 30, when a non-EHT BSS operating channel width is simply indicated as a largest width including a primary channel, except for a disallowed channel, it may be necessary to indicate the non-EHT BSS operating channel width as 160 MHz. However, a 160 MHz channel configured by 80 MHz channel 2 and 80 MHz channel 3 may not exist, based on channelization. Therefore, this configuration of a non-EHT BSS operating channel width may be problematic, and may be impossible according to an embodiment of FIGS. 31A and 31B. Therefore, a non-EHT BSS operating channel width may be indicated as a largest width which does not include a disallowed channel, includes a primary channel, and is in channels defined by channelization. Therefore, a non-EHT BSS operating channel width may be indicated as 80 MHz. A 80 MHz channel, which is the non-EHT BSS operating channel, may be a channel configured by 80 MHz channel 2 or 80 MHz channel 3. If the primary channel exists in 80 MHz channel 2, a 80 MHz channel, which is the non-EHT BSS operating channel, may be 80 MHz channel 2. If the primary channel exists in 80 MHz channel 3, a 80 MHz channel, which is the non-EHT BSS operating channel, may be 80 MHz channel 3.

In addition, in a case where a BSS operating channel width is defined as a largest width satisfying some conditions, when a 80+80 MHz channel is considered together, a 80+80 MHz channel has a wider width than 80 MHz, and thus a 80+80 MHz channel may be configured as a BSS operating channel width. However, a non-contiguous channel configuration may not be desired as a BSS operating channel. For example, a non-contiguous channel may not be allowed or not be implemented as a non-EHT BSS operating channel width. Alternatively, according to an embodiment of the present disclosure, a non-contiguous channel may not be allowed as an EHT BSS operating channel width. Therefore, according to an embodiment of the present disclosure, a non-EHT BSS operating channel width may be a largest width, in an EHT operating channel width, which does not include a disallowed channel, includes a primary channel, does not exceed a channel defined by channelization, and is not a non-contiguous channel. The primary channel may be a primary 20 MHz channel. As another embodiment, the primary channel may be a primary 40 MHz channel or a primary 80 MHz channel. More specifically according to an embodiment of the present disclosure, a BSS operating channel width included in a HE operation element may be a largest width, in an EHT operating channel width, which does not include a disallowed channel, includes a primary channel, does not exceed a channel defined by channelization, and is not a non-contiguous channel. Alternatively, a BSS operating channel width included in a HE operation element may be a largest width, in a channel width signaled based on an EHT operation element, the largest width not including a disallowed channel, including a primary channel, not exceeding a channel defined by channelization, and not being a non-contiguous channel. More specifically, the disallowed channel may indicate disallowed 20 MHz channels.

Embodiments with reference to FIGS. 28A, 28B, 28C, and 28D to FIGS. 31A and 31B may be used in combination. In summary of embodiments described with reference to FIGS. 28A, 28B, 28C, and 28D to FIGS. 31A and 31B, an non-EHT BSS operating channel width may be indicated differently from an EHT operating channel width. For example, an non-EHT BSS operating channel width may be indicated as the width of a largest channel satisfying the following conditions in an EHT BSS operating channel.

1) The channel is a channel except for a disallowed channel.
2) The channel includes a primary channel.
3) The channel is a channel in channels defined by channelization.
4) The channel is a contiguous channel.

According to an embodiment, satisfaction of all the above conditions may be required. According to another embodiment, satisfaction of at least one among the above conditions may be required. For example, satisfaction of conditions 1), 2) and 3) among the above conditions may be required. In addition, a largest channel satisfying the following conditions in the EHT BSS operating channel may be a channel which can be signaled based on a HE operation element except for an EHT operation element.

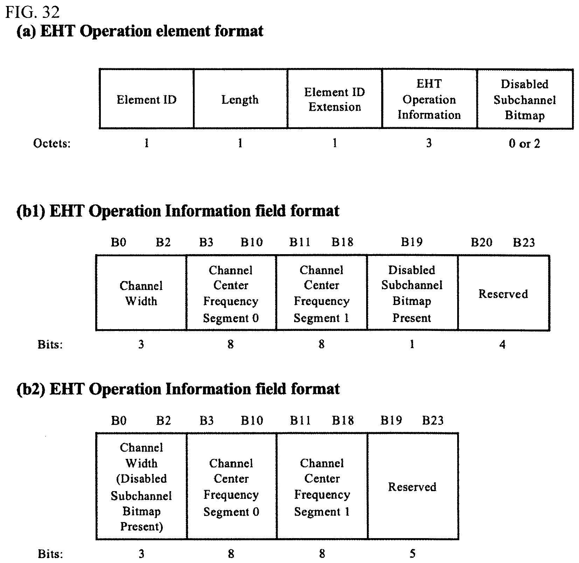

FIGS. 32A, 32B1, and 32B2 are diagrams illustrating an EHT operation element format according to an embodiment of the present disclosure.

As described above, information relating to an operation of an EHT BSS can be included in an EHT operation element. An EHT operation element may be a type of an operation element described above.

In addition, an operation element can be transmitted by an AP or AP MLD. A non-AP STA or a non-AP MLD may operate based on an operation element received from an AP or AP MLD. In addition, an AP or AP MLD may operate based on a transmitted operation element.

In addition, an EHT operation element can include information relating to an operating channel of a BSS. Information relating to an operating channel may include a channel width. In addition, information relating to an operating channel may include a channel center frequency segment (CCFS). A CCFS may indicate the center frequency of a pre-configured frequency segment. In addition, information relating to an operating channel may include a disallowed channel. In addition, contents described above may be omitted in the present embodiment.

An EHT operation element can indicate a disallowed channel. In the present disclosure, disallowed, disabled, inactive, and punctured may be used together. In addition, a channel, a subchannel, and a band may be used together. Therefore, a disallowed channel mentioned above may indicate a disabled subchannel.

According to an embodiment of the present disclosure, a disabled subchannel may be indicated for a subchannel (band) having a pre-configured unit. For example, the pre-configured unit may be 20 MHz. A disabled subchannel may be indicated through a bitmap. For example, each bit of a bitmap may indicate whether a subchannel having a pre-configured unit is disabled. In addition, each bit of a bitmap may correspond to a non-overlapping subchannel. In addition, a bit (bit index) sequence of a bitmap may correspond to a subchannel having a pre-configured unit according to a frequency sequence. For example, bit indexes B0, B1, B2, ..., and B15 of a bitmap may correspond to the lowest frequency of a subchannel having a pre-configured unit, the second lowest frequency of a subchannel having a pre-configured unit, third lowest frequency of a subchannel having a pre-configured unit, ..., and the sixteenth lowest (or highest) frequency of a subchannel having a pre-configured unit, respectively. For example, if a bit of a bitmap is configured as 1, it is possible that a subchannel corresponding to the bit configured as 1 is disabled. In addition, if a bit of a bitmap is configured as 0, it is possible that a subchannel corresponding to the bit configured as 0 is not disabled (is enabled). Alternatively, on the other hand, a bit value of 0 and a bit value of 1 may indicate enabled and disabled, respectively.

In addition, a bit not corresponding to a subchannel in which a BSS operates may be configured as a pre-configured value, for example, 1. For example, when a BSS operates in a 160 MHz channel width, a bit of a bitmap not corresponding to operating 160 MHz may be configured as a pre-configured value. In addition, a bit corresponding to a primary 20 MHz channel may be configured as a pre-configured value, for example, 0.

In addition, a STA or MLD may not transmit a PPDU, a frame, or energy in a disabled subchannel. A STA or MLD may be able to transmit a PPDU, a frame, or energy only in a subchannel which is not disabled. In addition, not transmitting in a disabled subchannel can be called puncturing or preamble puncturing. In addition, puncturing based on a predetermined disabled subchannel in a long term may be called static puncturing. For example, puncturing based on a transmitted or received EHT operation element may be called static puncturing. In addition, puncturing in which a disabled subchannel may vary in a unit of a PPDU may be called dynamic puncturing. In addition, puncturing based on a disabled subchannel included in a PPDU or frame may be called dynamic puncturing. A disabled subchannel included in a PPDU or frame may not correspond to disabled subchannel information included in an EHT operation element.

In addition, a STA may configure a TXVECTOR parameter INACTIVE_subchannel S value, based on received disabled subchannel information or transmitted disabled subchannel information. A TXVECTOR parameter may be information transmitted from a MAC layer to a PHY layer. In addition, a STA may transmit a PPDU, based on TXVECTOR parameter INACTIVE_subchannel S. For example, the STA may not transmit a PPDU in a subchannel indicated as being inactive by TXVECTOR parameter INACTIVE_subchannel S.

Referring to FIG. 32A, an EHT operation element can include element ID, length, element ID extension, EHT operation information, and disabled subchannel bitmap fields. Element ID and element ID extension fields may function to identify which element an element including the element ID and element ID extension fields is. A length field may indicate the length of an element. An EHT operation information field and a disabled subchannel bitmap field may indicate information relating to an operating channel of a BSS. A disabled subchannel bitmap subfield may be a bitmap indicating a disabled subchannel described above. There may be signaling indicating whether a disabled subchannel bitmap subfield exists. For example, an EHT operation element or EHT Operation Information field may include signaling indicating whether a disabled subchannel bitmap subfield exists. Signaling indicating whether a disabled subchannel bitmap subfield exists may be a disabled subchannel bitmap present subfield. A disabled subchannel bitmap present subfield may be 1 bit. When there is a disabled subchannel bitmap subfield, the length thereof may be 2 octets. In addition, each bit of a disabled subchannel bitmap subfield may indicate information corresponding to a 20 MHz subchannel. A disabled subchannel bitmap subfield may indicate information corresponding to a total of 320 MHz.

For example, an EHT operation information field format may be as shown in FIG. 32B1 or FIG. 32B2.

Referring to FIG. 32B1, an EHT operation information field may include a channel width subfield indicating a channel width. A channel width subfield may indicate a channel width without including other information. A channel width indicated by a channel width subfield may include 20, 40, 80, 160, and 320 MHz. The value of bits "B2, B1, B0" in a channel width subfield being 000, 001, 010, 011, and 100 may indicate 20, 40, 80, 160, and 320 MHz. A channel width subfield may be 3 bits as an embodiment. In another embodiment, a channel width subfield may be 1 octet. In addition, an EHT operation information field may include a disabled subchannel bitmap subfield described above. Whether an EHT operation element includes a disabled subchannel bitmap subfield may be determined based on a value of a disabled subchannel bitmap present subfield. For example, when a disabled subchannel bitmap present subfield is configured as 1, an EHT operation element may include a disabled subchannel bitmap subfield. When a disabled subchannel bitmap present subfield is configured as 0, an EHT operation element may not include a disabled subchannel bitmap subfield.

Referring to FIG. 32B2, an EHT operation information field may indicate 1) a channel width and 2) an EHT operation element includes a disabled subchannel bitmap subfield by using one subfield. That is, one subfield can include a function of a channel width subfield and a function of a disabled subchannel bitmap present subfield which are described in FIG. 32B1. For example, the one subfield may be a channel width (disabled subchannel bitmap present) subfield shown in FIG. 32B2. For example, one value indicated by a channel width (disabled subchannel bitmap present) subfield may indicate which value a channel width is, and whether a disabled subchannel bitmap subfield is included. For example, each value of a channel width (disabled subchannel bitmap present) subfield may indicate one of pieces of listed information indicated by the following numbers (1) to (10).

(1) A channel width is 20 MHz, and a disabled subchannel bitmap subfield is not included.

(2) A channel width is 20 MHz, and a disabled subchannel bitmap subfield is included.

(3) A channel width is 40 MHz, and a disabled subchannel bitmap subfield is not included.

(4) A channel width is 40 MHz, and a disabled subchannel bitmap subfield is included.

(5) A channel width is 80 MHz, and a disabled subchannel bitmap subfield is not included.

(6) A channel width is 80 MHz, and a disabled subchannel bitmap subfield is included.

(7) A channel width is 160 MHz, and a disabled subchannel bitmap subfield is not included.

(8) A channel width is 160 MHz, and a disabled subchannel bitmap subfield is included.

(9) A channel width is 320 MHz, and a disabled subchannel bitmap subfield is not included.

(10) A channel width is 320 MHz, and a disabled subchannel bitmap subfield is included.

However, an operating channel of a BSS may be a 20 MHz width, and a unit of configuring a disabled subchannel may be 20 MHz. In a case where an operating channel of a BSS is a 20 MHz width as described above, a disabled subchannel may not be configured. Alternatively, a primary 20 MHz channel may not be disabled. Therefore, including a disabled subchannel bitmap subfield may be meaningless. In addition, in a case where an operating channel of a BSS is a 40 MHz width and a unit of configuring a disabled subchannel is 20 MHz, when a primary 20 MHz channel is not be disabled, if a channel width is 40 MHz, a disableable channel may be a secondary 20 MHz channel. However, in this case, an enabled subchannel is only the primary 20 Hz channel, and thus the same operation as that of a case of a BSS operating channel width being 20 MHz may be performed. Therefore, when a channel width is 40 MHz, a disabled subchannel may not be configured. In addition, in this case, including a disabled subchannel bitmap subfield may be meaningless.

Therefore, each value of a channel width (disabled subchannel bitmap present) subfield may indicate one of pieces of listed information indicated by the following numbers (1) to (8).

(1) A channel width is 20 MHz, and a disabled subchannel bitmap subfield is not included.
(2) A channel width is 40 MHz, and a disabled subchannel bitmap subfield is not included.
(3) A channel width is 80 MHz, and a disabled subchannel bitmap subfield is not included.
(4) A channel width is 80 MHz, and a disabled subchannel bitmap subfield is included.
(5) A channel width is 160 MHz, and a disabled subchannel bitmap subfield is not included.
(6) A channel width is 160 MHz, and a disabled subchannel bitmap subfield is included.
(7) A channel width is 320 MHz, and a disabled subchannel bitmap subfield is not included.
(8) A channel width is 320 MHz, and a disabled subchannel bitmap subfield is included.

Alternatively, the above numbers (1) and (2) may indicate the same meaning as not including information indicating a disabled subchannel bitmap subfield not being included, and including only channel width information.

In FIG. 32B2, a channel width (disabled subchannel bitmap present) subfield may be 3 bits. Alternatively, in FIG. 32B2, a channel width (disabled subchannel bitmap present) subfield may be 1 octet.

Referring to FIG. 32B1 or FIG. 32B2, an EHT operation information field may include CCFS information. For example, CCFS information may be included in a channel center frequency segment 0 subfield and a channel center frequency segment 1 subfield.

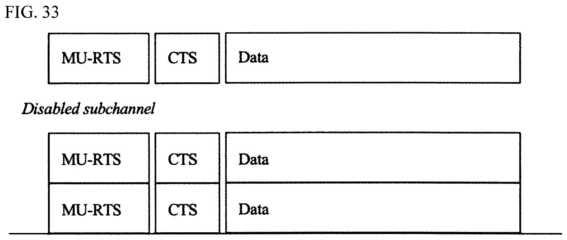

FIG. 33 is a diagram illustrating an example of transmission considering a disabled subchannel according to an embodiment of the present disclosure.

According to an embodiment of the present disclosure, as described with reference to FIGS. 32A, 32B1, and 32B2, a disabled subchannel may be indicated. Referring to FIG. 33, a PPDU or frame may be transmitted based on an indicated or indicating disabled subchannel. For example, a PPDU or frame may be transmitted based on the most recently indicated or indicating disabled subchannel. For example, a PPDU or frame may not be transmitted in the most recently indicated or indicating disabled subchannel. For example, when a non-HT (duplicate) PPDU is transmitted, the PPDU may be transmitted based on an indicated or indicating disabled subchannel. Alternatively, when a non-HT (duplicate) PPDU is transmitted, the PPDU may be transmitted based on TXVECTOR parameter INACTIVE _subchannel S descried above.

Referring to FIG. 33, an AP may transmit a PPDU including a MU-RTS frame. The PPDU can be transmitted in subchannels except a disabled subchannel. In addition, a STA having received the MU-RTS frame may respond by transmitting a PPDU including a CTS frame. The STA transmitting the CTS frame may transmit a PPDU in subchannels except a disabled subchannel. For example, if a channel or RU indicated by a MU-RTS frame includes a disabled subchannel or is indicated thereby regardless of a disabled subchannel, the STA may transmit a PPDU in subchannels except a disabled subchannel that the STA has already known. In addition, if an additional subchannel other than a disabled subchannel that the STA has already known is indicated by a MU-RTS frame, the STA may respond in subchannels except the disabled subchannel that the STA has already known, and the additional disabled subchannel. Even a preamble may not be transmitted in a disabled subchannel. In addition, the STA having received a CTS frame may transmit a subsequent frame, for example, a data frame. In this case, the frame can be transmitted only in subchannels except for a disabled subchannel. If a CTS frame indicates an additional disabled subchannel, a PPDU may be transmitted in subchannels also except the additional disabled subchannel.

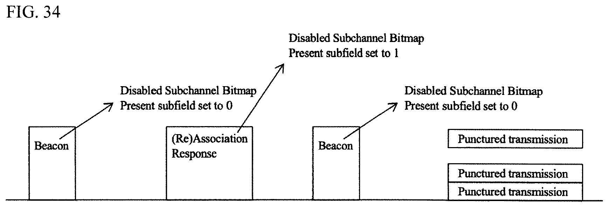

FIG. 34 is a diagram illustrating an example of signaling of a disabled subchannel according to an embodiment of the present disclosure.

In an embodiment of FIG. 34, a more detailed method of indicating a disabled subchannel is described. Contents described above may be omitted. In an embodiment of the present disclosure, describing an EHT operation element as including a disabled subchannel bitmap subfield may have the same meaning as a case where signaling indicating whether a disabled subchannel bitmap present subfield or a disabled subchannel bitmap subfield is included is indicated as including a disabled subchannel bitmap subfield. In addition, describing an EHT operation element as not including a disabled subchannel bitmap subfield may have the same meaning as a case where signaling indicating whether a disabled subchannel bitmap present subfield or a disabled subchannel bitmap subfield is included is indicated as not including a disabled subchannel bitmap subfield.

According to an embodiment of the present disclosure, even when a disabled subchannel exists in a BSS, an EHT operation element may not always include a disabled subchannel bitmap subchannel. Therefore, a STA receiving an EHT operation element may not recognize that there is no disabled subchannel, even when the EHT operation element does not include a disabled subchannel bitmap subfield. According to an embodiment, this case may be limited to an EHT operation element being included in a beacon frame. Alternatively, this case may be limited to an EHT operation element being included in a beacon frame or a probe response frame. Accordingly, a problem of a management frame, such as a beacon frame or a probe response frame, occupying a lot of resources may be reduced.

However, when a disabled subchannel exists, it may be required for an STA to clearly recognize the existence and operate.

Therefore, according to an embodiment of the present disclosure, an EHT operation element included in a pre-configured frame may always include a disabled subchannel bitmap subfield. The pre-configured frame may be an association response frame or a reassociation response frame. Alternatively, the pre-configured frame may be an association response frame, a reassociation response frame, or a probe response frame. In addition, in the present disclosure, when an STA operates based on a received pre-configured frame, the frame may indicate the most recently received pre-configured frame.

According to a more specific embodiment, when there is a disabled subchannel, an EHT operation element included in a pre-configured frame may always include a disabled subchannel bitmap subfield. In a case where there is no disabled subchannel, even an EHT operation element included in a pre-configured frame may not include a disabled subchannel bitmap subfield. In addition, when a pre-configured frame received by a STA does not include a disabled subchannel bitmap subfield, the STA may recognize absence of a disabled subchannel and operate. When a pre-configured frame received by a STA includes a disabled subchannel bitmap subfield, the STA may recognize a disabled subchannel, based on the received disabled subchannel bitmap subfield, and operate. For example, a STA having failed to receive any disabled subchannel bitmap subfields may determine that there is no disabled subchannel. Having failed to receive any disabled subchannel bitmap subfields may be caused by an association response frame not including a disabled subchannel bitmap subfield.

According to a more specific embodiment, regardless of whether there is a disabled subchannel, an EHT operation element included in a pre-configured frame may always include a disabled subchannel bitmap subfield. In this case, when there is no disabled subchannel, absence of a disabled subchannel may be indicated by a disabled subchannel bitmap subfield of an EHT operation element included in a pre-configured frame (e.g., all bits corresponding to operating channels may be configured as 0). An STA may operate after recognizing whether there is a disabled subchannel or which subchannel a disabled subchannel is, based on a disabled subchannel bitmap subfield included in a received pre-configured frame.

Referring to FIG. 34, an AP may transmit a beacon frame, an association response frame, and a reassociation frame. A management frame transmitted by an AP, for example, a beacon frame, an association response frame, a reassociation frame, or a probe response frame, may include an EHT operation element. In addition, a disabled subchannel may exist in a BSS operated by the AP. Even though a disabled subchannel exists, when an AP transmits a beacon frame, the AP may configure a disabled subchannel bitmap present subfield as 0 (not including a bitmap). This may be intended to reduce the size of a beacon frame. Even when a STA receives an EHT operation element having a disabled subchannel bitmap present subfield configured as 0, the STA may not recognize whether there is a disabled subchannel, based on the EHT operation element. A STA may recognize whether a disabled subchannel exists, and which subchannel is disabled, based on an EHT operation element included in the most recently received association response frame or reassociation frame.

In addition, in a case where an AP transmits an association response frame or a reassociation response frame, the AP may always configure a disabled subchannel bitmap present subfield as 1 (including a bitmap). An STA may transmit a PPDU, based on an EHT operation element and a disabled subchannel bitmap subfield included in the most recently received association response frame or reassociation response frame. The STA may perform puncturing for a subchannel indicated as a disabled subchannel, to perform punctured transmission. Even when the most recently received EHT operation element does not include a disabled subchannel bitmap subfield, as illustrated in FIG. 34, the most recently received EHT operation element is included in a beacon frame, and thus the STA may not recognize that there is no disabled subchannel.

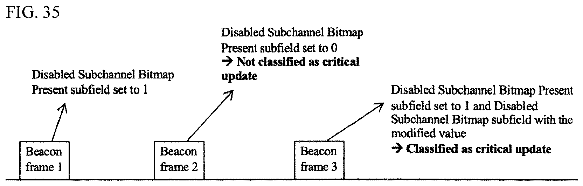

FIG. 35 is a diagram illustrating signaling of a disabled subchannel and a critical update according to an embodiment of the present disclosure.

According to an embodiment of the present disclosure, the following events may be classified as critical updates.

(a) Inclusion of a channel switch announcement element
(b) Inclusion of an extended channel switch announcement element
(c) Modification of the EDCA parameters element
(d) Inclusion of a quiet element
(e) Modification of the DSSS parameter set
(f) Modification of the CF parameter set element
(g) Modification of the HT operation element
(h) Inclusion of a wide bandwidth channel switch element
(i) Inclusion of a channel switch wrapper element
(j) Inclusion of an operating mode notification element
(k) Inclusion of a quiet channel element
(l) Modification of the VHT operation element
(m) Modification of the HE operation element
(n) Insertion of a Broadcast TWT element
(o) Inclusion of the BSS Color change announcement element
(p) Modification of the MU EDCA parameter set element
(q) Modification of the spatial reuse parameter set element
(r) Modification of the UORA parameter set element
(s) Modification of the EHT operation element

Modification of an element may imply that there is a change in at least one field value of the element. Inclusion of an element may imply that the element is included in a beacon frame. Insertion of an element may imply that the element is not included in a previous beacon frame and is included in a current beacon frame. Alternatively, insertion of an element may imply that the element is not included in a previous beacon frame and is included in a next beacon frame.

In addition, when a critical update occurs, an AP may change a value of a pre-configured field (or subfield). According to an embodiment, an AP may change a value of a pre-configured field even in a case of occurrence of a critical update corresponding to a BSS operated by other APs of an MLD to which the AP belongs, as well as a BSS operated by the AP. That is, even when an element corresponding to a critical update included in a multi-link element is changed, the AP may change a value of a pre-configured field. Alternatively, an AP may change a value of a pre-configured field even in a case of occurrence of a critical update corresponding to a BSS operated by other APs in a multiple-BSSID set to which the AP belongs, as well as a BSS operated by the AP. That is, even when an element corresponding to a critical update included in a multiple-BSSID element is changed, the AP may change a value of a pre-configured field. When an STA has identified that the pre-configured field has been changed, the STA may identify which critical update has occurred, or which element has been changed, and change a corresponding parameter and operate.

For example, the pre-configured field may be a flag indicating whether a critical update has occurred. For example, the pre-configured field may be a check beacon flag subfield or a critical update flag subfield. A flag indicating whether a critical update has occurred may be 1 bit. If a flag indicating whether a critical update has occurred is configured as 1, the critical update may have occurred.

Alternatively, the pre-configured field may be a field indicating a sequence. For example, the pre-configured field may be a field increasing a value when a critical update has occurred. For example, the pre-configured field may be a field increasing a value by 1 when a critical update has occurred. A sequence value may be a maximum value, and may be obtained by modulo calculation. For example, the pre-configured field may be a check beacon field or change sequence field.

As described with reference to FIG. 34, even when a disabled subchannel exists, it is possible that an EHT operation element does not include a disabled subchannel bitmap subfield. In addition, when a disabled subchannel exists, it is also possible that an EHT operation element includes a disabled subchannel bitmap subfield. In addition, as described with reference to FIGS. 32A, 32B1, and 32B2, when whether an EHT operation element includes a disabled subchannel bitmap subfield is changed, a disabled subchannel bitmap present subfield value included in the EHT operation element may be changed. Therefore, in a case where a change of at least one value included in an EHT operation element is defined as a critical update, even when a disabled subchannel bitmap subfield having been included is excluded to simply reduce the size of a management frame, or when whether a disabled subchannel bitmap subfield is included is changed with no change of an actual disabled subchannel, this may be classified as a critical update. Therefore, a STA may unnecessarily identify a change of a parameter.

Therefore, according to an embodiment of the present disclosure, whether an EHT operation element includes a disabled subchannel bitmap subfield may not be classified as a critical update. Alternatively, a change of a disabled subchannel bitmap present subfield included in an EHT operation element may not be classified as a critical update. This case may be limited to an EHT operation element being included in a beacon frame.

In addition, a change of at least one value of a field other than a disabled subchannel bitmap present subfield of an EHT operation element may be classified as a critical update. In addition, a change of a value of a disabled subchannel bitmap subfield included in an EHT operation element may be classified as a critical update.

Alternatively, an EHT operation element included in an association response frame or a reassociation response frame (or probe response frame) may be classified as a critical update when the value of the EHT operation element changes compared to an EHT operation element included in a previous association response frame or reassociation response frame (or probe response frame). In this case, even a case where a value of a disabled subchannel bitmap present subfield changes may be classified as a critical update.

Referring to FIG. 35, when an AP transmits beacon frame 1, the AP may configure a disabled subchannel bitmap present subfield as 1. In addition, when the AP transmits beacon frame 2, the AP may configure a disabled subchannel bitmap present subfield as 0. This may be intended to reduce the size of beacon frame 2. In addition, a value of the disabled subchannel bitmap present subfield included in an EHT operation element has been changed to be different from before, but this case may be not classified as a critical update. Therefore, the AP may not change a value of a pre-configured field, which is changed, when a critical update included in beacon frame 2 occurs. In addition, in beacon frame 3, a disabled subchannel bitmap present subfield is configured as 1, and the value of a disabled subchannel bitmap subfield may be different from that of a disabled subchannel bitmap subfield included in beacon frame 1. This case may be classified as a critical update. In addition, the AP may change a value of a pre-configured field, which is changed, when a critical update included in beacon frame 3 occurs.

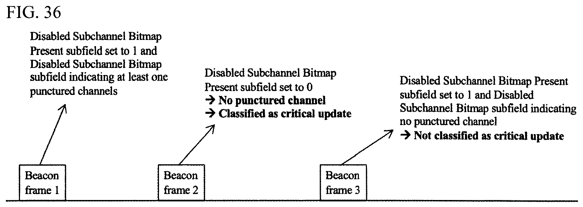

FIG. 36 is a diagram illustrating signaling of a disabled subchannel and a critical update according to another embodiment of the present disclosure.

In a case where an embodiment as described with reference to FIG. 34 or FIG. 35 is used, a STA may be required to additionally identify the type of a frame in order to determine whether there is a disabled subchannel, and this may action as a burden of implementation. Therefore, FIG. 36 illustrates an embodiment for solving this problem. Contents described above may be omitted in the present embodiment.

According to an embodiment of the present disclosure, when there is a disabled subchannel, an EHT operation element may always include a disabled subchannel bitmap subfield. Therefore, a STA may determine a disabled subchannel, based on the most recently received EHT operation element. This may also be applied to a case where an EHT operation element is included in a beacon frame, as well as being included in an association response frame or reassociation response frame.

In addition, in the present embodiment, when there is no disabled subchannel, it is possible that a disabled subchannel bitmap subfield is not included in an EHT operation element transmitted by an AP. In addition, when an EHT operation element received by a STA does not include a disabled subchannel bitmap subfield, the STA may determine that there is no disabled subchannel.

That is, an operation element may include a disabled subchannel bitmap present subfield indicating whether a disabled subchannel bitmap subfield indicating the at least one unavailable channel (or disabled subchannel or punctured subchannel) of a BSS operating channel is included. In this case, each bit of a disabled subchannel bitmap subfield may indicate whether a corresponding subchannel is unavailable. For example, if a bit value is "0", a corresponding channel is available (e.g., not punctured), and if a bit value is "1", this indicates that a corresponding channel is unavailable (e.g., punctured).

In addition, a bit value of a disabled subchannel bitmap present subfield may indicate whether a disabled subchannel bitmap subfield exists. For example, if a bit value of a disabled subchannel bitmap present subfield is configured as "1", a disabled subchannel bitmap subfield is included in an operation element, and if a bit value of a disabled subchannel bitmap present subfield is configured as "0", a disabled subchannel bitmap subfield is not included in an operation element.

Alternatively, when there is no disabled subchannel, an AP can include a disabled subchannel bitmap subfield in a transmitted EHT operation element, but configure, as 0 (to be enabled), all bits corresponding to operating subchannels. Even though a received EHT operation element includes a disabled subchannel bitmap subfield, when all bits for operating channels are configured to be enabled, a STA receiving the EHT operation element may determine that there is no disabled subchannel, and operate.

Therefore, according to a described embodiment, there may be two method by which an EHT operation element indicates absence of a disabled subchannel. One of the two methods is not including a disabled subchannel bitmap subfield in an EHT operation element, and the other one is configuring, to be enabled, all values corresponding to operating channels among bits of a disabled subchannel bitmap subfield included in an EHT operation element. In addition, both of the two methods can be used by selection of an AP. When configuration of an EHT operation element is switched between the two methods, a value of a field included in the EHT operation element may be changed. For example, a value of a disabled subchannel bitmap present subfield may be changed. According to an embodiment of the present disclosure, this switching between the two methods may not be classified as a critical update. That is, even when a value of a disabled subchannel bitmap present subfield is changed, if a disabled subchannel bitmap subfield does not indicate at least one disabled subchannel, this change may not be classified as a critical update.

When a value of a disabled subchannel bitmap present subfield is changed, in a case where a disabled subchannel bitmap subfield has indicated at least one disabled subchannel, the change may be classified as a critical update. For example, after transmission of an EHT operation element in which a disabled subchannel bitmap subfield indicates at least one disabled subchannel, when an EHT operation element not including a disabled subchannel bitmap subfield is transmitted, this case may be classified as a critical update. Alternatively, after transmission of an EHT operation element not including a disabled subchannel bitmap subfield, when an EHT operation element in which a disabled subchannel bitmap subfield indicates at least one disabled subchannel is transmitted, this case may be classified as a critical update.

In addition, even when a field other than the above mentioned fields of an EHT operation element is changed, this change may be classified as a critical update.

Therefore, when a value of a field indicating whether there is a disabled subchannel bitmap subfield indicating an unavailable subchannel is changed, this change may be classified as a critical update, and thus a value of a field indicating the critical update may be increased. In this case, an AP may transmit, to a STA, a frame (e.g., TIM frame) including a field indicating a critical update, and the STA may recognize whether an operational parameter is changed, based on the frame. That is, when a bit value of a disabled subchannel bitmap present subfield that is a field indicating whether there is a disabled subchannel bitmap subfield is changed from "0" to "1" (or "1" to "0"), this change is classified as a critical update. Therefore, an AP may increase a value of a field indicating a critical update and transmit same to a STA. In this case, the STA may recognize that an operational parameter has been changed, receive a management frame, and recognize the updated operational parameter.

According to another embodiment, a method by which an EHT operation element indicates absence of a disabled subchannel, as described above, may not allow one configuration of the two methods. For example, an EHT operation element may not always a disabled subchannel bitmap subfield in order to indicate that there is no disabled subchannel. That is, a disabled subchannel bitmap present subfield may be always configured as 0. In addition, a configuration that an EHT operation element includes a disabled subchannel bitmap subfield and does not indicate any disabled subchannels may not be allowed. For example, it may not be allowed that an EHT operation element includes a disabled subchannel bitmap subfield and all bits corresponding to operating channels among bits of the disabled subchannel bitmap subfield are configured to be enabled. This is because such a configuration may be redundant. According to an embodiment of the present disclosure, when an EHT operation element includes a disabled subchannel bitmap subfield, it is possible to indicate at least one disabled subchannel. That is, when an EHT operation element includes a disabled subchannel bitmap subfield, it is possible that at least one bit among bits corresponding to operating channels of the disabled subchannel bitmap subfield is configured as 1. In this case, when at least one value among fields included in an EHT operation element is changed, this change can be classified as a critical update. Even if a disabled subchannel bitmap present subfield value included in an EHT operation element is changed, this change can be classified as a critical update.

In an embodiment of the present disclosure, a description limited to a value corresponding to an operating channel in a disabled subchannel bitmap subfield can be extended to bits of the disabled subchannel bitmap subfield. For example, an embodiment in which a value corresponding to an operating channel in a disabled subchannel bitmap subfield is configured to the same value can be extended to an embodiment in which all bits of the disabled subchannel bitmap subfield are configured to be the same value.

Referring to FIG. 36, an AP may include beacon frame 1, beacon frame 2, and beacon frame 3, and each frame may include an EHT operation element. In beacon frame 1, a disabled subchannel bitmap present subfield may be configured as 1. In addition, a disabled subchannel bitmap subfield included in beacon frame 1 may indicate at least one disabled subchannel (punctured subchannel). A STA receiving beacon frame 1 may determine that there is a disabled subchannel, and which subchannel is disabled, based on the disabled subchannel bitmap subfield. In addition, a channel situation has changed, and thus an AP may change all subchannels to be used. A disabled subchannel bitmap present subfield included in an EHT operation element included in beacon frame 2 may be configured as 0. Therefore, there may be no disabled subchannel bitmap subfield in the EHT operation element included in beacon frame 2. The STA having received the EHT operation element may identify that there is no disabled subchannel bitmap subfield, and determine that there is no disabled subchannel. A disabled subchannel bitmap subfield indicating a disabled subchannel is included in beacon frame 1, and a disabled subchannel bitmap subfield is not included in beacon frame 2, and the AP may classify this change as a critical update. In an EHT operation element included in beacon frame 3, a disabled subchannel bitmap present subfield may be configured as 1, and a disabled subchannel bitmap subfield included in the EHT operation element included in beacon frame 3 may indicate that there is no disabled subchannel. That is, all bits corresponding to operating channels in the disabled subchannel bitmap subfield may be configured as 0. In this case, beacon frame 2 not including a disabled subchannel bitmap subfield indicates absence of a disabled channel, beacon frame 3 also indicates that there is no disabled channel, and thus this case may not be classified as a critical update.

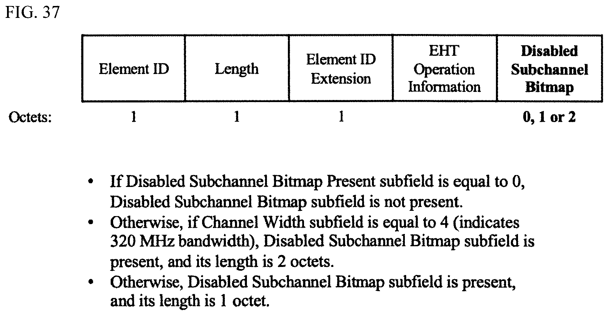

FIG. 37 is a diagram illustrating an EHT operation element format according to an embodiment of the present disclosure.

A disabled subchannel bitmap subfield described with reference to FIGS. 32A, 32B1, and 32B2 has a constant length if it exists. However, a channel width in which a BSS operates may not be a maximum channel width in which an element supports signaling, and in this case, a disabled subchannel bitmap subfield may be required to include a redundant value. Therefore, in the present disclosure, a method for reducing the length of a disabled subchannel bitmap subfield is described.

According to an embodiment of the present disclosure, the length of a disabled subchannel bitmap subfield included in an EHT operation element may vary based on a channel width indicated by the EHT operation element. For example, when a channel width indicated by an EHT operation element is 320 MHz, a disabled subchannel bitmap subfield included in the EHT operation element may be 2 octets. In addition, when a channel width indicated by an EHT operation element is smaller than 320 MHz, that is, when the channel width is equal to or smaller than 160 MHz, a disabled subchannel bitmap subfield included in the EHT operation element may be 1 octet. A channel width subfield included in an EHT operation element is 0, 1, 2, 3, and 4, respective values may indicate channel widths of 20, 40, 80, 160, and 320 MHz, respectively.

Referring to FIG. 37, an EHT operation element may include an EHT operation information field and a disabled subchannel bitmap subfield. An EHT operation information field may include a channel width subchannel and a disabled subchannel bitmap present subfield. If a disabled subchannel bitmap present subfield is configured as 0, the length of a disabled subchannel bitmap subfield may be 0 octets. That is, the disabled subchannel bitmap subfield may not exist. In addition, if a disabled subchannel bitmap present subfield is configured as 1 and a channel width subfield indicates a 320 MHz channel width, the length of a disabled subchannel bitmap subfield may be 2 octets. In addition, if a disabled subchannel bitmap present subfield is configured as 1 and a channel width subfield indicates a channel width equal to or smaller than 160 MHz, the length of a disabled subchannel bitmap subfield may be 1 octet.

According to an embodiment of the present disclosure, the length of a disabled subchannel bitmap subfield may vary based on a band corresponding to an EHT operation element. For example, when a band corresponding to an EHT operation element is a 2.4 GHz band, the length of a disabled subchannel bitmap subfield may be 1 octet. This is because channelization of 320 MHz is not defined in a 2.4 GHz band. In addition, when a band corresponding to an EHT operation element is a 5 or 6 GHz band, the length of a disabled subchannel bitmap subfield may be 2 octets. A band corresponding to an EHT operation element can be indicated by an HT operation element, a VHT operation element, or a HE operation element corresponding to the EHT operation element. For example, a channel number may indicate a corresponding band.

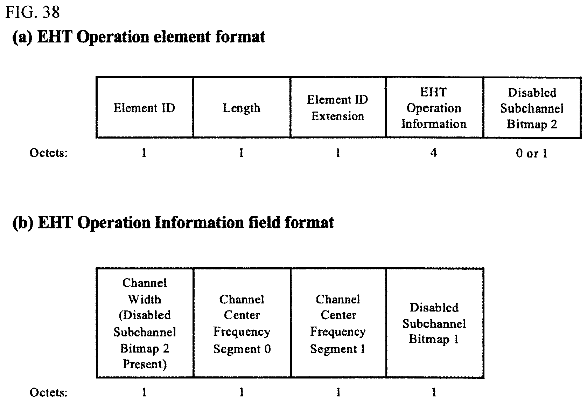

FIGS. 38A and 38B are diagrams illustrating an EHT operation element format according to another embodiment of the present disclosure.

An EHT operation element described with reference to FIGS. 32A, 32B1, and 32B2 or FIG. 37 may include a reserved field for byte alignment. Therefore, with reference to FIGS. 38A and 38B, an embodiment of reducing a reserved field and signaling a disabled subchannel is described.

According to an embodiment of the present disclosure, an EHT operation element may always include a disabled subchannel bitmap subfield for pre-configured subchannel 1. Referring to FIGS. 38A and 38B, a disabled subchannel bitmap subfield for pre-configured subchannel 1 may be a disabled subchannel bitmap 1 subfield. A disabled subchannel bitmap 1 subfield may be included in an EHT operation information field. For example, a disabled subchannel bitmap 1 subfield may have a 1-octet length. A disabled subchannel bitmap 1 subfield may include bits corresponding to respective 20 MHz subchannels of pre-configured subchannel 1.

According to an embodiment of the present disclosure, an EHT operation element may selectively include a disabled subchannel bitmap subfield for pre-configured subchannel 2. Referring to FIGS. 38A and 38B, a disabled subchannel bitmap subfield for pre-configured subchannel 2 may be a disabled subchannel bitmap 2 subfield. A disabled subchannel bitmap 2 subfield may be included in a position other than an EHT operation information field. For example, a disabled subchannel bitmap 2 subfield may have a 1-octet length if it exists. A disabled subchannel bitmap 2 subfield may include bits corresponding to respective 20 MHz subchannels of pre-configured subchannel 2.

According to an embodiment, pre-configured subchannel 1 may be a primary 160 MHz channel. Alternatively, pre-configured subchannel 1 may be a 160 MHz channel including primary 20 MHz. In addition, pre-configured subchannel 2 may be a secondary 160 MHz channel.

According to another embodiment, pre-configured subchannel 1 may be a 160 MHz channel with a low frequency in an operating 320 MHz channel. Pre-configured subchannel 2 may be a 160 MHz channel with a high frequency in an operating 320 MHz channel.

In addition, there may be signaling indicating whether an EHT operation element includes a disabled subchannel bitmap 2 subfield. For example, signaling indicating whether an EHT operation element includes a disabled subchannel bitmap 2 subfield may be included in an EHT operation information field.

According to an embodiment, an EHT operation information field may include, as one subfield, signaling indicating whether an EHT operation element includes a disabled subchannel bitmap 2 subfield. For example, there may be 1-bit signaling indicating whether a disabled subchannel bitmap 2 subfield is included. According to another embodiment, as described with reference to FIGS. 32A, 32B1, and 32B2, one subfield included in an EHT operation information field may indicate both a channel width and whether a disabled subchannel bitmap 2 subfield is included. For example, when a channel width is 320 MHz, a disabled subchannel bitmap 2 subfield may be included. In this case, whether a disabled subchannel bitmap 2 subfield is included may be indicated based on a bit having bit index B2 of a channel width subchannel. For example, a pre-configured bit of a channel width subchannel may indicate whether a disabled subchannel bitmap 2 subfield is included. Alternatively, there may be a value indicating that a channel width is 320 MHz and a disabled subchannel bitmap 2 subfield is included, and there may be a value indicating that a channel width is 320 MHz and a disabled subchannel bitmap 2 subfield is not included.

In addition, when a channel width is equal to or smaller than 160 MHz, it is possible to configure an EHT operation element not to include a disabled subchannel bitmap 2 subfield.

A STA having received an EHT operation element not including a disabled subchannel bitmap 2 subfield may determine that pre-configured subchannel 2 is not used in a BSS or a disabled subchannel does not exist in pre-configured subchannel 2.

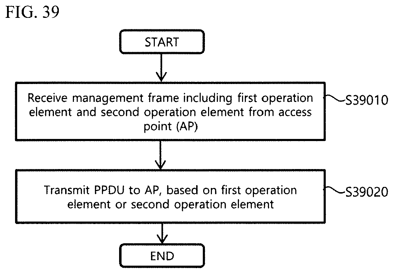

FIG. 39 is a flowchart illustrating an example of an operation of a terminal according to an embodiment of the present disclosure.

Referring to FIG. 39, a STA may receive an operation element including information related to an operating channel from an AP, and transmit a PPDU.

Specifically, a STA may receive a management frame including a first operation element and a second operation element from an access point (AP) (S39010).

The first operation element may indicate a basic service set (BSS) operating channel for a legacy STA, and the second operation element may indicate a BSS operating channel for the STA that is not the legacy STA.

Thereafter, the STA may transmit a PPDU to the AP, based on the first operation element or the second operation element (S39020).

When the BSS operating channel for the STA includes at least one unavailable channel and/or exceeds a maximum bandwidth supported by the legacy STA, the BSS operating channel for the legacy STA indicated by the first operation element may be different from the BSS operating channel for the STA indicated by the second operation element.

When the BSS operating channel for the STA includes at least one unavailable channel and/or exceeds a maximum bandwidth supported by the legacy STA, the BSS operating channel for the legacy STA indicated by the first operation element is continuous channels including a primary channel in the BSS operating channel for the STA indicated by the second operation element.

When the BSS operating channel for the STA includes at least one unavailable channel and/or exceeds a maximum bandwidth supported by the legacy STA, the BSS operating channel for the legacy STA indicated by the first operation element is configured within the maximum bandwidth and except for the at least one unavailable channel in the BSS operating channel for the STA indicated by the second operation element.

The first operation element may be an operation element for a high efficiency (HE) STA, and the second operation element may be an operation element for an extremely high throughput (EHT) STA.

The second operation element may include a disabled subchannel bitmap present subfield indicating whether a disabled subchannel bitmap subfield indicating the at least one unavailable channel of the BSS operating channel for the STA is included.

Each bit of the disabled subchannel bitmap subfield may indicate whether a corresponding unavailable channel is included in the BSS operating channel for the STA.

When the at least one unavailable channel is not included in the BSS operating channel for the STA, a value of the disabled subchannel bitmap present subfield is configured as "0" that is a value indicating that the disabled subchannel bitmap subfield is not included.

An STA may receive, from the AP, a frame including a particular field indicating whether an operational parameter is changed, and a value of the particular field is increased when the operational parameter is changed.

The value of the particular field may be increased when whether the disabled subchannel bitmap subfield is included is changed, or when whether the at least one unavailable channel is included is changed.

The STA may receive a trigger frame indicating transmission of a PPDU to one or more STAs, and receive a multi-STA BlockAck frame as a response for the PPDU.

When at least one STA transmitting the PPDU in response to the trigger frame among the one or more STAs includes the legacy STA, a size of ack information for each of the at least one STA, included in the multi-STA BlockAck frame, may be limited to a particular size or smaller.

However, when at least one STA transmitting the PPDU in response to the trigger frame among the one or more STAs includes the legacy STA, and the multi-STA BlockAck frame includes only ack information for the PPDU of the STA, the size of the ack information is not limited to the particular size or smaller.

The above description of the present disclosure is used for exemplification, and those skilled in the art would understand that the present disclosure can be easily modified to other detailed forms without changing the technical idea or an essential feature thereof. Thus, it is to be appreciated that the embodiments described above are intended to be illustrative in every sense, and not restrictive. For example, each element described as a single type may be implemented to be distributed and similarly, elements described to be distributed may also be implemented in an associated form.

The scope of the present disclosure is represented by the claims to be described below rather than the detailed description, and it is to be interpreted that the meaning and scope of the claims and all the changes or modified forms derived from the equivalents thereof come within the scope of the present disclosure.

**Claims**

1. A station (STA) of a wireless communication system, the STA comprising:

   a transceiver; and
   a processor configured to control the transceiver,
   wherein the processor is configured to:

   receive a management frame including a first operation element and a second operation element from an access point (AP),
   wherein the first operation element indicates a basic service set (BSS) operating channel for a legacy STA, and
   wherein the second operation element indicates a BSS operating channel for the STA that is not the legacy STA, and
   transmit a PPDU to the AP, based on the first operation element or the second operation element,
   wherein the BSS operating channel for the legacy STA indicated by the first operation element is different from the BSS operating channel for the STA indicated by the second operation element when the BSS operating channel for the STA comprises at least one unavailable channel and/or exceeds a maximum bandwidth supported by the legacy STA.

2. The STA of claim 1,
   wherein, when the BSS operating channel for the STA comprises the at least one unavailable channel and/or exceeds the maximum bandwidth supported by the legacy STA, the BSS operating channel for the legacy STA indicated by the first operation element is continuous channels including a primary channel in the BSS operating channel for the STA indicated by the second operation element.

3. The STA of claim 2,
   wherein, when the BSS operating channel for the STA comprises the at least one unavailable channel and/or exceeds the maximum bandwidth supported by the legacy STA, the BSS operating channel for the legacy STA indicated by the first operation element is configured within the maximum bandwidth and except for the at least one unavailable channel in the BSS operating channel for the STA indicated by the second operation element.

4. The STA of claim 1,

   wherein the first operation element is an operation element for a high efficiency (HE) STA, and
   wherein the second operation element is an operation element for an extremely high throughput (EHT) STA.

5. The STA of claim 1,

wherein the second operation element comprises a disabled subchannel bitmap present subfield indicating whether a disabled subchannel bitmap subfield indicating the at least one unavailable channel of the BSS operating channel for the STA is included.

6. The STA of claim 5,
wherein each bit of the disabled subchannel bitmap subfield indicates whether a corresponding unavailable channel is included in the BSS operating channel for the STA.

7. The STA of claim 5,
wherein, when the at least one unavailable channel is not included in the BSS operating channel for the STA, a value of the disabled subchannel bitmap present subfield is configured as "0" that is a value indicating that the disabled subchannel bitmap subfield is not included.

8. The STA of claim 5,

   wherein the processor is configured to receive, from the AP, a frame including a particular field indicating whether an operational parameter is changed, and
   wherein a value of the particular field is increased when the operational parameter is changed.

9. The STA of claim 8,
wherein the value of the particular field is increased when whether the disabled subchannel bitmap subfield is included is changed, or when whether the at least one unavailable channel is included is changed.

10. The STA of claim 1, wherein the processor is configured to:

    receive a trigger frame indicating transmission of a PPDU to one or more STAs, and
    receive a multi-STA BlockAck frame as a response for the PPDU,
    wherein a size of ack information for each of the at least one STA, included in the multi-STA BlockAck frame, is limited to a particular size or smaller when at least one STA transmitting the PPDU in response to the trigger frame among the one or more STAs comprises the legacy STA.

11. The STA of claim 10,
wherein, when the at least one STA transmitting the PPDU in response to the trigger frame among the one or more STAs comprises the legacy STA, and the multi-STA BlockAck frame is transmitted by the AP through a resource unit (RU) individually allocated to the STA, the size of the ack information is not limited to the particular size or smaller.

12. A method of transmitting a frame by a station (STA) in a wireless communication system, the method comprising:

    receiving a management frame including a first operation element and a second operation element from an access point (AP),
    wherein the first operation element indicating a basic service set (BSS) operating channel for a legacy STA, and
    wherein the second operation element indicating a BSS operating channel for the STA that is not the legacy STA; and
    transmitting a PPDU to the AP, based on the first operation element or the second operation element,
    wherein the BSS operating channel for the legacy STA indicated by the first operation element is different from the BSS operating channel for the STA indicated by the second operation element when the BSS operating channel for the STA comprises at least one unavailable channel and/or exceeds a maximum bandwidth supported by the legacy STA.

13. The method of claim 12,
wherein, when the BSS operating channel for the STA comprises the at least one unavailable channel and/or exceeds the maximum bandwidth supported by the legacy STA, the BSS operating channel for the legacy STA indicated by the first operation element is continuous channels including a primary channel in the BSS operating channel for the STA indicated by the second operation element.

14. The method of claim 13,
wherein, when the BSS operating channel for the STA comprises the at least one unavailable channel and/or exceeds the maximum bandwidth supported by the legacy STA, the BSS operating channel for the legacy STA indicated by the first operation element is configured within the maximum bandwidth and except for the at least one unavailable channel in the BSS operating channel for the STA indicated by the second operation element.

**15.** The method of claim 12,

wherein the first operation element is an operation element for a high efficiency (HE) STA, and
wherein the second operation element is an operation element for an extremely high throughput (EHT) STA.

**16.** The method of claim 12,
wherein the second operation element comprises a disabled subchannel bitmap present subfield indicating whether a disabled subchannel bitmap subfield indicating the at least one unavailable channel of the BSS operating channel for the STA is included.

**17.** The method of claim 16,
wherein each bit of the disabled subchannel bitmap subfield indicates whether a corresponding unavailable channel is included in the BSS operating channel for the STA.

**18.** The method of claim 16,
wherein, when the at least one unavailable channel is not included in the BSS operating channel for the STA, a value of the disabled subchannel bitmap present subfield is configured as "0" that is a value indicating that the disabled subchannel bitmap subfield is not included.

**19.** The method of claim 16, the method further comprising:

receiving, from the AP, a frame including a particular field indicating whether an operational parameter is changed,
wherein a value of the particular field is increased when the operational parameter is changed.

**20.** The method of claim 19,
wherein the value of the particular field is increased when whether the disabled subchannel bitmap subfield is included is changed, or when whether the at least one unavailable channel is included is changed.

**21.** The method of claim 12, the method further comprising:

receiving a trigger frame indicating transmission of a PPDU to one or more STAs; and
receiving a multi-STA BlockAck frame as a response for the PPDU, wherein, when at least one STA transmitting the PPDU in response to the trigger frame among the one or more STAs comprises the legacy STA, a size of ack information for each of the at least one STA, included in the multi-STA BlockAck frame, is limited to a particular size or smaller.

**22.** The method of claim 21,
wherein, when the at least one STA transmitting the PPDU in response to the trigger frame among the one or more STAs comprises the legacy STA, and the multi-STA BlockAck frame is transmitted by the AP through a resource unit (RU) individually allocated to the STA, the size of the ack information is not limited to the particular size or smaller. [540]

FIG. 1

FIG. 2

FIG. 3

FIG. 4

FIG. 5

| | STA (100) | AP (200) | AS (300) |

**Passive Scanning**
Beacon (S101)

**Active Scanning**
Probe request (S103)
Probe response (S105)

**Authentication**
Authentication request (S107a)
Authentication response (S107b)

**Association**
Association request (S109a)
Association response (S109b)

802.1X Authentication (optional) (S111)

DHCP/IP Establishment (optional) (S113)

FIG. 6

FIG. 7

FIG. 8

(a) EHT SU PPDU

(b) EHT TB PPDU

(c) EHT MU PPDU

(d) EHT ER SU PPDU

FIG. 9

AP MLD
(multi-link device)

| AP1 | AP2 | AP3 |

Link1    Link2    Link3

Non-AP MLD
(multi-link device)

| Non-AP STA1 | Non-AP STA2 | Non-AP STA3 |

FIG. 10

FIG. 11

FIG. 12

FIG. 13

FIG. 14

FIG. 15

| | |
|---|---|
| AP | Trigger frame |

| | |
|---|---|
| HE STA | HE TB PPDU |

| | |
|---|---|
| EHT STA | EHT TB PPDU |

| | |
|---|---|
| EHT STA | HE TB PPDU |

**(a) Trigger frame format**

| Frame Control | Duration | RA | TA | Common Info | User Info List | Padding | FCS |
|---|---|---|---|---|---|---|---|

Octets:    2     2     6     6     8 or more     variable     variable     4

**(b) Common Info field**

| B0 B3 | B4 B15 | B16 | B17 | B18 B19 | B20 B21 | B22 | B23 B25 |
|---|---|---|---|---|---|---|---|
| Trigger Type | UL Length | More TF | CS Required | UL BW | GI And HE-LTF Type | MU-MIMO HE-LTF Mode | Number Of HE-LTF Symbols And Midamble Periodicity |

Bits:    4     12     1     1     2     2     1     3

| B26 | B27 | B28 B33 | B34 B35 | B36 | B37 B52 | B53 | B54 B62 |
|---|---|---|---|---|---|---|---|
| UL STBC | LDPC Extra Symbol Segment | AP Tx Power | Pre-FEC Padding Factor | PE Disambiguity | UL Spatial Reuse | Doppler | UL HE-SIG-A2 Reserved |

Bits:    1     1     6     2     1     16     1     9

| B63 | |
|---|---|
| Reserved | Trigger Dependent Common Info |

Bits:    1     variable

**(c) User Info field**

| B0 B11 | B12 B19 | B20 | B21 B24 | B25 | B26 B31 | B32 B38 | B39 | |
|---|---|---|---|---|---|---|---|---|
| AID12 | RU Allocation | UL FEC Coding Type | UL HE-MCS | UL DCM | SS Allocation/ RA-RU Information | UL Target RSSI | Reserved | Trigger Dependent User Info |

Bits:    12     8     1     4     1     6     7     1     variable

FIG. 16

EP 4 290 922 A1

FIG. 17

| AID12 subfield | Description |
|---|---|
| 0 | User Info field allocates one or more contiguous RA-RUs for associated STAs |
| 1-2007 | User Info field is addressed to an associated STA whose AID is equal to the value in the AID12 subfield |
| 2008-2044 | Reserved |
| 2045 | User Info field allocates one or more contiguous RA-RUs for unassociated STAs |
| 2046 | Unallocated RU |
| 2047 | Response to the Trigger frame is transmitted in EHT TB PPDU |
| 2048 | Response to the Trigger frame is transmitted in NEXT TB PPDU |
| 2049-4094 | Reserved |
| 4095 | Start of Padding field |

FIG. 18

| HE TRS Control in HE PPDU | HE TB PPDU | NEXT TRS Control in EHT PPDU | EHT TB PPDU | NEXT TRS Control in NEXT PPDU | NEXT TB PPDU |
|---|---|---|---|---|---|

## FIG. 19

**(a) BlockAck frame format**

| Frame Control | Duration | RA | TA | BA Control | BA Information | FCS |
|---|---|---|---|---|---|---|

Octets: 2 / 2 / 6 / 6 / 2 / variable / 4

**(b) BA Control field format**

B0   B1   B4   B5   B11   B12   B15

| BA Ack Policy | BA Type | Reserved | TID_INFO |
|---|---|---|---|

Bits: 1 / 4 / 7 / 4

**(c) BA Information field format (Compressed BlockAck)**

| Block Ack Starting Sequence Control | Block Ack Bitmap |
|---|---|

Octets: 2 / 8, 32, 64 or 128

**BA Information field format (Multi-STA BlockAck)**

Repeated for each \[AID, TID\] tuple

| Per AID TID Info |
|---|

Octets: variable

**(d) Per AID TID Info subfield format if the AID11 subfield is not 2045**

| AID TID Info | Block Ack Starting Sequence Control | Block Ack Bitmap |
|---|---|---|

Octets: 2 / 0 or 2 / 0, 4, 8, 16, 32, 64 or 128

**Per AID TID Info subfield format if the AID11 subfield is 2045**

| AID TID Info | Reserved | RA |
|---|---|---|

Octets: 2 / 4 / 6

**(e) AID TID Info subfield format**

B0   B10   B11   B12   B15

| AID11 | Ack Type | TID |
|---|---|---|

Bits: 11 / 1 / 4

FIG. 20

| Fragment Number subfield | | | Fragmentation Level 3 (ON /OFF) | Block Ack Bit map subfield length (octets) | Maximum number of MSDUs/A-MSDUs that can be acknowledged |
|---|---|---|---|---|---|
| B3 | B2-B1 | B0 | | | |
| 0 | 0 | 0 | OFF | 8 | 64 |
| 0 | 1 | 0 | | 16 | 128 |
| 0 | 2 | 0 | | 32 | 256 |
| 0 | 3 | 0 | | 4 | 32 |
| 0 | 0 | 1 | ON | 8 | 16 |
| 0 | 1 | 1 | | 16 | 32 |
| 0 | 2 | 1 | | 32 | 64 |
| 0 | 3 | 1 | | 4 | 8 |
| 1 | 0 | 0 | OFF | 64 | 512 |
| 1 | 1 | 0 | | 128 | 1024 |
| 1 | 2 and 3 | 0 | | Reserved | Reserved |
| 1 | Any | 1 | | Reserved | Reserved |

Octets:

| Frame Control | Duration | RA | TA | BA Control (Multi-STA BlockAck) | Per AID TID Info 1 (STA 1, Block Ack Bitmap 64-bit) | Per AID TID Info 2 (STA 2, Block Ack Bitmap 512-bit) | Per AID TID Info 3 (STA 3, Block Ack Bitmap 64-bit) | FCS |
|---|---|---|---|---|---|---|---|---|
| 2 | 2 | 6 | 6 | 2 | | | | 4 |

FIG. 21

FIG. 22

| Triggering frame | HE TB PPDU (from non-EHT HE STA 1) | Multi-STA BlockAck frame only including Per AID TID Info subfields with restricted bitmap length ( 512-bit) |
|---|---|---|
| | HE TB PPDU (from non-EHT HE STA 2) | |
| | HE TB PPDU (from EHT STA 1) | |
| | HE TB PPDU (from EHT STA 2) | |

FIG. 23

| Triggering frame | HE TB PPDU (from non-EHT HE STA 1) | | | | |
| | HE TB PPDU (from non-EHT HE STA 2) | User field1 STAID: broadcast RU: RU1 | User field2 STAID: EHT STA1 RU: RU2 | | **RU1 to non-EHT HE STAs and EHT STA 2** Multi-STA BlockAck frame only including Per AID TID Info subfields **with restricted bitmap length (< 512-bit)** |
| | HE TB PPDU (from EHT STA 1) | | | | **RU2 to EHT STA 1** Multi-STA BlockAck frame including Per AID TID Info subfields **without bitmap length restriction** |
| | HE TB PPDU (from EHT STA 2) | | | | |

FIG. 24

| Triggering frame | | | | Description |
|---|---|---|---|---|
| HE TB PPDU (from non-EHT HE STA 1) | User field1: STAID: non-EHT HE STA1 RU: RU1 | | | RU1 to non-EHT HE STA 1 Multi-STA BlockAck frame only including Per AID TID Info subfields **with restricted bitmap length (<512-bit)** |
| HE TB PPDU (from non-EHT HE STA 2) | | User field2: STAID: non-EHT HE STA2 RU: RU2 | | RU2 to non-EHT HE STA 2 Multi-STA BlockAck frame only including Per AID TID Info subfields **with restricted bitmap length (<512-bit)** |
| HE TB PPDU (from EHT STA 1) | | | User field3: STA ID: broadcast RU: RU3 | RU3 to EHT STAs Multi-STA BlockAck frame including Per AID TID Info subfields **without bitmap length restriction** |
| HE TB PPDU (from EHT STA 2) | | | | |

FIG. 25

| Ack-enabled (single- or multi-)TID A-MPDU including Management frame | Multi-STA BlockAck frame | Per AID TID with TID field set to 15 | |
|---|---|---|---|

FIG. 26

Link 1 —————————————————————————————————————

TID-to-link
mapping negotiation

Ack-enabled (single- or
multi-)TID A-MPDU
including Management frame

TID 0 to 7
mapped to Link 1

Link 2 —————————————————————————————————————

FIG. 27

Link 1: TID-to-link mapping negotiation | No Management frame transmission

TID 0 to 7 mapped to Link 1

Link 2: Ack-enabled (single- or multi-)TID A-MPDU including Management frame

TID 15 mapped to Link 2

FIG. 28

EP 4 290 922 A1

(a) Management frame such as Beacon frame, Association Response frame and Probe Response frame

| MAC header | ... | HT Capabilities | HT Operation | ... | VHT Capabilities | VHT Operation | ... | HE Capabilities | HE Operation | ... | EHT Capabilities | EHT Operation | ... | FCS |
|---|---|---|---|---|---|---|---|---|---|---|---|---|---|---|

(b) HE Operation element format

| Element ID | Length | Element ID Extension | HE Operation Parameters | BSS Color Information | Basic HE-MCS And NSS Set | VHT Operation Information | Max Co-Hosted BSSID Indicator | 6 GHz Operation Information |
|---|---|---|---|---|---|---|---|---|
| 1 | 1 | 1 | 3 | 1 | 2 | 0 or 3 | 0 or 1 | 0 or 5 |

Octets:

(c) 6 GHz Operation Information field format

| Primary Channel | Control | Channel Center Frequency Segment 0 | Channel Center Frequency Segment 1 | Minimum Rate |
|---|---|---|---|---|
| 1 | 1 | 1 | 1 | 1 |

Octets:

(d) Control field format

| B0 B1 | B2 | B3 B5 | B6 B7 |
|---|---|---|---|
| Channel Width | Duplicate Beacon | Regulatory Info | Reserved |
| 2 | 1 | 3 | 2 |

Bits:

FIG. 29

EHT BSS operating channel width

| 80 MHz channel 1 | 80 MHz channel 2 | 80 MHz channel 3 | 80 MHz channel 4 |

frequency

Disallowed channels

Non-EHT BSS operating channel width

FIG. 30

EHT BSS operating channel width

| 80 MHz channel 1 | 80 MHz channel 2 | 80 MHz channel 3 | 80 MHz channel 4 |

frequency

Disallowed channels

Non-EHT BSS operating
channel width
such that the non-EHT BSS
operating channel includes
the primary channel

FIG. 31

(a) Channelization

| UNII5 | | | | | | UNII6 | UNII6/7 | UNII7 | | | UNII7/8 | UNII8 | |
|---|---|---|---|---|---|---|---|---|---|---|---|---|---|
| 80 | 80 | 80 | 80 | 80 | 80 | 80 | 80 | 80 | 80 | 80 | 80 | 80 | 80 |
| 160 | | 160 | | 160 | | 160 | | 160 | | 160 | | 160 | |
| 320 | | | | 320 | | | | 320 | | | | | |
| | | 320 | | | | 320 | | | | 320 | | | |

(b) BSS operating channel configuration

EHT BSS operating channel width

80 MHz channel 1 | 80 MHz channel 2 | 80 MHz channel 3 | 80 MHz channel 4

Disallowed channels                    Disallowed channels

160 MHz channel 1 | 160 MHz channel 2

Non-EHT BSS operating channel width
such that the non-EHT BSS operating channel includes
the primary channel, following the channelization

78

FIG. 32

(a) EHT Operation element format

| Element ID | Length | Element ID Extension | EHT Operation Information | Disabled Subchannel Bitmap |
|---|---|---|---|---|

Octets: 1      1      1      3      0 or 2

(b1) EHT Operation Information field format

B0    B2     B3    B10    B11    B18      B19      B20    B23

| Channel Width | Channel Center Frequency Segment 0 | Channel Center Frequency Segment 1 | Disabled Subchannel Bitmap Present | Reserved |
|---|---|---|---|---|

Bits: 3      8      8      1      4

(b2) EHT Operation Information field format

B0    B2     B3    B10    B11    B18    B19    B23

| Channel Width (Disabled Subchannel Bitmap Present) | Channel Center Frequency Segment 0 | Channel Center Frequency Segment 1 | Reserved |
|---|---|---|---|

Bits: 3      8      8      5

FIG. 33

| MU-RTS | CTS | Data |

*Disabled subchannel*

| MU-RTS | CTS | Data |
| MU-RTS | CTS | Data |

FIG. 34

Disabled Subchannel Bitmap
Present subfield set to 1

Disabled Subchannel Bitmap
Present subfield set to 0

Disabled Subchannel Bitmap
Present subfield set to 0

| Beacon | | (Re)Association Response | | Beacon | | |
|---|---|---|---|---|---|---|

Punctured transmission

Punctured transmission

Punctured transmission

FIG. 35

Disabled Subchannel Bitmap
Present subfield set to 0
→ **Not classified as critical
update**

Disabled Subchannel Bitmap
Present subfield set to 1

Disabled Subchannel Bitmap Present
subfield set to 1 and Disabled
Subchannel Bitmap subfield with the
modified value
→ **Classified as critical update**

| Beacon frame 1 | | Beacon frame 2 | | Beacon frame 3 |

FIG. 36

Disabled Subchannel Bitmap
Present subfield set to 1 and
Disabled Subchannel Bitmap
subfield indicating at least one
punctured channels

Disabled Subchannel Bitmap
Present subfield set to 0
→ **No punctured channel**
→ **Classified as critical update**

Disabled Subchannel Bitmap Present
subfield set to 1 and Disabled
Subchannel Bitmap subfield indicating
no punctured channel
→ **Not classified as critical update**

| Beacon frame 1 | | Beacon frame 2 | | Beacon frame 3 |

FIG. 37

| Element ID | Length | Element ID Extension | EHT Operation Information | **Disabled Subchannel Bitmap** |
|---|---|---|---|---|

Octets:  1  1  1  **0, 1 or 2**

- If Disabled Subchannel Bitmap Present subfield is equal to 0, Disabled Subchannel Bitmap subfield is not present.
- Otherwise, if Channel Width subfield is equal to 4 (indicates 320 MHz bandwidth), Disabled Subchannel Bitmap subfield is present, and its length is 2 octets.
- Otherwise, Disabled Subchannel Bitmap subfield is present, and its length is 1 octet.

FIG. 38

**(a) EHT Operation element format**

| Element ID | Length | Element ID Extension | EHT Operation Information | Disabled Subchannel Bitmap 2 |
|---|---|---|---|---|
| 1 | 1 | 1 | 4 | 0 or 1 |

Octets:

**(b) EHT Operation Information field format**

| Channel Width (Disabled Subchannel Bitmap 2 Present) | Channel Center Frequency Segment 0 | Channel Center Frequency Segment 1 | Disabled Subchannel Bitmap 1 |
|---|---|---|---|
| 1 | 1 | 1 | 1 |

Octets:

FIG. 39

START

Receive management frame including first operation element and second operation element from access point (AP) ~S39010

Transmit PPDU to AP, based on first operation element or second operation element ~S39020

END

## INTERNATIONAL SEARCH REPORT

| International application No. |
|---|
| **PCT/KR2022/001720** |

**A. CLASSIFICATION OF SUBJECT MATTER**

**H04W 28/04**(2009.01)i; **H04W 28/06**(2009.01)i; **H04W 76/15**(2018.01)i; **H04L 69/14**(2022.01)i; **H04W 74/08**(2009.01)i; **H04W 84/12**(2009.01)i; **H04W 72/04**(2009.01)i

According to International Patent Classification (IPC) or to both national classification and IPC

**B. FIELDS SEARCHED**

Minimum documentation searched (classification system followed by classification symbols)

H04W 28/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: STA, AP, 운영요소(operation element), 레거시(legacy), BSS 운영채널(operating channel), 대역폭(band width), PPDU

**C. DOCUMENTS CONSIDERED TO BE RELEVANT**

| Category* | Citation of document, with indication, where appropriate, of the relevant passages | Relevant to claim No. |
|---|---|---|
| Y<br>A | HUANG, Guogang et al. Operating Bandwidth Indication for EHT BSS. IEEE 802.11-20/0680r3. 16 November 2020.<br>See slides 1-15. | 1-4,12-15<br>5-11,16-22 |
| Y | CHU, Liwen. 11be Spec text for EHT BSS Operation. IEEE 802.11-20/1353r5. 16 September 2020.<br>See pages 1-3. | 1-4,12-15 |
| A | CHU, Liwen et al. EHT BSS Follow Up: EHT (BSS) Operating Parameter Update. IEEE 802.11-20/1052r1. 28 October 2020.<br>See slides 1-8. | 1-22 |
| A | GAN, Ming et al. MLO: BSS parameter update. IEEE 802.11-20/1332r06. 28 September 2020.<br>See pages 1-3. | 1-22 |
| A | KIM, Shawn Sanghyun et al. Reduced BlockAck. IEEE 802.11-20/1780r0. 04 November 2020.<br>See slides 1-17. | 1-22 |

☐ Further documents are listed in the continuation of Box C.  ☐ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 May 2022** | **11 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)